(19) Europäisches Patentamt / European Patent Office / Office européen des brevets

(11) **EP 4 381 950 A1**

(12) **EUROPEAN PATENT APPLICATION**
published in accordance with Art. 153(4) EPC

(43) Date of publication:
**12.06.2024 Bulletin 2024/24**

(21) Application number: **23831533.7**

(22) Date of filing: **28.06.2023**

(51) International Patent Classification (IPC):
$A21D\ 2/36^{(2006.01)}$ $\qquad$ $A21D\ 13/00^{(2017.01)}$
$A23G\ 3/00^{(2006.01)}$ $\qquad$ $A23L\ 7/161^{(2016.01)}$

(52) Cooperative Patent Classification (CPC):
**A21D 2/36; A21D 13/00; A23G 3/00; A23L 7/161**

(86) International application number:
**PCT/JP2023/024026**

(87) International publication number:
**WO 2024/005093 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.06.2022 JP 2022103984**

(71) Applicant: **Mizkan Holdings Co., Ltd.
Handa-shi, Aichi 475-8585 (JP)**

(72) Inventors:
• **MIZUNO, Hirofumi
 Handa-shi, Aichi 475-8585 (JP)**
• **YAMAMOTO, Eisuke
 Handa-shi, Aichi 475-8585 (JP)**
• **MIZUTA, Erika
 Handa-shi, Aichi 475-8585 (JP)**
• **TANAKA, Shungo
 Handa-shi, Aichi 475-8585 (JP)**

(74) Representative: **Hasegawa, Kan
 Patentanwaltskanzlei Hasegawa
 Untere Hauptstraße 56
 85354 Freising (DE)**

(54) **STARCH-CONTAINING PUFFING COMPOSITION, PRODUCTION METHOD THEREFOR, FERMENTATION COMPOSITION, AND PRODUCTION METHOD THEREFOR**

(57) The present invention provides a composition containing pulse- and/or cereal-derived starch, wherein a powder odor derived from a pulse and/or cereal powder is suppressed, and a good aroma of the powder is maintained. Provided is a puffing composition that comprises a pulse- and/or cereal-derived starch and satisfies the following conditions (1) to (5). (1) Starch content is not less than 3 mass% in terms of moistened mass. (2) Moisture content based on dry weight is less than 150 mass%. (3) Dietary fiber content is not less than 3.0 mass% in terms of moistened mass. (4) When at least one frozen section A of the composition obtained under specific conditions is observed, the ratio (weighted average area / weighted average perimeter length), which is the ratio of a weighted average area with respect to a weighted average perimeter length in void regions of an area of not less than 10,000 $\mu m^2$ with respect to a composition cross-section image area, is not less than 100. (5) The ratio (value $\alpha$/value $\beta$) of value $\alpha$ to value $\beta$ is not less than 0.3. The value $\alpha$ is the content (ppb) of methionol in the composition in terms of moistened mass. Given a molecular weight distribution curve ($MWDC_{3.5-6.5}$) in the range where the logarithm of a molecular weight is not less than 3.5 but less than 6.5, said logarithm of molecular weight being obtained by analyzing, under specific conditions, a component which is obtained by performing a pulverization process on the composition under specific conditions and which is ethanol-insoluble and dimethylsulfoxide-soluble, the value $\beta$ is the ratio ($AUC_{5.0}$) of the area under the curve in a section where the logarithm of molecular weight is not less than 5.0 but less than 6.5 to the area under the entire curve.

EP 4 381 950 A1

**Description**

**TECHNICAL** FIELD

The present invention relates to a swollen composition containing starch derived from pulse and/or cereal and a method for producing the same, and a fermented composition and a method for producing the same.

BACKGROUND ART

Patent Literature 1 describes a technology using a yeast extract obtained by acting phosphodiesterase on yeast culture medium. Patent Literature 2 describes that in order to suppress powdery odor of processed foods made from powders such as pulse or cereal, a yeast extract with a peptide content of 5 mass % or more, an RNA content of 5 mass % or more, and a free amino acid content of 4 mass % or less is added and mixed. Patent Literature 3 describes that a fermented composition was obtained by an extrusion process. Patent Literature 4 describes a technology relating to a fermented composition using calcium carbonate. Patent Literature 5 describes a technology relating to bread using an enzyme having xylan degrading activity. Patent Literature 6 describes a technology relating to bread using glycase.

**LIST OF CITATIONS**

**Patent Literature**

[Patent Literature 1] JP-H06-030687 A
[Patent Literature 2] WO2014/208536 A
[Patent Literature 3] US2007/0248726 A
[Patent Literature 4] CN1937926 A
[Patent Literature 5] CN1681392 A
[Patent Literature 6] CN102796717 A

**SUMMARY OF INVENTION**

**PROBLEM TO BE SOLVED BY THE INVENTION**

However, the technology described in Patent Literature 1 was not intended to suppress the powdery odor derived from powders of pulse or cereal. The technology described in Patent Literature 2 was not intended to retain good aroma of powders of pulse or cereal.
With regard to fermented compositions, to which one aspect of the present invention relates, the technologies described in Patent Literature 3 and Patent Literature 4 are not capable of solving the above issues. Specifically, Patent Literature 3 requires a special extrusion device, and the technology described in Patent Literature 4 requires a calcium carbonate solution. Thus, these techniques lack versatility.
With regard to fermented compositions with enzyme treatment, to which another aspect of the present invention relates, the technologies described in Patent Literature 5 and Patent Literature 6 are not capable of solving the above issues. Specifically, Patent Literature 5 relates to a technology based on network formation by glutelin in flour, and therefore cannot be applied to swollen food products that do not contain gluten as a main ingredient. The technology described in Patent Literature 6 requires a heat-resistant glycase. Thus, these techniques also lack versatility.
A problem to be addressed by the present invention is to suppress powdery odor originating from pulse or cereal powder and to retain the good aroma of such powder in compositions using such powders.

**MEANS TO SOLVE THE PROBLEM**

The present inventors have found that a swollen composition containing starch derived from pulse and/or cereal can be modified by adjusting each of the starch content, dry mass basis moisture content, and dietary fiber content to within a predetermined range, adjusting the number of pores with specific shapes to a predetermined value or more, and adjusting the ratio of the methionol content to a starch characteristic to within a predetermined range, to thereby suppress powdery odor originating from pulse or cereal powder while maintaining the good aroma of such powder. Thus, the present inventors have successfully solved the above problems and arrived at the present invention.
Specifically, aspects of the present invention include the following.

[Aspect 1] A swollen composition comprising a starch derived from pulse and/or cereal and satisfying requirements (1) to (5) below.

(1) The composition has a starch content of 3 mass % or more, or 5 mass % or more, or 10 mass % or more, or 15 mass % or more, or 20 mass % or more, or 25 mass % or more, or 28 mass % or more, or 30 mass % or more, or 32 mass % or more, or 35 mass % or more, while the upper limit is not particularly limited, but may be 80 mass % or less, or 75 mass % or less, or 70 mass % or less, in terms of wet mass basis.

(2) The composition has a dry mass basis moisture content of less than 150 mass %, or less than 140 mass %, or less than 130 mass %, or less than 120 mass %, or less than 110 mass %, or less than 100 mass %, or less than 90 mass %, or less than 80 mass %, or less than 70 mass %, or less than 60 mass %, or less than 50 mass %, or less than 40 mass %, or less than 30 mass %, or less than 26 mass %, or less than 21 mass %, or less than 16 mass %, or less than 10 mass %, while the lower limit is not particularly limited, but may be 0 mass % or more, or 0.5 mass % or more, or 1 mass % or more, or 2 mass % or more, or 5 mass % or more.

(3) The composition has a dietary fiber content of 3.0 mass % or more, or 3.5 mass % or more, or 4.0 mass % or more, or 4.5 mass % or more, or 5.0 mass % or more, or 5.5 mass % or more, or 6.0 mass % or more, or 7.0 mass % or more, or 8.0 mass % or more, or 9.0 mass % or more, or 10.0 mass % or more, or 11.0 mass % or more, or 13.0 mass % or more, while the upper limit is not particularly limited, but may be 40 mass % or less, or 35 mass % or less, or 30 mass % or less, in terms of wet mass basis.

(4) When at least one frozen section of the composition A obtained under [Condition A] below is observed, requirement (a) below is satisfied.

(a) When pores with an area of 10000 $\mu m^2$ or more in a cross-section image of the composition is observed, the ratio of a weighted average area of the pores to a weighted average perimeter of the pores {(weighted average area)/(weighted average perimeter)} is 100 or more, or 130 or more, or 180 or more, or 250 or more, or 300 or more, or 320 or more, or 490 or more, or 570 or more, or 600 or more, or 700 or more, or 800 or more, or 900 or more, or 1000 or more, or 1100 or more, or 1300 or more, or 1500 or more, or 1800 or more, or 2000 or more, while the upper limit is not particularly limited, but may be 10000 or less, or 9000 or less, or 8000 or less, or 7000 or less, or 6000 or less.

[Condition A] The composition is frozen at -25°C and cut along a cut plane A to prepare a frozen section of the composition A.

(5) The ratio of Value $\alpha$ to Value $\beta$ {(Value $\alpha$)/(Value $\beta$)} as defined below is 0.3 or more, or 0.5 or more, or 1.0 or more, or 1.6 or more, or 1.9 or more, or 2.0 or more, or 2.2 or more, or 2.5 or more, or 2.8 or more, or 3.0 or more, or 3.1 or more, or 3.3 or more, or 4.0 or more, or 6.0 or more, or 10 or more, while the upper limit is not particularly limited, but may be 5000 or less, or 4000 or less, or 3000 or less, or 2000 or less, or 1000 or less.

Value $\alpha$: The wet mass basis content of methionol in the composition (ppb).
Value $\beta$: When the composition is subjected to [Procedure b] below and the resulting product is subjected to measurement under [Condition B] below to obtain a molecular weight distribution curve in an interval with molecular weight logarithms of 3.5 or more but less than 6.5 (hereinafter referred to as "$MWDC_{3.5-6.5}$"), the ratio of an area under the curve in an interval with molecular weight logarithms of 5.0 or more but less than 6.5 to the area under the entire curve (hereinafter referred to as "$AUC_{5.0}$").
[Procedure b] The composition is crushed, and an ethanol-insoluble and dimethyl sulfoxide-soluble component is obtained.
[Condition B] The treated product from the [Procedure b] above is dissolved into 1M aqueous solution of sodium hydroxide at a concentration of 0.30 mass % and allowed to stand at 37 °C for 30 minutes, then combined with an equal volume of water and an equal volume of eluent and subjected to filtration with a 5-$\mu m$ filter, and 5mL of the filtrate is then subjected to gel filtration chromatography to thereby obtain a molecular weight distribution.

[Aspect 2] The swollen composition according to Aspect 1, wherein when the frozen section of the composition A is observed, the ratio of the total area of pores with an area more than 10000 $\mu m^2$ to the area of a cross-section image of the composition is more than 1.0 %, or 1.4 % or more, or 1.7 % or more, or 1.8 % or more, or 2.0 % or more, or 2.5 % or more, or 3.0 % or more, or 3.5 % or more, or 4.0 % or more, or 4.5 % or more, or 5.0 % or more, or 6.0 % or more, or 8.0 % or more, or 10.0 % or more, or 11.0 % or more, while the upper limit is not particularly limited, but may preferably be typically 80 % or less, or 70 % or less, or 60 % or less.

[Aspect 3] The swollen composition according to Aspect 1 or 2, wherein when the frozen section of the composition A is observed, the ratio of the total area of pores with an aspect ratio of 3.5 or more and a degree of circularity factor of 0.3 or more to the area of a cross-section image of the composition is more than 0.0020 %, or 0.0025 % or more, or 0.0030 % or more, or 0.0035 % or more, or 0.0040 % or more, or 0.0045 % or more, or 0.0050 % or more, or 0.0055 % or more, or 0.0060 % or more, or 0.0065 % or more, or 0.0070 % or more, or 0.0075 % or more, while the upper limit is not particularly limited, but may preferably be typically 80 % or less, or 70 % or less, or 60 % or less.

[Aspect 4] The swollen composition according to any one of Aspects 1 to 3, wherein the frozen section of the composition A includes frozen section of the composition A1, which is obtained along cut plane A1, wherein cup plane A1 is orthogonal to a longitudinal axis of the composition.

[Aspect 5] The swollen composition according to any one of Aspects 1 to 4, wherein the frozen section of the composition A includes frozen section of the composition A1, which is obtained along cut plane A1, and frozen section of the composition A2, which is obtained along cut plane A2, wherein cup plane A1 is orthogonal to a longitudinal axis of the composition and cup plane A2 is parallel to the longitudinal axis of the composition.

[Aspect 6] The swollen composition according to any one of Aspects 1 to 5, wherein in the molecular weight distribution curve ($MWDC_{3.5-6.5}$), the ratio of an area under the curve in an interval with molecular weight logarithms of 5.0 or more but less than 6.5 to the area under the entire curve ($AUC_{5.0}$) is 1 % or more but 70 % or less, where the upper limit is 70 % or less, or 67 % or less, or 65 % or less, or 63 % or less, or 61 % or less, or 59 % or less, or 57 % or less, or 55 % or less, or 53 % or less, or 51 % or less, or 50 % or less, or 48 % or less, while the lower limit is not particularly limited, but may preferably be typically 1 % or more, or 5 % or more, or 10 % or more.

[Aspect 7] The swollen composition according to any one of Aspects 1 to 6, wherein methionol content is 0.01 ppb or more but 50000 ppb or less in terms of wet mass basis, where the lower limit may preferably be typically 0.01 ppb or more, or 0.1 ppb or more, or 1 ppb or more, or 5 ppb or more, or 10 ppb or more, or 15 ppb or more, or 20 ppb or more, or 25 ppb or more, or 30 ppb or more, or 35 ppb or more, or 40 ppb or more, or 50 ppb or more, or 60 ppb or more, or 70 ppb or more, or 80 ppb or more, or 90 ppb or more, or 100 ppb or more, or 110 ppb or more, or 130 ppb or more, or 150 ppb or more, or 170 ppb or more, or 190 ppb or more, or 250 ppb or more, or 300 ppb or more, while the upper limit is not particularly limited, but may preferably be typically 50000 ppb or less, or 45000 ppb or less, or 40000 ppb or less, or 35000 ppb or less, or 30000 ppb or less, or 25000 ppb or less, or 20000 ppb or less, or 15000 ppb or less, or 10000 ppb or less.

[Aspect 8] The swollen composition according to any one of Aspects 1 to 7, wherein when 6% suspension of the swollen composition is observed, the number of starch grain structures is $300/mm^2$ or less, or $250/mm^2$ or less, or $200/mm^2$ or less, or $150/mm^2$ or less, or $100/mm^2$ or less, or $50/mm^2$ or less, or $40/mm^2$ or less, or $30/mm^2$ or less, or $20/mm^2$ or less, or $10/mm^2$ or less, or $5/mm^2$ or less, while the lower limit is not particularly limited, but may preferably be typically $0/mm^2$, or $0/mm^2$ or more.

[Aspect 9] The swollen composition according to any one of Aspects 1 to 8, wherein the pulse is one or more species of pulse selected from Pisum, Phaseolus, Cajanus, Vigna, Vicia, Cicer, Glycine and Lens species.

[Aspect 10] The swollen composition according to any one of Aspects 1 to 9, wherein the pulse is matured pulse.

[Aspect 11] The swollen composition according to any one of Aspects 1 to 10, wherein the cereal is one or more species of cereal selected from awa (foxtail millet), hie (Japanese millet), kibi (common millet), sorghum, rye, oat, hatomugi (job's tear), corn, buckwheat, amaranthus, and quinoa.

[Aspect 12] The swollen composition according to any one of Aspects 1 to 11, wherein the ratio of the starch content contained in pulse and/or cereal to the total starch content of the swollen composition is 10 mass % or more, or 10 mass % or more, or 20 mass % or more, or 30 mass % or more, or 40 mass % or more, or 50 mass % or more, or 60 mass % or more, or 70 mass % or more, or 80 mass % or more, or 90 mass % or more, while the upper limit is not particularly limited, but may preferably be typically 100 mass %, or 100 mass % or less.

[Aspect 13] The swollen composition according to any one of Aspects 1 to 12, which is substantially free of gluten.

[Aspect 14] The swollen composition according to any one of Aspects 1 to 13, comprising dietary fiber-localized part of pulse and/or cereal.

[Aspect 15] The swollen composition according to Aspect 14, comprising both edible part of pulse and/or cereal and dietary fiber-localized part of pulse and/or cereal.

[Aspect 16] The swollen composition according to any one of Aspects 1 to 15, wherein the total content of edible part of pulse and/or cereal and dietary fiber-localized part of pulse and/or cereal is 10 mass % or more, or 15 mass % or more, or 20 mass % or more, or 25 mass % or more, or 30 mass % or more, or 35 mass % or more, or 40 mass % or more, or 45 mass % or more, or 50 mass % or more, while the upper limit is not particularly limited, but may preferably be typically 95 mass % or less, or 93 mass % or less, preferably 90 mass % or less, in terms of wet mass basis.

[Aspect 17] The swollen composition according to any one of Aspects 14 to 16, wherein the dietary fiber-localized part of pulse and/or cereal contains seed skin of pulse and/or cereal.

[Aspect 18] The swollen composition according to any one of Aspects 14 to 17, wherein the dietary fiber-localized part of pulse and/or cereal contains dietary fiber-localized part of psyllium.

[Aspect 19] The swollen composition according to any one of Aspects 1 to 18, comprising seed skin of psyllium as dietary fiber-localized part of edible plant.

[Aspect 20] The swollen composition according to any one of Aspects 14 to 19, wherein the dietary fiber-localized part of pulse and/or cereal is dietary fiber-localized part having undergone enzyme treatment.

[Aspect 21] The swollen composition according to Aspect 20, wherein the enzyme treatment is cellulase, xylanase, or pectinase treatment.

[Aspect 22] A method for producing a swollen composition, comprising the steps of:

(i) preparing a dough composition containing starch derived from pulse and/or cereal and having

(1) a starch content of 3 mass % or more, or 5 mass % or more, or 10 mass % or more, or 12 mass % or more, or 15 mass % or more, or 18 mass % or more, or 20 mass % or more, while the upper limit is not particularly limited, but may be 80 mass % or less, or 75 mass % or less, or 70 mass % or less, in terms of wet mass basis,

(2) a dry mass basis moisture content of more than 50 mass %, or more than 55 mass %, more than 60 mass %, or more than 63 mass %, or more than 65 mass %, or more than 68 mass %, or more than 70 mass %, or more than 73 mass %, or more than 75 mass %, or more than 77 mass %, or more than 80 mass %, or more than 82 mass %, or more than 85 mass %, while the upper limit is not particularly limited, but may preferably be typically 250 mass % or less, or 225 mass % or less, or 200 mass % or less, or 175 mass % or less, or 150 mass % or less,

(3) a dietary fiber content of 3.0 mass % or more, or 3.5 mass % or more, or 4.0 mass % or more, or 4.5 mass % or more, or 5.0 mass % or more, or 6.0 mass % or more, or 7.0 mass % or more, or 8.0 mass % or more, or 9.0 mass % or more, or 10.0 mass % or more, while the upper limit is not particularly limited, but may preferably be typically 40 mass % or less, or 35 mass % or less, or 30 mass % or less in terms of wet mass basis, and

(4) a methionol content of 0.1 ppb or more, or 1 ppb or more, or 2 ppb or more, or 5 ppb or more, or 10 ppb or more, or 15 ppb or more, or 20 ppb or more, or 25 ppb or more, or 30 ppb or more, or 35 ppb or more, or 40 ppb or more, while the upper limit may preferably be typically 50000 ppb or less, or 45000 ppb or less, or 40000 ppb or less, or 35000 ppb or less, or 30000 ppb or less, or 25000 ppb or less, or 20000 ppb or less, or 15000 ppb or less, or 10000 ppb or less, in terms of wet mass basis; and

(ii) swelling the dough composition from step (i) via heating treatment, wherein during the heating treatment, the [Value $\alpha$] / [Value $\beta$] ratio of the composition increases by 5 mass % or more, or 8 % or more, or 10 % or more, or 20 % or more, or 30 % or more, or 35 % or more, or 40 % or more, or 50 % or more, or 80 % or more, or 100 % or more, or 140 % or more, or 230 % or more, or 300 % or more, or 350 % or more, or 400 % or more, while the upper limit may preferably be, although is not particularly limited to, 5000 % or less, or 4500 % or less, or 4000 % or less, and the dry mass basis moisture content of the composition decreases by 5 mass % or more, or 9 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, while the upper limit is not particularly limited, but may be 100 mass % or less, or 98 mass % or less, or 96 mass % or less, or 94 mass % or less, or 92 mass % or less, or 90 mass % or less, or 80 mass % or less, or 70 mass % or less.

[Aspect 23] The method according to Aspect 22, wherein step (ii) includes:

(ii-a) yeast-fermenting the dough composition from step (i); and
(ii-b) subjecting the yeast-fermented composition from step (ii-a) to heating treatment.

[Aspect 24] The method according to Aspect 22, wherein step (ii) includes:

(ii-2a) mixing the dough composition from step (i) with air bubbles and/or an expansion agent; and
(ii-2b) subjecting the mixed composition from step (ii-2a) to heating treatment.

[Aspect 25] The method according to any one of Aspects 22 to 24, wherein step (i) and/or step (ii) includes carrying out enzyme treatment.

[Aspect 26] The method according to any one of Aspects 22 to 25, wherein during the heating treatment of step (ii), the AUC5.0 decreases by 5 % or more, or 10 % or more, or 15 % or more, or 20 % or more, or 25 % or more, or 30 % or more, or 35 % or more, or 40 % or more, while the upper limit is not particularly limited, but may be 100 % or less, or 90 % or less.

[Aspect 27] The method according to any one of Aspects 22 to 26, wherein during the heating treatment of step (ii), the AUC3.5 increases by 5 % or more, or 10 % or more, or 15 % or more, or 20 % or more, or 25 % or more, or 30 % or more, or 35 % or more, or 40 % or more, while the upper limit is not particularly limited, but may be 500 % or less, or 400 % or less, or 300 % or less, or 250 % or less, or 210 % or less, or 200 % or less, or 150 % or less, or 100 % or less, or 95 % or less, or 90 % or less, or 85 % or less, or 80 % or less, or 75 % or less, or 70 % or less, or 65 % or less.

[Aspect 28] The method according to any one of Aspects 22 to 27, wherein during the heating treatment of step (ii), when pores with an area of 10000 $\mu m^2$ or more in the frozen section of the composition A are observed, the ratio of the area weighted average area to the weighted average perimeter {(weighted average area)/(weighted average perimeter)} increases by 5 % or more, or 6 % or more, or 7 % or more, or 8 % or more, or 9 % or more, or 10 % or more, or 15 % or more, or 20 % or more, or 30 % or more, or 40 % or more, or 50 % or more, or 100 % or more, or 500 % or more, or 1000 % or more, or 3000 % or more, or 5000 % or more, while the upper limit is not particularly limited, but may preferably be typically 50000 % or less, or 40000 % or less, or 30000 % or less, or 20000 % or less.

[Aspect 29] The method according to any one of Aspects 22 to 28, wherein when the frozen section of the composition A is observed, the ratio of the total area of pores with an aspect ratio of 3.5 or more and a degree of circularity factor of 0.3 or more to the area of a cross-section image of the composition increases by 50 % or more, or 100 % or more, or 150 % or more, or 180 % or more, or 200 % or more, or 250 % or more, or 280 % or more, or 300 % or more, or 330 % or more, or 380 % or more, or 400 % or more, or 450 % or more, or 480 % or more, or 500 % or more, or 550 % or more, or 900 % or more, or 1000 % or more, or 2000 % or more, or 9000 % or more, while the upper limit is not particularly limited, but may preferably be typically 100000 % or less, or 90000 % or less, or 80000 % or less, or 70000 % or less, during the heating treatment of step (ii).

[Aspect 30] The method according to any one of Aspects 22 to 29, wherein when the dough composition from step (i) is measured according to <Method c>, the ratio of [Value δ] / [Value γ] is 0.1 or more, or 0.2 or more, or 0.3 or more, or 0.4 or more, or 0.5 or more, while the upper limit is not particularly limited, but may preferably be typically 1 or less, or 0.95 or less, or 0.90 or less.

[Value γ]: A breakdown viscosity (cP) during temperature increasing step (a1).
[Value δ]: A peak viscosity (cP) during temperature decreasing step (a2).

<Method c> As a measurement sample, 32 g of 22 mass % aqueous slurry of a crushed product of the composition is subjected to measurement using a rapid visco-analyzer with carrying out steps (a1) and (a2) below.

(a1) Temperature increasing step, in which the temperature of the measurement sample is increased from 50 °C to 95 °C at an increasing rate of 6 °C/min and then maintained for 3 minutes.
(a2) Temperature decreasing step, in which the temperature of the measurement sample is decreased from 95 °C to 50 °C at a decreasing rate of 6 °C/min.

[Aspect 31] The method according to any one of Aspects 22 to 30, wherein when 6% suspension of the dough composition from step (i) is observed, the number of starch grain structures is 10/mm² or more, or 50/mm² or more, or 100/mm² or more, or 300/mm² or more, or 500/mm² or more, or 700/mm² or more, or 800/mm² or more, or 900/mm² or more, or 1000/mm² or more, while the upper limit is not particularly limited, but may preferably be typically 5000/mm² or less, or 4000/mm² or less.

[Aspect 32] The method according to any one of Aspects 22 to 31, wherein the degree of gelatinization of the dough composition from step (i) is less than 70 mass %, or 60 mass % or less, or 50 mass % or less, or 45 mass % or less, or 40 mass % or less, or 35 mass % or less, while the upper limit is not limited, but may preferably be typically 0.1 mass % or more or, 0.5 mass % or more, or 1 mass % or more.

[Aspect 33] The method according to any one of Aspects 22 to 32, wherein the sodium chloride content of the dough composition from step (i) is 5 mass % or less, or 4 mass % or less, or 3 mass % or less, or 2 mass % or less, or 1 mass % or less, or 0.7 mass % or less, or 0.5 mass % or less, while the lower limit may preferably be typically 0 mass %, or 0 mass % or more, in terms of wet mass basis.

[Aspect 34] The method according to any one of Aspects 22 to 33, wherein the alcohol content of the dough composition from step (i) is 10 mass % or less, or 9 mass % or less, or 8 mass % or less, or 7 mass % or less, or 6 mass % or less, or 5 mass % or less, or 4 mass % or less, or 3 mass % or less, or 2 mass % or less, or 1 mass % or less, while the lower limit is not particularly limited, but may preferably be typically 0 mass %, or 0 mass % or more, in terms of wet mass basis.

[Aspect 35] The method according to any one of Aspects 22 to 34, wherein the dough composition from step (i) is substantially free of gluten.

[Aspect 36] The method according to any one of Aspects 22 to 35, wherein the dough composition from step (i) comprises dietary fiber-localized part of pulse and/or cereal.

[Aspect 37] The method according to Aspect 36, wherein the dough composition from step (i) comprises both edible part of pulse and/or cereal and dietary fiber-localized part of pulse and/or cereal.

[Aspect 38] The method according to any one of Aspects 22 to 37, wherein the total content of edible part of pulse and/or cereal and dietary fiber-localized part of pulse and/or cereal in the dough composition from step (i) is 10 mass % or more, or 15 mass % or more, or 20 mass % or more, or 25 mass % or more, or 30 mass % or more, or 35 mass % or more, or 40 mass % or more, or 45 mass % or more, or 50 mass % or more, while the upper limit is not particularly limited, but may preferably be typically 95 mass % or less, or 93 mass % or less, preferably 90 mass % or less, in terms of wet mass basis.

[Aspect 39] The method according to any one of Aspects 22 to 38, wherein the dietary fiber-localized part of pulse and/or cereal contains seed skin of pulse and/or cereal.

[Aspect 40] The method according to any one of Aspects 22 to 39, wherein the dietary fiber-localized part of pulse and/or cereal contains dietary fiber-localized part of psyllium.

[Aspect 41] The method according to any one of Aspects 36 to 40, wherein the dietary fiber-localized part of edible plant contains seed skin of psyllium.

[Aspect 42] The method according to any one of Aspects 36 to 41, wherein the dietary fiber-localized part of pulse and/or cereal is dietary fiber-localized part having undergone enzyme treatment.

[Aspect 43] The method according to Aspect 42, wherein enzyme treatment is cellulase, xylanase, or pectinase treatment.

[Aspect 44] The method according to any one of Aspects 22 to 43, wherein step (i) and/or step (ii) include(s) adding to the composition pulse and/or cereal with a PDI (protein dispersibility index) value of less than 55 mass %, or less than 50 mass %, or less than 45 mass %, or less than 40 mass %, or less than 35 mass %, or less than 30 mass %, or less than 25 mass %, or less than 20 mass %, or less than 15 mass %, or less than 10 mass %, while the lower limit is not particularly limited, but may preferably be typically 0 mass % or more, or 1 mass % or more, or 2 mass % or more.

[Aspect 45] The method according to any one of Aspects 22 to 44, further comprising: (iii) subjecting the dough composition from step (ii) to treatment under reduced pressure.

[Aspect 46] A swollen composition produced by a method according to any one of Aspects 22 to 45.

[Aspect 47] A dough composition for use in step (i) of the method according to any one of Aspects 22 to 45, containing starch derived from pulse and/or cereal and satisfying requirements (1) to (4) below.

(1) The dough composition has a starch content of 3 mass % or more, or 5 mass % or more, or 10 mass % or more, or 12 mass % or more, or 15 mass % or more, or 18 mass % or more, or 20 mass % or more, while the upper limit is not particularly limited, but may be 80 mass % or less, or 75 mass % or less, or 70 mass % or less, in terms of wet mass basis.

(2) The dough composition has a dry mass basis moisture content of more than 50 mass %, or more than 55 mass %, more than 60 mass %, or more than 63 mass %, or more than 65 mass %, or more than 68 mass %, or more than 70 mass %, or more than 73 mass %, or more than 75 mass %, or more than 77 mass %, or more than 80 mass %, or more than 82 mass %, or more than 85 mass %, while the upper limit is not particularly limited, but may preferably be typically 250 mass % or less, or 225 mass % or less, or 200 mass % or less, or 175 mass % or less, or 150 mass % or less.

(3) The dough composition has a dietary fiber content of 3.0 mass % or more, or 3.5 mass % or more, or 4.0 mass % or more, or 4.5 mass % or more, or 5.0 mass % or more, or 6.0 mass % or more, or 7.0 mass % or more, or 8.0 mass % or more, or 9.0 mass % or more, or 10.0 mass % or more, while the upper limit in terms of wet mass basis may be, although is not particularly limited to, typically 40 mass % or less, or 35 mass % or less, or 30 mass % or less, in terms of wet mass basis.

(4) The dough composition has a methionol content of 0.1 ppb or more, or 1 ppb or more, or 2 ppb or more, or 5 ppb or more, or 10 ppb or more, or 15 ppb or more, or 20 ppb or more, or 25 ppb or more, or 30 ppb or more, or 35 ppb or more, or 40 ppb or more, while the upper limit may preferably be typically 50000 ppb or less, or 45000 ppb or less, or 40000 ppb or less, or 35000 ppb or less, or 30000 ppb or less, or 25000 ppb or less, or 20000 ppb or less, or 15000 ppb or less, or 10000 ppb or less, in terms of wet mass basis.

[Aspect 48] A food crushed product for use in the preparation of the dough composition in step (i) of the method according to any one of Aspects 22 to 45, containing starch derived from pulse and/or cereal and satisfying requirements (1) to (7) below.

(1) The food crushed product has a starch content of 3 mass % or more, or 5 mass % or more, or 10 mass % or more, or 15 mass % or more, or 20 mass % or more, or 25 mass % or more, or 28 mass % or more, or 30 mass % or more, or 32 mass % or more, or 35 mass % or more, while the upper limit is not particularly limited, but may be 80 mass % or less, or 75 mass % or less, or 70 mass % or less, in terms of wet mass basis.

(2) The food crushed product has a dry mass basis moisture content of less than 25 mass %, or 20 mass % or less, or 15 mass % or less, or 10 mass % or less, while the lower limit is not particularly limited, but may preferably be typically 0 mass %, or 0 mass % or more.

(3) The food crushed product has a dietary fiber content of 3.0 mass % or more, or 3.5 mass % or more, or 4.0 mass % or more, or 4.5 mass % or more, or 5.0 mass % or more, or 6.0 mass % or more, or 7.0 mass % or more, or 8.0 mass % or more, or 9.0 mass % or more, or 10.0 mass % or more, while the upper limit in terms of wet mass basis may be, although is not particularly limited to, typically 40 mass % or less, or 35 mass % or less, or 30 mass % or less, in terms of wet mass basis.

(4) The food crushed product has a degree of gelatinization of starch of less than 50 mass %, 45 mass % or less, or 40 mass % or less, or 35 mass % or less, while the upper limit is not limited, but may preferably be typically 0.1 mass % or more, or 0.5 mass % or more, or 1 mass % or more.

(5) When the food crushed product is subjected to ultrasonication, the specific surface area per unit volume is 0. 10m$^2$/mL or more, or 0.15m$^2$/mL or more, or 0.20m$^2$/mL or more, or 0.25m$^2$/mL or more, or 0.30m$^2$/mL or more, while the upper limit is not particularly limited, but may preferably be typically 2.5m$^2$/mL or less, or 2.2m$^2$/mL or less, or 2.0m$^2$/mL or less.

(6) When the food crushed product is measured according to <Method c>, the ratio of [Value $\delta$] / [Value $\gamma$] of 0.1 or more, or 0.2 or more, or 0.3 or more, or 0.4 or more, or 0.5 or more, while the upper limit is not particularly limited, but may preferably be typically 1 or less, or 0.95 or less, or 0.90 or less.

> [Value $\gamma$]: A breakdown viscosity (cP) during temperature increasing step (a1).
> [Value $\delta$]: A peak viscosity (cP) during temperature decreasing step (a2).

<Method c> As a measurement sample, 32 g of 22 mass % aqueous slurry of a crushed product of the composition is subjected to measurement using a rapid visco-analyzer with carrying out steps (a1) and (a2) below.

> (a1) Temperature increasing step, in which the temperature of the measurement sample is increased from 50 °C to 95 °C at an increasing rate of 6 °C/min and then maintained for 3 minutes.
> (a2) Temperature decreasing step, in which the temperature of the measurement sample is decreased from 95 °C to 50 °C at a decreasing rate of 6 °C/min.

(7) When 6% suspension of the food crushed product is observed, the number of starch grain structures is 10/mm$^2$ or more, or 20/mm$^2$ or more, or 30/mm$^2$ or more, or 40/mm$^2$ or more, or 60/mm$^2$ or more, or 80/mm$^2$ or more, or 100/mm$^2$ or more, or 150/mm$^2$ or more, or 200/mm$^2$ or more, or 250/mm$^2$ or more, or more than 300/mm$^2$, while the upper limit may preferably be, although is not particularly limited to, 100000/mm$^2$ or less, or 50000/mm$^2$ or less, or 10000/mm$^2$ or less.

[Aspect 49] A method for improving aroma volatility of a swollen compositions during storage at ordinary temperature, comprising:

(i) preparing a dough composition containing starch derived from pulse and/or cereal and having

(1) a starch content of 3 mass % or more, or 5 mass % or more, or 10 mass % or more, or 12 mass % or more, or 15 mass % or more, or 18 mass % or more, or 20 mass % or more, while the upper limit is not particularly limited, but may be 80 mass % or less, or 75 mass % or less, or 70 mass % or less, in terms of wet mass basis,

(2) a dry mass basis moisture content of more than 50 mass %, or more than 55 mass %, more than 60 mass %, or more than 63 mass %, or more than 65 mass %, or more than 68 mass %, or more than 70 mass %, or more than 73 mass %, or more than 75 mass %, or more than 77 mass %, or more than 80 mass %, or more than 82 mass %, or more than 85 mass %, while the upper limit is not particularly limited, but may preferably be typically 250 mass % or less, or 225 mass % or less, or 200 mass % or less, or 175 mass % or less, or 150 mass % or less,

(3) a dietary fiber content of 3.0 mass % or more, or 3.5 mass % or more, or 4.0 mass % or more, or 4.5 mass % or more, or 5.0 mass % or more, or 6.0 mass % or more, or 7.0 mass % or more, or 8.0 mass % or more, or 9.0 mass % or more, or 10.0 mass % or more, while the upper limit in terms of wet mass basis may be, although is not particularly limited to, typically 40 mass % or less, or 35 mass % or less, or 30 mass % or less, in terms of wet mass basis, and

(4) a methionol content of 0.1 ppb or more, or 1 ppb or more, or 2 ppb or more, or 5 ppb or more, or 10 ppb or more, or 15 ppb or more, or 20 ppb or more, or 25 ppb or more, or 30 ppb or more, or 35 ppb or more, or 40 ppb or more, while the upper limit may preferably be typically 50000 ppb or less, or 45000 ppb or less, or 40000 ppb or less, or 35000 ppb or less, or 30000 ppb or less, or 25000 ppb or less, or 20000 ppb or less, or 15000 ppb or less, or 10000 ppb or less, in terms of wet mass basis; and

(ii) swelling the dough composition from step (i) via heating treatment, wherein during the heating treatment, the [Value $\alpha$] / [Value $\beta$] ratio of the composition increases by 5 mass % or more, or 8 % or more, or 10 % or more, or 20 % or more, or 30 % or more, or 35 % or more, or 40 % or more, or 50 % or more, or 80 % or more, or 100 % or more, or 140 % or more, or 230 % or more, or 300 % or more, or 350 % or more, or 400 % or more, while the upper limit may preferably be, although is not particularly limited to, 5000 % or less, or 4500 % or less, or 4000 % or less, and the dry mass basis moisture content of the composition decreases by 5 mass % or more, or 9 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, while the upper limit is not particularly limited, but may be 100 mass % or less, or 98 mass % or less, or 96 mass % or less, or 94 mass % or less, or 92 mass % or less, or 90 mass % or less, or 80 mass % or less, or 70 mass % or less.

[Aspect 50] A swollen composition that satisfies requirements (4) and (5) below and can be stored at ordinary temperature for a week or more.

(4) When at least one frozen section of the composition A obtained under [Condition A] below is observed, requirement (a) below is satisfied.

(a) When pores with an area of 10000 $\mu$m2 or more in a cross-section image of the composition is observed, the ratio of a weighted average area of the pores to a weighted average perimeter of the pores {(weighted average area)/(weighted average perimeter)} is 100 or more, or 130 or more, or 180 or more, or 250 or more, or 300 or more, or 320 or more, or 490 or more, or 570 or more, or 600 or more, or 700 or more, or 800 or more, or 900 or more, or 1000 or more, or 1100 or more, or 1300 or more, or 1500 or more, or 1800 or more, or 2000 or more, while the upper limit is not particularly limited, but may be 10000 or less, or 9000 or less, or 8000 or less, or 7000 or less, or 6000 or less.
[Condition A] The composition is frozen at -25°C and cut along a cut plane A to prepare a frozen section of the composition A.

(5) The ratio of Value $\alpha$ to Value $\beta$ {(Value $\alpha$)/(Value $\beta$)} as defined below is 0.3 or more, or 0.5 or more, or 1.0 or more, or 1.6 or more, or 1.9 or more, or 2.0 or more, or 2.2 or more, or 2.5 or more, or 2.8 or more, or 3.0 or more, or 3.1 or more, or 3.3 or more, or 4.0 or more, or 6.0 or more, or 10 or more, while the upper limit is not particularly limited, but may be 5000 or less, or 4000 or less, or 3000 or less, or 2000 or less, or 1000 or less.

Value $\alpha$: The wet mass basis content of methionol in the composition (ppb)
Value $\beta$: When the composition is subjected to [Procedure b] below and the resulting product is subjected to measurement under [Condition B] below to obtain a molecular weight distribution curve in an interval with molecular weight logarithms of 3.5 or more but less than 6.5 (hereinafter referred to as "$MWDC_{3.5-6.5}$"), the ratio of an area under the curve in an interval with molecular weight logarithms of 5.0 or more but less than 6.5 to the area under the entire curve (hereinafter referred to as "$AUC_{5.0}$").

[Procedure b] The composition is crushed, and an ethanol-insoluble and dimethyl sulfoxide-soluble component is obtained.
[Condition B] The treated product from the [Procedure b] above is dissolved into 1M aqueous solution of sodium hydroxide at a concentration of 0.30 mass % and allowed to stand at 37 °C for 30 minutes, then combined with an equal volume of water and an equal volume of eluent and subjected to filtration with a 5-$\mu$m filter, and 5mL of the filtrate is then subjected to gel filtration chromatography to thereby obtain a molecular weight distribution.

## EFFECT OF THE INVENTION

The present invention provides a swollen composition containing starch derived from pulse and/or cereal with suppressed powdery odor originating from pulse or cereal powder while retaining the good aroma of such powder.

**DESCRIPTION OF EMBODIMENTS**

The present invention will be described in detail in accordance with the specific embodiments below. However, the present invention is not bound by the following embodiments, but can be implemented in any form to the extent that it does not depart from the intent of the present invention.

It should be noted that when a plurality of upper limits and/or a plurality of lower limits are indicated for any numerical range herein, the subject matter intended for the present invention includes at least the combination of the maximal value of the upper limits and the minimal value of the lower limits, as well as all numerical ranges obtained by combining any value of the upper limits and any value of the upper limits, regardless of they are explicitly indicated. For example, the statement about the numerical ranges of $AUC_{5.0}$ below, i.e., "typically 70 % or less, preferably 67 % or less, or 65 % or less, or 63 % or less, or 61 % or less, especially 59 % or less" and "typically 1 % or more, or 5 % or more, or 10 % or more," means that the subject matter intended for the present invention includes all numerical ranges obtained by combining any value of the upper limits and any value of the upper limits, i.e., 1 % or more but 70 % or less, 1 % or more but 67 % or less, 1 % or more but 65 % or less, 1 % or more but 63 % or less, 1 % or more but 61 % or less, 1 % or more but 59 % or less, 5 % or more but 70 % or less, 5 % or more but 67 % or less, 5 % or more but 65 % or less, 5 % or more but 63 % or less, 5 % or more but 61 % or less, 5 % or more but 59 % or less, 10 % or more but 70 % or less, 10 % or more but 67 % or less, 10 % or more but 65 % or less, 10 % or more but 63 % or less, 10 % or more but 61 % or less, and 10 % or more but 59 % or less.

The term "wet mass basis" (also referred to as "wet mass equivalent") herein means the ratio of the content of a target component in a sample calculated with the wet mass containing water of the sample as the denominator and the content mass of the target component in the sample as the numerator. The term "dry mass basis" (also referred to as "dry mass equivalent") herein means the ratio of the content of a target component in a sample calculated with the dry mass of the sample excluding water as the denominator and the content mass of the target component in the sample as the numerator. When the term "mass %" is used herein for indicating ratios, they are indicated in terms of "wet mass basis," unless specified otherwise.

The term "powdery odor" herein refers to an off-flavor generated from raw materials (e.g., pulse or cereal). Specifically, it is a combined odor of fiber odor (odor that gives an aged feeling like used paper) and the oxidation odor of oil and fat.

[I. Swollen composition]

An aspect of the present invention relates to a swollen composition containing starch (hereinafter also referred to as "the starch-containing swollen composition of the present invention," "the swollen composition of the present invention," or simply "the composition of the present invention"). The term "swollen composition" herein refers to a composition with pores of a certain size or larger inside the composition. A swollen compositions can typically be produced by increasing the volume of pores in a dough composition by expanding the liquid or gas inside the dough composition, followed by curing with cooling the composition. Specifically, swollen compositions can be produced by causing and expanding gas using an expander (typically baking powder, sodium bicarbonate (baking soda), or ammonium bicarbonate that produces gas when heated) or yeast fermentation inside a dough composition via heat treatment to increase its pore volume, followed by cooling to cure the dough composition. Specific examples of swollen compositions include bread or similar food products such as waffles (also referred to as bread-like food products). Examples of swollen food compositions also include bread food products prepared by forming swollen compositions into desired shapes.

The swollen composition of the present invention may be a fermented puffed composition or a fermented puffed dough composition, which is produced by a production method that includes a fermentation process (especially a fermentation process with yeast), or a non-fermented swollen composition or a non-fermented swollen dough composition, which is produced by a production method that does not include a fermentation process (especially a fermentation process with yeast). When the swollen composition of the present invention is a fermented swollen composition, it may be a fermented composition produced by keeping the temperature of a mixture (e.g., dough composition) containing certain ingredients at a predetermined temperature range (e.g., 0°C to 60°C for 1 minute or more), or a fermented baked composition produced by baking such a mixture at 100°C for 1 minute or more, or a composition produced by a combination of those production methods. The swollen composition may also be an enzyme-treated composition, which is produced by a production method including enzyme treatment (preferably cellulase, pectinase, or xylanase treatment), or a fermented enzyme-treated composition, which is produced by combining the fermentation process and enzyme treatment described above. As used herein, a composition which has not been baked but is supposed to be baked may be referred to as a "dough composition," and a dough composition that has been swollen before baking may be referred to as a "swollen dough composition."

As will be explained in the section on the production method of the swollen composition of the present invention, the contents of various ingredients in the swollen composition of the present invention may be achieved at any stage of the production method. For example, they may be achieved before the step of heat treatment in a predetermined temperature range, during the step of heat treatment in a predetermined temperature range, or after the step of heat treatment in a predetermined temperature range.

* Starch:

The swollen composition of the present invention contains starch at a predetermined ratio or more in terms of wet mass basis. The swollen composition of the present invention is more likely to be fully effective when it contains starch at a predetermined ratio or more. Although the principle behind this is unknown, it is deemed that when the starch content is at a predetermined ratio or more, methionol is more easily retained in a network of starch, and the powdery odor is more likely to be suppressed. It is also deemed that when the starch content is at a predetermined ratio or more, the starch network more easily forms specific pores in which methionol can be retained, making it easier to suppress powdery odor and retain good aroma. Specifically, the starch content in the swollen composition of the present invention in terms of wet mass basis may be within the range of 3 mass % or more but 80 mass % or less. More specifically, the lower limit of the starch content in terms of wet mass basis may preferably be typically 3 mass % or more, preferably 5 mass % or more, or 10 mass % or more, or 15 mass % or more, or 20 mass % or more, or 25 mass % or more, or 28 mass % or more, or 30 mass % or more, or 32 mass % or more, or 35 mass % or more. The upper limit is not particularly limited, but may preferably be typically 80 mass % or less, or 75 mass % or less, or 70 mass % or less.

The origin of the starch contained in the swollen composition of the present invention is not particularly restricted. Examples include those derived from plant and those derived from animal. However, the swollen composition of the present invention at least contains pulse-derived starch and/or cereal-derived starch. Specifically, the ratio of the total content of pulse-derived starch and/or cereal-derived starch (preferably the content of pulse-derived starch) to the total starch content in the swollen composition of the present invention may be within the range of 10 mass % or more but 100 mass % or less. More specifically, the lower limit of the ratio may preferably be typically 10 mass % or more, or 20 mass % or more, or 30 mass % or more, particularly 40 mass % or more, or 50 mass % or more, or 60 mass % or more, or 70 mass % or more, or 80 mass % or more, or 90 mass % or more. On the other hand, the upper limit of the ratio may be, although not particularly limited to, typically 100 mass %, or 100 mass % or less. The pulse-derived starch may preferably be mung bean starch and especially pea-derived starch, most preferably yellow pea-derived starch. The cereal-derived starch may preferably be quinua-derived starch, oat-derived starch, corn-derived starch, or especially starch derived from kibi (common millet). The starch may preferably be contained in pulse and/or cereal. The ratio of the pulse-derived starch content to the total starch content of the entire composition may satisfy the above range, or the ratio of the cereal-derived starch content to the total starch content of the entire composition may satisfy the above range. The sum of the pulse-derived starch content and the cereal-derived starch content may preferably satisfy the above provision. The pulse and cereal will be explained later.

The starch contained in the swollen composition of the present invention may be either in the form of an isolated pure product, but at least pulse-derived starch content and cereal-derived starch may more preferably be in the form of being contained in pulse and/or cereal. Specifically, the ratio of the total content of starch contained in pulse and/or cereal (preferably the total content of starch contained in pulse) the total starch content in the whole composition may be within the range of typically 0 mass % or more, or 10 mass % or more, and 100 mass % or less. More specifically, the lower limit of the ratio may preferably be typically 0 mass % or more, preferably 10 mass % or more, or 20 mass % or more, or 30 mass % or more, or 40 mass % or more, or 50 mass % or more, or 60 mass % or more, or 70 mass % or more, or 80 mass % or more, or 90 mass % or more. On the other hand, the upper limit of the ratio is not particularly limited, but may preferably be typically 100 mass %, or 100 mass % or less. The ratio of the content of starch contained in pulse to the total starch content of the entire composition may satisfy the above range, or the ratio of the content of starch contained in cereal to the total starch content of the entire composition may satisfy the above range, or the sum of the content of starch contained in pulse and the content of starch contained in cereal may preferably satisfy the above provision. In the present invention, the starch content in a swollen composition is determined according to the Japan Standard Tables for Food Composition 2015 (7th revised edition) and using the method of AOAC 996.11, by a method in which soluble carbohydrates (glucose, maltose, maltodextrin, etc.) that affect the measured value are removed via extraction treatment with 80% ethanol.

The total content of starch derived from rice, wheat, and/or barley (preferably wheat and/or barley) in the swollen composition of the present invention may preferably be within a predetermined range. Specifically, the ratio of the total content of starch derived from rice, wheat, and/or barley (preferably, wheat and/or barley) to the total starch content in the swollen composition may be within the range of 0 mass % or more but 20 mass % or less. More specifically, the upper limit of the ratio may preferably be typically 20 mass % or less, or 15 mass % or less, or 10 mass % or less, or 9 mass % or less, or 8 mass % or less, or 7 mass % or less, or 6 mass % or less, or 5 mass % or less, or 4 mass % or less, or 3 mass % or less, or 2 mass % or less, or 1 mass % or less, more preferably substantially absent (which may specifically refer to a content of less than 1 ppm, which is a lower limit for general measurement methods), or absent.

On the other hand, the lower limit of the ratio is not particularly limited, but may preferably be typically 0 mass %, or 0 mass % or more.

*Dry mass basis moisture content:

The swollen composition of the present invention is characterized in that its dry mass basis moisture content is higher than a predetermined ratio. When the dry mass basis moisture content is set to be higher than a predetermined ratio, the swollen composition of the present invention is more likely to be fully effective. Although the principle is unknown, it is deemed that the distribution of moisture throughout the composition promotes the formation of a network of starch, facilitating the formation of pores of a specific shape and suppressing powdery odor, as well as resulting in good elasticity. Specifically, the dry mass basis moisture content of the swollen composition of the present invention may be within the range of 0 mass % or more but less than 150 mass %. More specifically, the upper limit of the dry mass basis moisture content of the swollen composition of the present invention may preferably be typically less than 150 mass %, preferably less than 140 mass %, or less than 130 mass %, or less than 120 mass %, or less than 110 mass %, or less than 100 mass %, or less than 90 mass %, or less than 80 mass %, or less than 70 mass %, or less than 60 mass %, or less than 50 mass %, or less than 40 mass %, or less than 30 mass %, or less than 26 mass %, or less than 21 mass %, or less than 16 mass %, or less than 10 mass %. On the other hand, the lower limit of the dry mass basis moisture content of the swollen composition of the present invention may be, although is not limited to, 0 mass % or more, or 0.5 mass % or more, or 1 mass % or more, or 2 mass % or more, or 5 mass % or more, from the viewpoint of industrial production efficiency. The dry mass basis moisture content of the swollen composition of the present invention may be either derived from various ingredients of the composition or derived from further added water. If the dry mass basis moisture content in the dough composition before processing is high, a process such as drying can be employed to adjust the dry mass basis moisture content to within the aforementioned range.

The "dry mass basis water content" herein refers to the ratio of the total amount of water in the composition of the present invention which either originates from the raw materials or was added externally to the total amount of solids in the solid paste composition of the present invention. The value can be measured by a method, for example, according to the Japan Standard Tables for Food Composition 2015 (7th revised edition), by heating to 90°C using the decompression heating and drying method. Specifically, an appropriate amount of sample ($W_1$) is put in a pre-weighed weighing vessel (Wa) and weighed, the weighing vessel with the lid removed or opened is placed in a reduced pressure electric constant temperature dryer adjusted to a predetermined temperature (more specifically, 90°C) at normal pressure, the door is closed, and the vacuum pump is operated to dry the sample at a predetermined reduced pressure for a predetermined period of time. The vacuum pump is then stopped, dry air is sent to bring the pressure back to normal, the weighing vessel is removed, the lid is put on, the vessel is left to cool in a desiccator, and the mass is then weighed. The method of drying, cooling, and weighing ($W_2$) is repeated until a constant amount is reached, and the water content (water content based on dry weight) (mass %) is determined using the following formula.

[Formula 1]

$$\text{Dry basis water content (g/100g)} = (W_1 - W_2) / (W_2 - W_0) \times 100$$

In the formula, $W_0$ is the mass (g) of the pre-weighed weighing vessel, $W_1$ is the mass (g) of the weighing vessel with the sample before drying, and $W_2$ is the mass (g) of the weighing vessel with the sample after drying.

*Dietary fiber:

The swollen composition of the present invention is characterized in that the content of dietary fiber (which may preferably be, although is not limited to, insoluble dietary fiber) in the composition in terms of wet mass basis is equal to or higher than a predetermined ratio. When its dietary fiber content is set to be equal to or higher than a predetermined ratio, the swollen composition of the present invention is more likely to exhibit its effects sufficiently. Although the principle behind this is unknown, it is deemed that when the ratio is set to be equal to or higher than a predetermined ratio, dietary fiber tends to help starch network to maintain methionol, whereby powdery odor is more easily suppressed. It is also deemed that when the ratio is set to be equal to or higher than a predetermined ratio, specific pores are more likely to be formed and retain methionol therein, which may help suppress powder odor and retain good aroma. Specifically, the dietary fiber content in the swollen composition of the present invention in terms of wet mass basis may be within the range of typically 3.0 mass % or more, while the upper limit may preferably be, although is not particularly limited to, less than 40 mass %. More specifically, its lower limit in terms of wet mass basis may preferably be typically 3.0 mass % or more, preferably 3.5 mass % or more, or 4.0 mass % or more, or 4.5 mass % or more, or 5.0 mass % or more, or 5.5 mass % or more, or 6.0 mass % or more, or 7.0 mass % or more, or 8.0 mass % or more, or 9.0 mass % or more, or 10.0 mass % or more, or 11.0 mass % or more, or 13.0 mass % or more. On the other hand, its upper limit in terms of wet mass basis may be, although is not particularly limited to, typically 40 mass % or less, or 35 mass % or less, or 30 mass % or less. The insoluble dietary fiber content in the composition may satisfy the above range, or the soluble dietary fiber content in the composition may satisfy the above range, or the sum of the contents of soluble dietary fiber and insoluble dietary fiber may satisfy the above range. The "dietary fiber content" (i.e., "total dietary fiber content," which is a sum of the soluble dietary fiber content and the insoluble dietary fiber content), "soluble dietary fiber content," and "insoluble dietary fiber content" are measured in accordance with the Japan Standard Tables for Food Composition 2015 (7th revised edition) using the Prosky variant method.

It may be preferred that the above provisions for dietary fiber are also satisfied for soluble and/or insoluble dietary fiber. Specifically, the content(s) of soluble dietary fiber and/or insoluble dietary fiber in the composition of the present invention in terms of wet mass basis for example lower limit may preferably be within the range of typically 3.0 mass % or more, while the upper limit may preferably be, although is not particularly limited to, less than 40 mass %. More specifically, its lower limit in terms of wet mass basis may preferably be typically 3.0 mass % or more, preferably 3.5 mass % or more, or 4.0 mass % or more, or 4.5 mass % or more, or 5.0 mass % or more, or 6.0 mass % or more, or 7.0 mass % or more, or 8.0 mass % or more, or 9.0 mass % or more, or 10.0 mass % or more, or 11.0 mass % or more, or 13.0 mass % or more. On the other hand, its upper limit in terms of wet mass basis may be, although is not particularly limited to, typically 40 mass % or less, or 35 mass % or less, or 30 mass % or less. The insoluble dietary fiber content in the composition may satisfy the above range, or the soluble dietary fiber content in the composition may satisfy the above range, or the sum of the soluble dietary fiber and insoluble dietary fiber contents in the composition may satisfy the above range.

The origin of the dietary fiber (which may preferably be, although is not limited to, insoluble dietary fiber) contained in the swollen composition of the present invention is not particularly limited, and may be either those derived from various naturally-occurring materials (such as edible plants) containing dietary fiber or those synthesized. When those derived from naturally-occurring materials are used, dietary fiber contained in various materials may be isolated, purified, and used, or alternatively, such materials containing dietary fiber may be used as such. Among these, dietary fibers contained in various materials (particularly pulse and/or cereal) are preferred. Examples of dietary fibers that can be used include those derived from general cereals (particularly from specific cereals), those derived from pulse (beans), those derived from potatoes, those derived from vegetables, those derived from nuts, and those derived from fruits. Preferable among them are those derived from cereals and those derived from pulse (beans) from the viewpoint of forming specific pores in the composition, more preferably those derived from pulse (beans), even more preferably those derived from mung bean or those derived from pea, most preferably those derived from yellow pea. Preferable among dietary fibers derived from cereals are those derived from oat, those derived from quinua, or especially those derived from kibi (common millet).

Specifically, the ratio of the total content of pulse-derived dietary fiber and/or cereal-derived dietary fiber (preferably the pulse dietary fiber content) to the total dietary fiber content in the whole composition may be within the range of typically 0 mass % or more, preferably 5 mass % or more, but 100 mass % or less. More specifically, the lower limit of the ratio may preferably be typically 0 mass % or more, preferably 5 mass % or more, or 10 mass % or more, or 15 mass % or more, or 20 mass % or more, or 25 mass % or more, or 30 mass % or more, or 40 mass % or more, or 50 mass % or more, or 60 mass % or more, or 70 mass % or more, or 80 mass % or more, or 90 mass % or more. On the other hand, the upper limit of the ratio may be, although not particularly limited to, typically 100 mass %, or 100 mass % or less. When pulse containing dietary fiber is used, it may be used either with or without its seed skin, but pulse with seed skin may preferably be used since it has a higher content of dietary fiber. When cereal containing dietary fiber is used, it may be used either with or without its bran, but cereal with bran may preferably be used since it has a higher content of dietary fiber. With respect to the total dietary fiber content in the composition, the ratio of pulse-derived dietary fiber content may satisfy the above range, or the ratio of cereal-derived dietary fiber content may satisfy the above range, or the total ratio of pulse-derived dietary fiber and cereal-derived dietary fiber may preferably satisfy the above range.

The swollen composition of the present invention may preferably contain dietary fiber derived from seed skin of psyllium (psyllium husk) at a certain ratio or more. Containing psyllium seed skin at a certain ratio or more may preferably provide the composition with properties that facilitate swelling. Specifically, the ratio of the dietary fiber content derived from seed skin of psyllium to the total dietary fiber content in in the composition may be within the range of typically 0 mass % or more, preferably 5 mass % or more, and typically 100 mass % or less. More specifically, the lower limit of the ratio may preferably be typically 0 mass % or more, preferably 1 mass % or more, or 2 mass % or more, or 3 mass % or more, or 4 mass % or more, or 5 mass % or more, or 8 mass % or more, or 10 mass % or more, or 15 mass % or more, or 20 mass % or more, or 25 mass % or more, or 30 mass % or more, or 40 mass % or more, or 50 mass % or more, or 60 mass % or more, or 70 mass % or more, or 80 mass % or more, or 90 mass % or more. The upper limit is not particularly limited, but may preferably be typically 100 mass % or less, or 90 mass % or less, or 80 mass % or less.

The dietary fiber (preferably, although not limited to, the insoluble dietary fiber) in the swollen composition of the present invention may be either in the form of an isolated pure product or, more preferably, in the form of being contained in pulse and/or cereal. Specifically, the ratio of the dietary fiber content contained in pulse and/or cereal (preferably pulse) to the total dietary fiber content in the whole composition may be within the range of typically 0 mass % or more, preferably 10 mass % or more, and 100 mass % or less. More specifically, the lower limit of the ratio may preferably be typically 0 mass % or more, preferably 10 mass % or more, particularly 20 mass % or more, or 30 mass % or more, or 40 mass % or more, or 50 mass % or more, or 60 mass % or more, or 70 mass % or more, or 80 mass % or more, or 90 mass % or more. The upper limit of the ratio may be, although not particularly limited to, typically 100 mass %, or 100 mass % or less. The ratio of the dietary fiber content contained in pulse and/or cereal (preferably pulse) to the total dietary fiber content in the swollen composition of the present invention may preferably satisfy the ranges mentioned above, and the insoluble dietary fiber content may more preferably satisfy the ranges mentioned above. The constitution of the dietary fiber contained in the composition of the present invention is not particularly restricted. However, the ratio of lignin (especially acid-soluble lignin) to the total dietary fiber content (especially to the total insoluble dietary fiber) may preferably satisfy the aforementioned limits or more, since this will make it easier to obtain a more pronounced texture improvement effect. Specifically, the ratio of the lignin content (especially the acid-soluble lignin content) to the total dietary fiber content to the total dietary fiber content may preferably be within the range of 5 mass % or more but 100 mass % or less. More specifically, it may preferably be typically 5 mass % or more, or 10 mass % or more, or 30 mass % or more.

It is also possible to use a raw material containing both insoluble and soluble dietary fiber, such as oat (about 30% of dietary fiber is soluble fiber) among cereals. Specifically, the ratio of the soluble dietary fiber content in terms of wet mass basis to the total dietary fiber content in terms of wet mass basis may be within the range of 5 mass % or more but 70 mass % or less. More specifically, its lower limit may preferably be 5 mass % or more, or 10 mass % or more, or 15 mass % or more, or 20 mass % or more, or 25 mass % or more, or 30 mass % or more. Its upper limit is not particularly limited, but may preferably be typically 70 mass % or less, or 65 mass % or less, or 60 mass % or less. The above requirement may be satisfied either by choosing a soluble dietary fiber-containing food material (specifically cereal, more specifically oat) to be used or by adjusting the conditions for step (i) of the production method of the swollen composition.

The swollen composition or fermented swollen dough composition of the present invention is useful because the swellable composition has good extensibility even when it contains a high amount of insoluble dietary fiber. Although the reason for this is not known, there is a possibility that the insoluble dietary fiber contained in the swollen composition interacts with starch and protein to form a network structure, which improves the physical properties of the swollen composition.

*Protein:

The swollen composition of the present invention may preferably contain protein at a predetermined ratio or more in terms of wet mass basis. When the protein content is set to be equal to or higher than a predetermined ratio, the resulting swollen composition may preferably tend to have improved elasticity and/or extensibility and also to exhibit the effects of the present invention. Although the principle behind this is unknown, there is a possibility that starch and protein in the swollen composition form aggregate structures which, through their interaction with dietary fiber (preferably insoluble dietary fiber), develop to have desirable shapes and sizes that are completely different from previously known protein networks such as gluten, resulting in the effects of the present invention. Specifically, the protein content in the swollen composition of the present invention in terms of wet mass basis may preferably be within the range of typically 0 mass % or more, preferably 1.0 mass % or more, and 40 mass % or less. More specifically, its lower limit may preferably be typically 0 mass % or more, preferably 1.0 mass % or more, or 2.0 mass % or more, or 3.0 mass % or more, or 4.0 mass % or more, or 5.0 mass % or more, or 6.0 mass % or more, or 7.0 mass % or more, or 8.0 mass % or more, or 9.0 mass % or more, or 10 mass % or more, or 11 mass % or more, or 12 mass % or more, or 13 mass % or more, or 14 mass % or more, or 15 mass % or more, or 16 mass % or more, or 17 mass % or more, or 18 mass % or more. On the other hand, its upper limit may preferably be, although is not limited to, typically 40 mass % or less, or 30 mass % or less, or 25 mass % or less, or 20 mass % or less. In the present invention, the pulse-derived protein content may satisfy the above range of the protein content, or the cereal-derived protein content may satisfy the above range, but the sum of the pulse-derived protein and the cereal-derived protein may preferably satisfy the above requirement.

The origin of the protein in the swollen composition of the present invention is not particularly restricted. Examples include those derived from plants and those derived from animals, among which pulse and/or cereal-derived proteins are preferred. Specifically, the ratio of the total content of pulse-derived and/or cereal-derived proteins (preferably the content of pulse-derived proteins) to the total protein content in the composition may preferably be within the range of typically 0 mass % or more, preferably 10 mass % or more, and typically 100 mass % or less. More specifically, its lower limit may preferably be typically 0 mass % or more, preferably 10 mass % or more, or 20 mass % or more, or 30 mass % or more, or 40 mass % or more, or 50 mass % or more, or 60 mass % or more, or 70 mass % or more, or 80 mass % or more, or 90 mass % or more, while the upper limit is not particularly limited, but may preferably be typically 100 mass %, or 100 mass % or less. Pulse-derived proteins may preferably be, although is not limited to, those derived from mung bean or those derived from pea, most preferably be yellow pea-derived protein. Cereal-derived protein may preferably be, although is not limited to, kibi (common millet)-derived protein or oat-derived protein, most preferably kibi (common millet) -derived protein. In the present invention, the pulse-derived protein content may satisfy the above range for the protein content, or the cereal-derived protein content may satisfy the above range for the protein content, but the total content of the pulse-derived protein and cereal-derived protein may preferably satisfy the above requirement.

The protein incorporated in the swollen composition of the present invention may be in the form of an isolated pure product or, preferably, may be present in the state of being contained in pulse and/or cereal. Specifically, the ratio of the total content of protein contained in pulse and/or cereal protein (preferably the content of protein contained in pulse) in the whole composition total protein content may preferably be within the range of typically 0 mass % or more, preferably 10 mass % or more, and typically 100 mass % or less. More specifically, the lower limit may preferably be typically 0 mass % or more, preferably 10 mass % or more, particularly 20 mass % or more, or 30 mass % or more, or 40 mass % or more, or 50 mass % or more, or 60 mass % or more, or 70 mass % or more, or 80 mass % or more, or 90 mass % or more. On the other hand, the upper limit may preferably be, although not particularly limited to, typically 100 mass %, or 100 mass % or less. With respect to the total protein content in the composition, the ratio of the content of protein contained in pulse may satisfy the above range, or the ratio of the content of protein contained in cereal may satisfy the above range, or the ratio of the total content of protein contained in pulse and protein contained in cereal may satisfy the above range.

[PDI of protein]

The swollen composition of the present invention may preferably be characterized in that it contains a protein with low solubility, since it may provide the composition with pull and viscoelasticity characteristic of swollen food, with maintaining a texture that is easy to chew through. Although the principle behind this is unknown, it is deemed that the insolubilized protein affects the texture of starch. Specifically, the PDI (protein dispersibility index) value of the swollen composition of the present invention may preferably be 0 mass % or more but less than 55 mass %. Specifically, the upper limit for the PDI value may preferably be typically less than 55 mass %, or less than 50 mass %, or less than 45 mass %, or less than 40 mass %, or less than 35 mass %, or less than 30 mass %, or less than 25 mass %, or less than 20 mass %, or less than 15 mass %, or less than 10 mass %. On the other hand, the lower limit for the PDI value is not particularly limited, but may preferably be typically 0 mass % or more, or 1 mass % or more, or 2 mass % or more.

The protein dispersibility index (PDI) value herein refers to an index of protein solubility, and can be obtained as the percentage of the soluble nitrogen content to the total nitrogen content in the composition {(soluble nitrogen content in the composition)/(total nitrogen content in the composition) $\times$ 100 (%)} according to the standard method. Specifically, a sample to be measured is mixed with 20 times the volume of water and then crushed (using a Microtech Nichion NS-310E3 homogenizer at 8500 rpm for 10 minutes), and the total nitrogen content of the resulting crushed liquid is multiplied by 20 to determine the total nitrogen content of the entire composition. The crushing solution is then centrifuged (3000G for 10 minutes), and the total nitrogen content of the supernatant obtained is then multiplied by 20 to determine the water soluble nitrogen content, whereby the PDI value in the composition can be determined. The total nitrogen content is measured using the combustion method (improved Dumas method) specified in the Food Labeling Law ("About Food Labeling Standards" (March 30, 2015, Shokuhin Table No. 139)).

The protein contained in the swollen composition of the present invention may preferably be a protein that has undergone any processing treatment (e.g., ultrasonication treatment, shear kneading treatment, or heating treatment) (processed protein) rather than a naturally-occurring protein. The use of a processed protein may make the swollen composition of the present invention more elastic and/or stretchable, and may also make it easier to obtain the effects of the present invention. The processed protein may preferably be a protein that has been processed until some or all of the protein is in a denatured state. Denaturing treatments include heat treatment and electrical treatment. Specifically, the processed protein may preferably be a protein that has been heated (e.g., heated at a temperature of 60°C or higher, or 70°C or higher, or 80°C or higher) until the protein is thermally denatured. Although the principle behind this is unknown, such a processed protein may cross-link starch and other components and contribute to the development of the aggregate structure, which is thought to be composed of starch and protein in the swollen composition, to have a desirable shape and size. Although not limitative, such a processed protein may be prepared by isolating protein from pulse and/or cereal as a pure product before being processed and incorporated in the composition, or alternatively, it may be prepared by processing pulse and/or cereal containing protein without isolation before being incorporated in the composition.

In addition, while starch may preferably have undergone less processing to the extent that a certain ratio or more of starch grains remain as will be explained below, protein, may preferably have undergone a certain degree of processing (e.g., thermal denaturation at temperatures of 60 °C or more, or 70 °C or more, or 80 °C or more). Specifically, the ratio of the total content of processed proteins derived from pulse and/or cereal (preferably processed proteins derived from pulse) to the total protein content in the composition may preferably be within the range of typically 0 mass % or more, preferably 10 mass % or more, but typically 100 mass % or less. More specifically, its lower limit may preferably be typically 0 mass % or more, preferably 10 mass % or more, or 20 mass % or more, or 30 mass % or more, or 40 mass % or more, or 50 mass % or more, or 60 mass % or more, or 70 mass % or more, or 80 mass % or more, or 90 mass % or more, while the upper limit is not particularly limited, but may preferably be typically 100 mass %, or 100 mass % or less.

When the swollen composition of the present invention contains a processed protein, such a processed protein may have undergone some processing treatment while contained in pulse and/or cereal (preferably in pulse). Specifically, the ratio of the total content of processed proteins contained in pulse and/or cereal (preferably processed proteins contained in pulse) to the total protein content in the composition may preferably be within the range of typically 0 mass % or more, preferably 10 mass % or more, and typically 100 mass % or less. More specifically, its lower limit may preferably be typically 0 mass % or more, preferably 10 mass % or more, or 20 mass % or more, or 30 mass % or more, or 40 mass % or more, or 50 mass % or more, or 60 mass % or more, or 70 mass % or more, or 80 mass % or more, or 90 mass % or more, while the upper limit is not particularly limited, but may preferably be typically 100 mass %, or 100 mass % or less. When the swollen composition of the present invention contains a processed protein, the total content of processed proteins derived from pulse and/or cereal may satisfy the above range, and the total content of processed proteins contained in pulse and/or cereal may satisfy the above range.

When processing protein (preferably by heat treatment), an isolated pure product may be processed, or a food ingredient containing protein may be processed. However, since starch may preferably have undergone less processing to the extent that a certain ratio or more of starch grains remain as will be explained below, an isolated pure product of protein may preferably be processed alone. Examples of the methods for processing treatment include: isolating protein from pulse, processing it, and then mixing it with an edible plant that has been separately subjected to micronization.

Although not limitative, typically 50 mass % or more, or 60 mass % or more, or 70 mass % or more, or 80 mass % or more, or 90 mass % or more, or 100 mass % of each of the starch and protein in the swollen composition of the present invention may preferably be derived from pulse and/or cereal, more preferably derived from the same species of pulse and/or cereal, still more preferably derived from the same individual of pulse and/or cereal. In addition, although not limitative, typically 50 mass % or more, or 60 mass % or more, or 70 mass % or more, or 80 mass % or more, or 90 mass % or more, or 100 mass % of each of the starch and protein in the swollen composition of the present invention may preferably be used in the state of being contained in an edible plant (which may preferably be, although is not limited to, pulse and/or cereal).

The protein content in a swollen composition herein can be measured by, e.g., quantifying the total amount of nitrogen according to the combustion method (improved Dumas method) specified in the Food Labeling Law ("About Food Labeling Standards" (Consumer Food Indication No. 139 dated March 30, 2015))," and then multiplying the total amount of nitrogen with the "nitrogen-protein conversion factor."

*Pulse:

When pulse is used as edible plant in the swollen composition of the present invention, preferable examples of pulse species that can be used include, although not limited to, one or more selected from Pisum, Phaseolus, Cajanus, Vigna, Vicia, Cicer, Glycine, and Lens species, more preferably from Pisum, Phaseolus, Cajanus, Vigna, Vicia, Cicer, and Lens species. Specific examples of pulse species include, although not limited to: peas (in particular, yellow peas, white peas, and green peas, which are immature seeds), kidney beans, red kidney beans, white kidney beans, black beans, pinto beans, toramame (a variation of kidney beans: concord paul), lima beans, scarlet runner beans, pigeon peas, mung beans, cowpeas, azuki beans, broad beans (vicia faba), soybeans (especially edamame, which are immature seeds of soybeans harvested with their pods in their immature state and characterized by the green appearance of the beans), chickpeas, lentils, blue peas, scarlet runner beans, peanuts, lupin beans, glass peas, locust beans (carob), twisted cluster beans, African locust beans, coffee beans, cacao beans, and Mexican jumping beans. Other classifications of foodstuffs not exemplified can be naturally understood by those skilled in the art who deal with the foodstuffs or processed products of the foodstuffs. Specifically, this can be clearly understood by referring to the food group classifications (p. 249, Table 1) in the Japan Standard Tables for Food Composition 2015 (7th revised edition), which are also widely used in everyday aspects of life in the general household. These pulse species may be used either any one singly or in any combination of two or more.

The pulse to be used for the swollen composition of the present invention may preferably have a starch content of a predetermined value or more. Specifically, the starch content in the pulse may preferably be within the range of 3 mass % or more but 80 mass % or less in terms of wet mass basis. More specifically, the lower limit may preferably be typically 3 mass % or more, more preferably 5 mass % or more, or 10 mass % or more, or 12 mass % or more, or 15 mass % or more, or 18 mass % or more, or 20 mass % or more. On the other hand, the upper limit of the starch content in the pulse may be, although not particularly limited to, typically 80 mass % or less, or 75 mass % or less, or 70 mass % or less.

When pulse is used for the swollen composition of the present invention, it is preferable to use mature pulse rather than immature pulse seeds (e.g. green peas, which are immature pea seeds, or edamame, which are immature soybean seeds), because the proportion of the intermediate molecular weight fraction (molecular weight log 6.5 to 8.0) of starch in the composition increases. For the same reason, it is preferable to use pulse which is in a state where the dry mass basis moisture content is a predetermined value or less as they mature. Specifically, the dry mass basis moisture content in the pulse to be used for the composition of the present invention may preferably be within the range of 0 mass % or more but less than 15 mass %. More specifically, the upper limit may preferably be typically less than 15 mass %, particularly less than 13 mass %, or less than 11 mass %, or less than 10 mass %. On the other hand, the lower limit of the dry mass basis moisture content of the pulse may be, although not particularly limited to, typically 0 mass % or more, or 0.01 mass % or more.

*Cereal:

The term "cereal" used herein refers to general cereal species but excluding rice, wheat and barley, which are main cereal species, and the concept of cereal includes so-called pseudo-cereals other than those belonging to Poaceae family (Acanthaceae, Ascomycota). When cereal is used in the composition of the present invention, preferable examples of pulse species that can be used include, although not limited to, one or more selected from Poaceae, Chenopodiaceae, and Amaranthaceae species, more preferably from Poaceae species. Specific examples include, although not limited to, awa (foxtail millet), hie (Japanese millet), kibi (common millet), sorghum, rye, oats, hatomugi (job's tear), corn, buckwheat, amaranthus, and quinoa (quinua). It is particularly desirable to use one or more of oats, amaranthus and quinoa (quinua), more preferably oats, which contain high levels of soluble dietary fiber. Cereal may preferably be substantially gluten-free (specifically, with a gluten content of less than 10 ppm by mass), more preferably gluten-free.

The cereal to be used for the swollen composition of the present invention may preferably have a starch content of a predetermined value or more. Specifically, the starch content in the cereal may preferably be within the range of 3 mass % or more but 80 mass % or less in terms of wet mass basis. More specifically, the lower limit may preferably be typically 3 mass % or more, more preferably 5 mass % or more, or 10 mass % or more, or 12 mass % or more, or 15 mass % or more, or 18 mass % or more, or 20 mass % or more. On the other hand, the upper limit may preferably be, although not particularly limited to, typically 80 mass % or less, or 75 mass % or less, or 70 mass % or less.

When cereal is used for the swollen composition of the present invention, it is preferable to use dried cereal, because the proportion of the intermediate molecular weight fraction (molecular weight log 6.5 to 8.0) of cereal in the composition increases. For the same reason, it is preferable to use cereal which is in a state where the dry mass basis moisture content is a predetermined value or less as they mature. Specifically, the dry mass basis moisture content in the cereal to be used for the swollen composition of the present invention may preferably be within the range of 0 mass % or more but less than 15 mass %. More specifically, the upper limit may preferably be typically less than 15 mass %, particularly less than 13 mass %, or less than 11 mass %, or less than 10 mass %. On the other hand, the lower limit of the dry mass basis moisture content of the cereal may be, although not particularly limited to, typically 0 mass % or more, or 0.01 mass % or more.

*Contents of pulse and/or cereal:

When pulse is used for the swollen composition of the present invention, the pulse content in the composition of the present invention may preferably be within the range of, although not limited to, 1 mass % or more but 100 mass % or less, in terms of wet mass basis. More specifically, the lower limit may preferably be typically 1 mass % or more, or 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, or 95 mass % or more. On the other hand, the upper limit may preferably be, although not particularly limited to, typically 100 mass %, or 100 mass % or less.

When cereal is used for the swollen composition of the present invention, the cereal content in the composition of the present invention may preferably be within the range of, although not limited to, 1 mass % or more but 100 mass % or less, in terms of wet mass basis. More specifically, the lower limit may preferably be typically 1 mass % or more, or 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, or 95 mass % or more. On the other hand, the upper limit may preferably be, although not particularly limited to, typically 100 mass %, or 100 mass % or less.

When pulse and/or cereal is used for the composition of the present invention, the total content of pulse and/or cereal in the composition of the present invention may preferably be within the range of, although not limited to, 1 mass % or more but 100 mass % or less, in terms of wet mass basis. More specifically, the lower limit may preferably be typically 1 mass % or more, or 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, or 95 mass % or more. On the other hand, the upper limit may preferably be, although not particularly limited to, typically 100 mass %, or 100 mass % or less.

*Particle diameters of pulse and/or cereal:

When pulse and/or cereal is used for the swollen composition of the present invention, it is preferable to use pulse and/or cereal in the form of powder. Specifically, it is preferred to use pulse and/or cereal powder which, when measured using a laser diffraction particle size analyzer after ultrasonication, has a particle diameter $d_{90}$ and/or $d_{50}$ which each satisfy a predetermined upper limit or less.

Specifically, the particle diameter $d_{90}$ of the pulse powder after ultrasonication may preferably be within the range of 0.3 $\mu$m or more but less than 500 $\mu$m. More specifically, the upper limit may preferably be typically less than 500$\mu$m, more preferably 450 $\mu$m or less, particularly 400 $\mu$m or less, or 350 $\mu$m or less, or 300 $\mu$m or less, or 275 $\mu$m or less, or 250 $\mu$m or less, or 225 $\mu$m or less, or 200 $\mu$m or less, or 175 $\mu$m or less, or 150 $\mu$m or less, or 125 $\mu$m or less, or 100 $\mu$m or less, or 90 $\mu$m or less, or 80 $\mu$m or less, or 70 $\mu$m or less, or 60 $\mu$m or less, or 50 $\mu$m or less. On the other hand, the lower limit may preferably be, although not particularly limited to, typically 0.3 $\mu$m or more, or 1 $\mu$m or more, or 5 $\mu$m or more, or 8 $\mu$m or more, or 10 $\mu$m or more, or 15 $\mu$m or more.

Likewise, the particle diameter $d_{50}$ of the pulse powder after ultrasonication may preferably be within the range of 0.3 $\mu$m or more but less than 500 $\mu$m. More specifically, the upper limit may preferably be typically less than 500$\mu$m, more preferably 450 $\mu$m or less, particularly 400 $\mu$m or less, or 350 $\mu$m or less, or 300 $\mu$m or less, or 250 $\mu$m or less, or 200 $\mu$m or less, or 150 $\mu$m or less, or 100 $\mu$m or less, or 90 $\mu$m or less, or 80 $\mu$m or less, or 70 $\mu$m or less, or 60 $\mu$m or less, or 50 $\mu$m or less. On the other hand, the lower limit may preferably be, although not particularly limited to, typically 0.3 $\mu$m or more, or 1 $\mu$m or more, or 5 $\mu$m or more, or 8 $\mu$m or more, or 10 $\mu$m or more.

Especially if the above size of the composition is a certain upper limit or more, the composition surface may become non-uniform. Therefore, it is preferable to use powdered pulse and/or cereal, preferably pulse, with a size of the above-mentioned upper limit or less. When the aforementioned powdered pulse and/or powdered cereal is used, the powdered pulse and/or powdered cereal may be bound together in the resulting swollen composition while retaining their shape, or the pulse and/or cereal powder may be melted and blended together in the resulting swollen composition during processing.

*Dietary fiber-localized part of pulse and/or cereal:

The swollen composition of the present invention may preferably contain part of pulse and/or cereal in which dietary fiber (which includes both soluble dietary fiber and insoluble dietary fiber) is localized. Specifically, the ratio of dietary fiber-localized part of pulse and/or cereal (e.g., seed skin of pulse and bran of cereal) to the total mass of the swollen composition in terms of wet mass basis may preferably be within the range of 0.1 mass % or more but 20 mass % or less. More specifically, its lower limit may preferably be typically 0.1 mass % or more, more preferably 0.2 mass % or more, or 0.3 mass % or more, or 0.4 mass % or more, or 0.5 mass % or more, or 1.0 mass % or more, or 1.5 mass % or more. On the other hand, the upper limit may preferably be, although not limited to, typically 20 mass % or less, or 15 mass % or less, or 10 mass % or less, or 7.5 mass % or less, or 5.0 mass % or less.

In addition to edible part of pulse and/or cereal, the swollen composition of the present invention may more preferably contain part of edible plant in which dietary fiber (which includes both soluble dietary fiber and insoluble dietary fiber) is localized. Specifically, in the swollen food composition of the present invention, the total content ratio of the edible part of pulse and/or cereal and the dietary fiber-localized part of edible plant, preferably the total content ratio of the edible part of pulse and the dietary fiber-localized part of edible plant, more preferably the total content ratio of the edible part of pulse and the dietary fiber-localized part of pulse, may preferably be within the range of 1 mass % or more but 95 mass % or less. More specifically, its lower limit in terms of wet mass basis may preferably be 1 mass % or more, more preferably 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, or 45 mass % or more, particularly 50 mass % or more. On the other hand, the upper limit of the content ratio may be, although is not limited to, typically 95 mass % or less, or 93 mass % or less, preferably 90 mass % or less. In addition to dietary fiber-localized part of edible plant, the swollen composition may preferably contain one or more of seed skin of pulse, seed skin of psyllium, and bran of cereal at a predetermined ratio along with edible part thereof, more preferably both the edible part and the dietary fiber-localized part belonging to the same species of food (e.g., an edible part of pulse and seed skin of the pulse as its dietary fiber-localized part, or an edible part of cereal and bran of the cereal as its dietary fiber-localized part). Dietary fiber-localized part of pulse and/or cereal may be incorporated into the swollen composition either by using pulse and/or cereal containing dietary fiber-localized part as such or by using dietary fiber-localized part isolated from pulse and/or cereal. The dietary fiber-localized part may be insoluble dietary fiber-localized part, and the total content ratio of edible part of pulse and/or cereal and insoluble dietary fiber-localized part of edible plant may preferably satisfy the above ratio. Both edible part of pulse and/or cereal and dietary fiber-localized part of edible plant may preferably be micronized together and incorporated into the swollen composition as micronized pulse and/or micronized cereal.

The dietary fiber-localized parts may be insoluble dietary fiber-localized parts satisfying the above requirements. The dietary fiber-localized parts may include at least psyllium husk, and may have undergone the enzyme treatment (e.g., xylanase treatment and/or pectinase treatment) explained above.

Especially in the case of swollen compositions produced by a method that does not involve fermenting the dough, it may be preferable to incorporate into the composition the seed coat of pulse at the above ratio as the dietary fiber-localized part (more specifically, the insoluble dietary fiber-localized part) to improve the dough's spreadability when water is added, thereby providing the composition with properties that make it easier to swell in step (ii) of the production method as will be described below. This is especially preferred since the resulting composition will have pores such that the ratio of a weighted average area of the pores to a weighted average perimeter of the pores {(weighted average area)/(weighted average perimeter)} is within a predetermined range, as will be explained below. The dough composition may also preferably contain the seed skin of edible wild plant psyllium (also referred to as psyllium seed skin or psyllium husk) as a dietary fiber-localized part (more specifically, a localized part in which soluble dietary fiber and insoluble dietary fiber are localized) at the ratio mentioned above, especially when the production process includes the step of fermentation the dough composition, since the swelling of the dough composition at step (ii) is promoted. Specifically, the dough composition may preferably contain psyllium seed skin which has undergone enzyme treatment (preferably with cellulase and/or pectinase and/or xylanase, especially with at least pectinase or xylanase) at the ratio mentioned above. This is especially preferred since the resulting composition will have pores such that the ratio of a weighted average area of the pores to a weighted average perimeter of the pores {(weighted average area)/(weighted average perimeter)} is within a predetermined range, as will be explained below. The dough composition may more preferably contain both pulse seed skin and psyllium seed skin (especially enzyme-treated psyllium seed skin). In this case, the total content of pulse seed skin and psyllium seed skin may preferably satisfy the ratio mentioned above.

[Enzyme treatment]

The swollen composition of the present invention may preferably contain, as dietary fiber-localized part of pulse and/or cereal, dietary fiber-localized part having undergone enzyme treatment. Examples of enzyme treatments may include, although are not limited to, treatments of dietary fiber-localized part with one or more enzymes selected from cellulase, pectinase, and xylanase, preferably at least pectinase and/or xylanase. When treatment is carried out using pectinase, it may be preferable to also use cellulase in combination with pectinase for treating dietary fiber-localized part.

Specifically, any enzyme that has cellulolytic enzyme activity can be used as a cellulase. Examples of cellulases that can be used include Cellulase T "Amano" 4, which is manufactured by Amano Enzyme Inc., and Cellulase A "Amano" 3, which is manufactured by Amano Enzyme Inc. Any enzyme that has pectinolytic enzyme activity can be used as a pectinase. Examples of pectinases that can be used include Pectinase G "Amano" ("Pectinase" in Table 3 below), which is manufactured by Amano Enzyme Inc. Any enzyme that has xylan degradative enzyme activity can be used as xylanase, for example, hemicellulase "Amano" 90 (xylanase) ("Xylanase" in Table 3 below), which is manufactured by Amano Enzyme Inc. However, cellulase, pectinase, and xylanase are not limited to these specific examples, and any other enzymes with desired substrate degradation characteristics can be used. When degrading two or more substrates, a mixture of two or more enzymes with activity to degrade each of those substrates may be used, or an enzyme with activity to degrade two or more of those substrates may be used.

The swollen composition of the present invention may contain dietary fiber-localized part of pulse and/or cereal either as a separated product or in the form of a dietary fiber-containing food material containing dietary fiber-localized part. However, it may preferably contain both dietary fiber-localized part and other part of the same species of food material, more preferably both dietary fiber-localized part and other part of the same individual of pulse and/or cereal. The dietary fiber-containing food material of the same species or the same individual containing dietary fiber-localized part of pulse and/or cereal may either contain the dietary fiber-localized part and the other part of pulse and/or cereal separately, or contain a food material containing the dietary fiber-localized part. The dietary fiber-localized part may also be insoluble dietary fiber-localized part satisfying the above requirement.

The term "dietary fiber-localized part" as used herein refers to a part of a food ingredient (edible plant) such as pulse and/or cereal which has a relatively higher content ratio of dietary fiber compared to the edible part of the same food ingredient. For example, the dietary fiber-localized part may have a content ratio of dietary fiber in a drying state which is typically 1.1 times or more, or 1.2 times or more, or 1.3 times or more, or 1.4 times or more, or 1.5 times or more, or 1.6 times or more, or 1.7 times or more, or 1.8 times or more, or 1.9 times or more, or 2.0 times or more of that of the edible part. For example, a dietary fiber-localized part (more specifically, insoluble dietary fiber-localized part) of pulse is its seed skin, which has a relatively higher content ratio of dietary fiber than the dietary fiber content ratio than its edible part (cotyledon). A dietary fiber-localized part (more specifically, insoluble dietary fiber-localized part) of cereal is its bran, which has a relatively higher content ratio of dietary fiber than the dietary fiber content ratio than its edible part. A dietary fiber-localized part (more specifically, soluble dietary fiber- and insoluble dietary fiber-localized part) of edible wild plant psyllium is its seed skin (psyllium seed skin or psyllium husk). Among them, psyllium seed skin is particularly favorable from a nutritional point of view, since it contains soluble dietary fiber in addition to insoluble dietary fiber.

The dietary fiber-localized part or insoluble dietary fiber-localized part used in the present invention may be either a part of an "edible part" of a food ingredient (edible plant) such as pulse and/or cereal (e.g., one or more selected from seeds or skin of cereals, pulses, nuts, vegetables (especially pulse seed skin), the seed skin of psyllium, and bran of cereals) or a "non-edible part" of a food ingredient (e.g., corn cores and bean pods), but may preferably be a part of an "edible part" of a food ingredient, more preferably at least one of pulse seed skin, psyllium seed skin, and cereal bran, more preferably either pulse seed skin or psyllium seed skin, most preferably both pulse seed skin and psyllium seed skin.

Examples of dietary fiber-localized parts include "discarded parts" of various food ingredients described in the Japan Standard Tables for Food Composition 2015 (7th revised edition) (examples are shown in Table A). However, other than these "non-edible parts," dietary fiber-localized parts can also be found in "edible parts," such as seeds or skin of cereals, pulses, nuts, vegetables, and particularly hard and thick parts of the stem and leaf parts of vegetables.

The term "non-edible part" of a food ingredient (edible plant) such as pulse and/or cereal herein refers to a part of a food ingredient which is normally not suitable for eating or drinking or which is discarded under normal eating practices, and the term "edible part" herein refers to a part of a food ingredient other than the discarded parts (non-edible parts). Specific non-edible parts and their ratios in food ingredient used in the present invention, i.e., food ingredients containing dietary fiber and/or other food ingredients (which do not contain dietary fiber) are naturally understood by those skilled in the art who deal with these food ingredients or processed products of these food ingredients. For example, reference can be made to the "discarded parts" and "discarded ratios" the Japan Standard Tables for Food Composition 2015 (7th revised edition), and these can be treated as the parts and percentages of inedible parts respectively. The parts and ratios of inedible parts in food ingredients can also provide information about the parts and ratios of edible parts.

[Table A]

| Edible plants | Position of non-edible portion (refused portion) | Ratio of non-edible portion (refuse) |
|---|---|---|
| Vegetables/Edamame/Raw | Pod | 45% |
| Vegetables/(Corns)/Sweet corn/ Immature seeds, raw | Bract, pistil, and cob | 50% |
| Vegetables/(Pumpkins)/ Japanese pumpkin/ Fruit, raw | Pulp, seeds, and ends | 9% |
| Vegetables/(Peppers)/Red pepper/ Fruit, raw (Paprika) | Hull, core, and seeds | 10% |
| Vegetables/Beet/Root, raw | Root tip, peel, and petiole | 10% |
| Vegetables/Broccoli/ Inflorescence, raw | Foliage | 50% |
| Vegetables/(Tomatoes)/Tomato/ Fruit, raw | Hull | 3% |
| Vegetables/(Cabbages)/Cabbage/ Heading leaves, raw | Core | 15% |
| Vegetables/Spinach/Leaves, raw | Rootstock | 10% |
| Vegetables/Kale/Leaves, raw | Petiole base | 3% |

(continued)

| Edible plants | Position of non-edible portion (refused portion) | Ratio of non-edible portion (refuse) |
|---|---|---|
| Vegetables/(Peas)/Green peas/Raw | Pod | 55% |
| Vegetables/Broad bean/ Immature bean/Raw | Coat and pod | 80% |
| Vegetables/(Carrots)/ Root, unpeeled, raw | Root tip and petiole base | 3% |

The dietary fiber content in a dietary fiber-localized part in terms of dry mass basis may preferably be, although is not limited to, within the range of more than 8 mass % but 50 mass % or less. More specifically, the lower limit may preferably be typically more than 8 mass %, or more than 9 mass %, or more than 10 mass %, or more than 11 mass %, or more than 12 mass %, or more than 13 mass %, or more than 14 mass %, or more than 15 mass %, or more than 16 mass %, or more than 17 mass %, or more than 18 mass %, or more than 19 mass %, or more than 20 mass %. The upper limit is not particularly restricted, but may preferably be typically 50 mass % or less, or 40 mass % or less, or 30 mass % or less.

Some of the requirements relating to the composition of the present invention in terms of dry mass basis, such as the requirements relating to the raw material contents and nutritional ingredients, may also be satisfied by the dough composition at step (i) and/or step (ii), since these parameters may not change depending on the presence or absence of moisture or before or after any treatment. The dietary fiber-localized part may also be insoluble dietary fiber-localized part, and the content ratio of insoluble dietary fiber may satisfy the above requirement.

When dietary fiber-localized part is incorporated in the swollen composition of the present invention, it may preferably be used as a micronization-processed product. This will be explained in the section concerning the production method of the present invention below.

*Other raw materials:

The swollen composition of the present invention may further contain any one or more food ingredients. Examples of such food ingredients include plant ingredients (edible plants other than pulse and/or cereal, specifically vegetables, potatoes, mushrooms, fruits, algae, grains, seeds, etc.), animal ingredients (seafood, meat, eggs, milk, etc.), and microbial food products. Wild plants normally used for dietary purpose as vegetables (e.g., psyllium, warabi (common bracken or eagle fern), fuki (butterbur or sweet-coltsfoot), and yomogi (Japanese mugwort or first wormwood)) can also be used. The amount of these food ingredients can be set appropriately as long as they do not undermine the purpose of the present invention.

The swollen composition of the present invention may contain any one or more seasonings, food additives, etc., or the contents of these seasonings may be limited as explained above. Examples of seasonings and food additives include: soy sauce, miso (Japanese fermented soybean paste), alcohols, sugars (e.g., glucose, sucrose, fructose, glucose-fructose liquid sugar, glucose-fructose liquid sugar, etc.), sugar alcohols (e.g., xylitol, erythritol, maltitol, etc.), artificial sweeteners (e.g., sucralose, aspartame, saccharin, acesulfame K, etc.), minerals (e.g., calcium, potassium, sodium, iron, zinc, magnesium, etc., and their salts), flavoring agents, pH adjusters (e.g., sodium hydroxide, potassium hydroxide, lactic acid, citric acid, tartaric acid, malic acid and acetic acid), cyclodextrins, antioxidants (e.g., vitamin E, vitamin C, tea extract, green coffee bean extract, chlorogenic acid, spice extract, caffeic acid, rosemary extract, vitamin C palmitate, rutin, quercetin, peach extract, sesame extract, etc.), emulsifiers (e.g., glycerin fatty acid esters, acetic acid monoglycerides, lactic acid monoglycerides, citric acid monoglycerides, diacetyl tartaric acid monoglycerides, succinic acid monoglycerides, polyglycerin fatty acid esters, polyglycerin condensed linosylate esters, chiraya extracts, soybean saponins, chia seed saponins, sucrose fatty acid esters, lecithin, etc.), colorants, thickening stabilizers, etc.

However, in view of the recent increase in nature consciousness, the swollen composition of the present invention may preferably be characterized in that the content of at least one type of additives selected from the so-called emulsifiers, colorants, and thickening stabilizer (e.g., those listed in the "Table of food additive substance names for labeling" section of the "Pocket Book of Food Additives Labeling (2011 edition)" as "colorants," "thickening stabilizers," and "emulsifiers") is typically 1.0 mass % or less, particularly 0.5 mass % or less, or 0.1 mass % or less, particularly substantially zero (specifically, it represents a content of less than 1 ppm, which is the lower limit of the general measurement method), or zero. It is more preferred that the content of each of at least two types of additives selected from the so-called emulsifiers, colorants, and thickening stabilizer is typically 1.0 mass % or less, particularly 0.5 mass % or less, or 0.1 mass % or less, particularly substantially zero (specifically, it represents a content of less than 1 ppm, which is the lower limit of the general measurement method), or zero. It is still more preferred that the content of each of the so-called emulsifiers, colorants, and thickening stabilizer is typically 1.0 mass % or less, particularly 0.5 mass % or less, or 0.1 mass % or less, particularly substantially zero (specifically, it represents a content of less than 1 ppm, which is the lower limit of the general measurement method), or zero.

*Oil and fat content:

The swollen composition of the present invention may preferably be characterized in that the ratio of the liquid oil and fat content to the total oil and fat content in the composition is within a predetermined range. Specifically, the ratio of the liquid oil and fat content to the total oil and fat content in the swollen composition of the present invention may preferably be within the range of 20 mass % or more but 100 mass % or less. More specifically, its lower limit may preferably be typically 20 mass % or more, more preferably 30 mass % or more, or 40 mass % or more, or 50 mass % or more, or 60 mass % or more, or 70 mass % or more, or 80 mass % or more, or 90 mass % or more. On the other hand, its upper limit is not particularly limited, but may preferably be typically 100 mass %, or 100 mass % or less. The term "liquid oil and fat" as used herein refers to oil and fat in the state of liquid at ordinary temperature (20°C).

The origin of the oil and fat content in the swollwn composition of the present invention is not particularly restricted. Examples include plant-derived oils and fats and animal-derived oils and fats, of which plant-derived oils and fats are preferred. Specifically, the ratio of the content of plant-derived oils and fats in the whole composition may preferably be within the range of 50 mass % or more 100 mass % or less. More specifically, the lower limit may preferably be typically 50 mass % or more, particularly 60 mass % or more, or 70 mass % or more, or 80 mass % or more, or 90 mass % or more. On the other hand, the upper limit may preferably be, although not particularly limited to, typically 100 mass %, or 100 mass % or less. Examples of plant-derived oil and fat content include those derived from general cereals (particularly from specific cereals), those derived from pulse (beans), those derived from potatoes, those derived from vegetables, those derived from nuts, and those derived from fruits, among which olive-derived oil and fat and rice-derived oil and fat are preferred.

The oil and fat content incorporated in the swollen composition of the present invention may be in the form of an isolated pure product or may be present in the state of being contained in edible plant (particularly pulse and/or cereal, preferably pulse), although the ratio of the oil and fat content present in the state of being contained in edible plant is law. Specifically, the ratio of the oil and fat content incorporated in pulse to the total protein content of the composition may preferably be within the range of 0 mass % or more but less than 65 mass %. More specifically, the upper limit may preferably be typically less than 65 mass %, particularly less than 60 mass %, or less than 50 mass %, or less than 40 mass %, or less than 30 mass %. On the other hand, the lower limit may preferably be, although not particularly limited to, typically 0 mass %, or 0 mass % or more.

*Alcohols:

The swollen composition of the present invention may preferably be characterized in that its alcohol content in terms of wet mass basis is equal to or lower than a predetermined ratio. When the alcohol content is equal to or lower than a predetermined ratio, the present invention tends to exhibit its effects sufficiently. Although the principle behind this is unknown, it is deemed that the higher the liquor content, the less likely it is that pores having specific shapes are formed. In particular, in the case of swollen compositions produced by a method that involves fermentation of the dough (especially fermentation with yeast), it is not desirable if the alcohol content exceeds a certain percentage, as this will result in fermentation failure. Specifically, the alcohol content in the swollen composition of the present invention in terms of wet mass basis may preferably be within the range of 0 % or more but 10 % or less. More specifically, its upper limit may preferably be typically 10 % or less, particularly 9 % or less, or 8 % or less, or 7 % or less, or 6 % or less, or 5 % or less, or 4 % or less, or 3 % or less, or 2 % or less, or 1 % or less. On the other hand, although its lower limit is not particularly limited, from the viewpoint of industrial productivity, it may preferably be typically 0%, or 0 % or more.

*Gluten:

The swollen composition of the present invention may preferably be characterized in that it is substantially gluten-free (specifically, it represents a content of less than 1 ppm, which is the lower limit of the general measurement method), or gluten-free. The swollen composition of the present invention is especially useful since it can exhibit a unique swollen-food texture even when it is substantially gluten-free. It is also useful because it softens the hardening of the resulting composition due to cooling and retains pores with specific shapes even after cooling.

*Sodium chloride:

The swollen composition of the present invention may preferably be substantially free or free of sodium chloride. Conventional solid paste compositions for heat cooking (especially those containing gluten in a network structure) retain compositional elasticity by containing sodium chloride, but have problems in terms of affecting the taste and resulting in excessive salt intake. These challenges were particularly pronounced in compositions in the dry state (e.g. dried udon noodles, dried hiyamugi noodles, etc.), where more than 3 mass% sodium chloride is usually used to maintain compositional elasticity. On the other hand, the composition of the present invention is preferable because it exhibits reduced elasticity loss and has a good quality even with a very limited amount of, or without the addition of, sodium chloride. The invention is also preferred for specific types of solid paste compositions for heat cooking such as pasta, udon noodles and bread, which normally have adhesion and elasticity due to the network structure gluten and sodium chloride, as the invention can be applied to produce a composition of good quality without the addition of sodium chloride.

Specifically, the sodium chloride content in the swollen composition of the present invention may preferably be within the range of 0 mass % or more but 5 mass % or less in terms of dry mass basis. More specifically, the upper limit may preferably be typically 5 mass % or less, or 4 mass % or less, or 3 mass % or less, or 2 mass % or less, or 1 mass % or less, or 0.7 mass % or less, or 0.5 mass % or less. The lower limit of the sodium chloride content in the swollen composition of the present invention is not particularly restricted, and may be 0 mass %. In the present invention, the sodium chloride content in a solid paste composition may be determined, for example, according to the "Salt equivalent" section in the Japan Standard Tables for Food Composition 2015 (7th revised edition), by measuring the amount of sodium using the atomic absorption method and multiplying the measured amount by 2.54.

*Wheats:

The swollen composition of the present invention may preferably be characterized in that the wheat content in the composition is within a predetermined rang. Specifically, the wheat content in the swollen composition of the present invention may preferably be within the range of 0 mass % or more but 50 mass % or less, in terms of wet mass basis. More specifically, the upper limit may preferably be typically 50 mass % or less, particularly 40 mass % or less, or 30 mass % or less, or 20 mass % or less, or 10 mass % or less, particularly substantially zero (specifically, it represents a content of less than 1 ppm, which is the lower limit of the general measurement method), or zero. The swollen composition of the present invention is especially useful since it exhibits pull or viscoelasticity characteristic of swollen food even when its wheat content ratio is equal to these upper limits or less. On the other hand, the lower limit of the ratio may be, although not particularly limited to, typically 0 mass %, or 0 mass % or more.

The swollen composition of the present invention may preferably be characterized in that the content ratio of wheat-derived protein to the total protein content in the composition is within a predetermined range. Specifically, the content ratio of wheat-derived protein to the total protein content in the composition may preferably be within the range of 0 mass % or more 50 mass % or less. More specifically, the upper limit may preferably be typically 50 mass % or less, particularly 40 mass % or less, or 30 mass % or less, or 20 mass % or less, or 10 mass % or less, particularly substantially zero (specifically, it represents a content of less than 1 ppm, which is the lower limit of the general measurement method), or zero. The swollen composition of the present invention is especially useful when the content ratio of wheat-derived protein to the total protein content is equal to these upper limits or less since it exhibits pull or viscoelasticity characteristic of swollen food even when its wheat content is relatively law. On the other hand, the lower limit of the ratio may be, although not particularly limited to, typically 0 mass %, or 0 mass % or more.

*Features relating to pores in a frozen section:

The swollen composition of the present invention may preferably be characterized in that when the composition is frozen at -25 °C and cut along a cut plane A into a frozen section A with a thickness of $20\mu$m, the frozen section A has pores satisfying the following requirements.

The swollen composition of the present invention may preferably be characterized in that when the frozen section A of the composition is prepared, the ratio of the weighted average area [$\mu$m$^2$] of pores in the section to the weighted average perimeter [$\mu$m] of pores in the section, i.e., {(weighted average area [$\mu$m$^2$])/(weighted average perimeter [$\mu$m])}, is within a predetermined range. When this ratio satisfies this requirement, the swollen composition of the present invention is more likely to exhibit the effects of the present invention. Although the principle behind this is unknown, it is deemed that when the ratio is adjusted to be within a predetermined range, methionol is more likely to be retained in pores having specific shapes, facilitating the suppression of powdery odor and/or the retention of good aroma. Specifically, when pores with an area of 10000 $\mu$m$^2$ or more in the frozen section A of the composition are observed, the ratio of the weighted average area [$\mu$m$^2$] of the pores to the weighted average perimeter [$\mu$m] of the pores, i.e., {(weighted average area [$\mu$m$^2$])/(weighted average perimeter [$\mu$m])}, may preferably be within the range of typically 100 or more, while the upper limit may preferably be, although is not particularly limited to, 10000 or less. More specifically, its lower limit may preferably be typically 100 more, preferably 130 or more, or 180 or more, or 250 or more, or 300 or more, or 320 or more, or 490 or more, or 570 or more, or 600 or more, or 700 or more, or 800 or more, or 900 or more, or 1000 or more, or 1100 or more, or 1300 or more, or 1500 or more, or 1800 or more, or 2000 or more. On the other hand, its upper limit is not particularly limited, but may preferably be typically 10000 or less, or 9000 or less, or 8000 or less, or 7000 or less, or 6000 or less.

The swollen composition of the present invention may preferably be characterized in that when the frozen section A of the composition is prepared, the ratio of the total area of pores is higher than a predetermined ratio. When this ratio is higher than a predetermined ratio, the swollen composition of the present invention is more likely to exhibit the effects of the present invention. Although the principle behind this is unknown, it is deemed that when the ratio is adjusted to be within a predetermined range, methionol is more likely to be retained in pores having specific shapes, facilitating the suppression of powdery odor and/or the retention of good aroma. Specifically, when the frozen section A of the swollen composition of the present invention is observed, the ratio of the total area pores with areas exceeding 10000 $\mu m^2$ to the area of the cross-section of the frozen section A of the composition may preferably be, although is not limited to, within the range of more than 1.0 % but 80 % or less. More specifically, its lower limit may preferably be typically more than 1.0 %, more preferably 1.4 % or more, or 1.7 % or more, or 1.8 % or more, or 2.0 % or more, or 2.5 % or more, or 3.0 % or more, or 3.5 % or more, or 4.0 % or more, or 4.5 % or more, or 5.0 % or more, or 6.0 % or more, or 8.0 % or more, or 10.0 % or more, or 11.0 % or more. On the other hand, its upper limit is not particularly limited, but may preferably be typically 80 % or less, or 70 % or less, or 60 % or less.

The swollen composition of the present invention may more preferably be characterized in that when the frozen section A of the composition is prepared, closed pores (the definition of which will be explained later) satisfy various features relating to porosity. Specifically, the swollen composition of the present invention may be characterized in that the ratio of the total area of closed pores to the area of the composition in a cross-section image of the frozen section of the composition A, i.e., {(the total area of closed pores)/(the area of the composition)}, may be within the range of more than 1 % but 90 % or less. More specifically, its lower limit may preferably be typically more than 1 %, or more than 2 %, or more than 3 %, or more than 4 %, or more than 5 %, or more than 6 %, or more than 7 %, or more than 8 %, or more than 9 %, or more than 10 %, or more than 11 %, or more than 12 %, or more than 13 %, or more than 14 %, or more than 15 %, or more than 20 %, or more than 30 %. On the other hand, the upper limit of the total ratio of closed pores is not particularly limited, but may preferably be typically 90 % or less, or 80 % or less.

In the frozen section A of the swollen composition of the present invention, the ratio of the total area of closed pores to the total area of all pores, i.e., {(the total area of closed pores)/(total area of pores)}, may preferably be, although is not limited to, within the range of 20 % or more but 100 % or less. More specifically, its lower limit may preferably be typically 20 % or more, or 30 % or more, or 40 % or more, or 50 % or more, from the viewpoint of improved swelling ability. On the other hand, its upper limit is not particularly limited, but may preferably be typically 100 % or less, or 90 % or less.

In the frozen section A of the swollen composition of the present invention, the ratio of the total area of closed pores to the total area of the cross-section image area of the frozen section A may preferably be, although is not limited to, within the range of more than 1 % but 50 % or less. More specifically, its lower limit may preferably be typically more than 1 %, or more than 2 %, or more than 3 %. On the other hand, its upper limit is not particularly limited, but may preferably be typically 50 % or less, or 40 % or less, or 30 % or less.

The swollen composition of the present invention may more preferably be characterized in that when the frozen section A of the composition is prepared, the ratio of the total area of pores with an aspect ratio of 3.5 or more and a degree of circularity factor of 0.3 or more to the cross-section image area of the frozen section A is, although not limited, higher than a predetermined ratio. When this ratio is higher than a predetermined ratio, the swollen composition of the present invention is more likely to exhibit the effects of the present invention. Although the principle behind this is unknown, it is deemed that when the ratio is adjusted to be within a predetermined range, methionol is more likely to be retained in pores having specific shapes, facilitating the suppression of powdery odor and/or the retention of good aroma. Specifically, in the swollen composition of the present invention, the ratio of the total area of pores with an aspect ratio of 3.5 or more and a degree of circularity factor of 0.3 or more to the cross-section image area of the frozen section A may be, although is not limited to, within the range of more than 0.002 % but 80 % or less. More specifically, its lower limit may preferably be more than 0.0020 %, or 0.0025 % or more, or 0.0030 % or more, or 0.0035 % or more, or 0.0040 % or more, or 0.0045 % or more, or 0.0050 % or more, or 0.0055 % or more, or 0.0060 % or more, or 0.0065 % or more, or 0.0070 % or more, or 0.0075 % or more. On the other hand, its upper limit is not particularly limited, but may preferably be typically 80 % or less, or 70 % or less, or 60 % or less.

In the present invention, the geometrical characteristics of pores in a composition can be determined based on a two-dimensional cross-sectional image of the composition (e.g., an X-ray CT scan image, which allows non-destructive evaluation of the composition's internal pore shapes). Specifically, an image can be acquired and evaluated as a two-dimensional cross-sectional image by a digital camera.

In the present invention, the "perimeter" of a certain pore in a composition represents the value obtained by calculating the length of the rounded corners of the pore on a two-dimensional cross-sectional image of the composition in terms of the number of pixels, with the length of one side of a pixel as "one pixel." Pores that do not have intricate internal contours have smaller "perimeters." Specifically, the "perimeter" of a pore is calculated by, in principle, summing up, among the pixels that make up the pore image (2 pixels × 2 pixels or more), the number of pixels that are not in contact with other pixels and form the contour of the pore. However, as an exception, for pixels that are in contact with other pixels only on two orthogonal sides, the diagonal length is calculated as the number of pixels to round off the corners. Accordingly, a composition having pores with small irregularities have a relatively large pore area relative to their perimeter, resulting in a relatively large ratio of { (weighted average area)/(weighted average perimeter)}.

The "area" of a certain pore in a frozen section of a composition as used herein refers to an area equivalent to the total number of pixels constituting the pore on a two-dimensional cross-sectional image of the composition. All pixels overlapping the contour of the pore shall be counted as pixels constituting the pore.

The "aspect ratio" a certain pore in a frozen section of a composition as used herein refers to "{the longest diameter of each pore image} divided by {the distance between two straight lines parallel to the longest diameter of each pore and tangent to the contour of the pore}".

The term "closed pore" in a frozen section of a composition as used herein refers to "a pore surrounded by a single contour, without interruption, and separated from the rest of the frozen section of the composition. In other words, if the contour of a pore is broken by the contour of the cross-section of the frozen section of the composition even at one point, the pore is open to the outside and does not correspond to a "closed pore." Where the contour of a pore is tangent to the periphery of the cross-sectional image of the frozen section, the contour of the pore shall be considered to be continuous.

In the present invention, the "weighted average perimeter" of the pores in a frozen section of a composition can be calculated using the perimeter value of each pore as a weight, and the "weighted average area" of the pores in the frozen section of the composition can be calculated using the area of each pore as a weight. Specifically, the percentage of the measured value (pore area and pore perimeter) for each pore is calculated when the total of the measured values (pore area and pore perimeter) for all pores is 100. The percentage of each pore is further multiplied by the measured value (pore area and pore perimeter) of the pore as a weight. This multiplied value is calculated for each pore {(the square of the measured value of each pore) / (the sum of the measured values of all pores)}, and the sum of the calculated values of all pores is determined as the weighted average value. For any of the above parameters related to the shapes of pores, when analyzing a magnified image, the respective values can be converted to actual values by converting an image of known length (scale bar, etc.) into pixels.

A more specific method for determining the "weighted average perimeter" and "weighted average area" of pores in a frozen section of a composition is described below, taking a two-dimensional cross-sectional image of the composition obtained by a digital camera as an example. An image of a cross-sectional section of a compositional frozen section (e.g., 5 cm long, 5 cm wide, 2 cm high) is captured by, e.g., RX100III (DSC-RX100M3), manufactured by SONY, Inc. More specifically, images of three spots (e.g., 5 cm × 5 cm square) at different shooting angles are captured by, e.g., SONY RX100III (DSC-RX100M3). From the images thus obtained, a two-dimensional cross-sectional image (magnification magnified equally, pixel count 2,736 × 1,824) is generated and acquired.

The resulting image is grayscaled and binarized, and all pixel sets each of which consists of pixels that are white-cut (i.e., pixels corresponding to pores in the original photo) and are connected to each other at any of their four sides and is independent of other pixel sets are extracted as "pores," and their shapes, etc. are evaluated. Binarization is carried out using a discriminant analysis method to determine a threshold value so as to maximize the variance ratio of the within-class variance and between-class variance for the background and pattern regions when binarized. Specifically, the grayscaled image can be binarized using Particle Analysis ver. 3.5 (Nittetsu Technology, Inc.). Next, these pixel aggregates are screened for those that overlap in whole or in part on the outer edges of the field of view, and the remaining pixel aggregates are selected for analysis. If there are independent black pixels inside the set of white pixels (i.e., if there are spot-like dots, etc. inside the pore in the image), the area is calculated ignoring such pixels. For the selected pores, the pore perimeters and pore areas can be measured and calculated by the above procedure as parameters related to the shape of the pore area. The measurement and calculation of these parameters can be performed using various known image analysis software that can analyze shapes in an image.

When measuring porosity, etc., frozen sections prepared by the aforementioned method are imaged of the composition cross section using, for example, SONY's RX100III (DSC-RX100M3). More specifically, for example, images of three spots (e.g., 5 cm × 5 cm square) at different shooting angles are captured by the RX100III (DSC-RX100M3) manufactured by SONY. From the images thus obtained, a two-dimensional cross-sectional image (magnification magnified equally, pixel count 2,736 × 1,824) is generated and acquired. The total porosity and other properties of the interior of the composition can be measured by analyzing the images thus obtained. Specifically, the vertices of adjacent convexities in the composition image are connected by line segments so that they do not intersect the composition image at the shortest distance to draw an envelope perimeter. The envelope area surrounded by the obtained envelope perimeter (the number of pixels surrounded by the envelope perimeter) is then calculated, and the composition area (the number of pixels constituting the image of the solid composition other than pores, etc.) from the obtained envelope area to obtain the difference (total pore area). The ratio of this difference to the composition area (total pore area/composition area) is calculated as the total pore ratio. Accordingly, the term "pores" used herein refers to a concept that encompasses both open and closed pores.

The swollen composition of the present invention may preferably satisfy each of the above provisions regarding porosity, etc. of the aforementioned composition frozen section A at least for the frozen section A1 at any cut plane A1, more preferably at least for both the frozen section A1 at any cut plane A1 and the frozen section A2 at a cut plane A2 that is orthogonal to the cut plane A1. The cut plane A1 may preferably be a cut plane orthogonal to the longitudinal axis of the composition. In this case, the cut plane A2 may be any cut plane as long as it is orthogonal to the cut plane A1, which is orthogonal to the longitudinal axis of the composition, although the cut plane A2 may preferably be a cut plane parallel to the longitudinal axis of the composition. Thus, the characteristics of the entire composition can be evaluated more accurately by evaluating both the frozen section A1 at the cut plane A1 of the composition and the frozen section A2 at the cut plane A2, which is orthogonal to the cut plane A1. When there are multiple longitudinal axes of the composition, any cut plane can be used as the cut plane A1 and its orthogonal cut plane can be used as the cut plane A2.

The "longitudinal axis" of a frozen section of a composition herein refers to a longitudinal direction of a hypothetical rectangle with a minimum volume inscribed in the composition, while the "transverse axis" of a frozen section of a composition herein refers to a line perpendicular to the longitudinal axis. In cases where there are multiple longitudinal directions of the composition, any direction can be adopted.

*Features relating to molecular weight distribution by gel filtration chromatography:*

The swollen composition of the present invention may preferably be characterized in that when the composition is subjected to [Procedure b] below and the resulting product is subjected to measurement under [Condition B] below to obtain a molecular weight distribution curve in an interval with molecular weight logarithms of 3.5 or more but less than 6.5 (hereinafter referred to as "$MWDC_{3.5-6.5}$"), the following features are satisfied.

[Procedure b] The composition is crushed, and an ethanol-insoluble and dimethyl sulfoxide-soluble component is obtained.

[Condition B] The treated product from [Procedure b] is dissolved in 1M aqueous solution of sodium hydroxide at a concentration of 0.30 mass % and allowed to stand at 37 °C for 30 minutes, then combined with an equal volume of water and an equal volume of eluent and subjected to filtration with a 5-$\mu$m filter, and 5mL of the filtrate is then subjected to gel filtration chromatography to thereby obtain a molecular weight distribution.

Specifically, the swollen composition of the present invention may preferably be characterized in that when the composition is subjected to [Procedure b] below and the resulting product is subjected to measurement under [Condition B] below to obtain a molecular weight distribution curve $MWDC_{3.5-6.5}$, a logarithm of the mass average molecular weight (hereinafter also referred to simply as "mass average molecular weight") calculated from the molecular weight distribution curve and the ratio of the area under the curve in an interval with molecular weight logarithms of 5.0 or more but less than 6.5 to the area under the entire curve (the area under the curve of a molecular weight distribution curve in an interval with molecular weight logarithms of 3.5 or more but less than 6.5) (hereinafter also referred to as "$AUC_{5.0}$" or "Value $\beta$") satisfy predetermined conditions.

The terms "molecular weight distribution" or "molecular weight distribution curve" used herein refers to a distribution diagram obtained by plotting the logarithms of molecular weights on the horizontal axis (x-axis) and the percentage (%) of the measured value at each logarithm of molecular weight against the total RI detector measured values over the entire measurement range on the vertical axis (y-axis). In addition, when the composition is subjected to the [Procedure b] above and ingredient and the resulting product is analyzed under the [Condition B] below to determine a molecular weight distribution curve, the area under the curve is calculated from the molecular weight distribution curve as follows. That is, after numerically correcting the entire curve so that the lowest value in the measurement range is 0, the area under the curve is calculated by plotting the logarithms of molecular weights on the horizontal axis (X-axis) with even intervals. This allows proper evaluation of the low molecular weight fraction (the fraction around $MWDC_{3.5-6.5}$), which has a large quality effect but is underestimated in molecular weight conversion. Furthermore, using the property that the molecular weight logarithm is proportional to the elution time, each elution time is converted to a mass molecular weight logarithmic value (also referred to as the molecular weight logarithm or the mass molecular weight logarithm). Conversion of the elution time (more specifically, the elution time obtained by analysis at an oven temperature of 40°C, at a flow rate of 1 mL/min, and with a unit time of 0.5 seconds) to the molecular weight logarithm in this manner allows for measurement data in which the molecular weight logarithms are distributed at even intervals.

[Procedure b]

[Procedure b] is a procedure in which the composition is subjected to pulverization (or pulverization and degreasing treatment), and then an ethanol-insoluble and dimethyl sulfoxide-soluble ingredient is obtained. The technical significance of the [Procedure b] is to prevent column blockage during gel filtration chromatography and improve the accuracy and reproducibility of the analysis by obtaining a component that has been purified using the ethanol-insoluble and dimethyl sulfoxide-soluble properties of starch and has an increased starch concentration (also referred to as "the product from the treatment of [Procedure b] above").

The method for crushing the composition after thermostatic treatment in this [Procedure b] may be any method that can sufficiently homogenize the composition, an example of which is to crush the composition at 25,000 rpm for 30 seconds using a homogenizer NS52 (Microtech Nichion, Inc.).

When a composition with a particularly high lipid content (e.g., a composition with a total oil content of at least 10 mass % or more in terms of dry mass, particularly at least 15 mass % or more, particularly at least 20 mass % or more in terms of dry mass) is subjected to this [Procedure b], it may optionally be preferable to carry out degreasing treatment with hexane from the viewpoint of preventing column blockage. Such treatment may be performed, e.g., by (i) treating the pulverized composition with 20 times the volume of hexane (CAS 110-54-3, FUJIFILM Wako Pure Chemicals Co.) followed by mixing, and then (ii) centrifuging the mixture (at 4300 rpm for 3 min: with a swing rotor) to remove the supernatant. It is preferable to perform the above steps (i) to (ii) twice from the viewpoint of not leaving residual fats and oils.

The extraction of ethanol-insoluble and dimethyl sulfoxide-soluble components from the pulverized composition (or pulverized defatted composition) in this [Procedure b] is not limited, but may be carried out, for example, as follows. (i) After having undergone pulverizing and optional degreasing treatment, the composition is mixed with 32 times the volume of dimethyl sulfoxide (CAS 67-68-5, FUJIFILM Wako Pure Chemicals Co.) based on the initial volume of the crushed composition. The mixture is dissolved by isothermal treatment at 90°C for 15 minutes with stirring, and the dissolved solution after isothermal treatment is centrifuged (at 12,000 rpm for 3 minutes using an angle rotor). The resulting supernatant (Dimethyl sulfoxide solution in which the dimethyl sulfoxide soluble component in the composition is dissolved; hereinafter also referred to as "dimethyl sulfoxide solution") is collected to obtain dimethyl sulfoxide solution. Next, (ii) the resulting dimethyl sulfoxide solution is mixed with three times the volume of 99.5% ethanol, and the mixture is centrifuged (at 4300 rpm for 3 minutes using a swinging rotor). The precipitate fraction is collected as the ethanol-insoluble component. Then, (iii) the above (ii) is repeated three times, and the final precipitate obtained is dried under reduced pressure, whereby the ethanol-insoluble and dimethyl sulfoxide-soluble component can be obtained from the crushed composition (or crushed and degreased composition).

[Condition B]

The [Condition B] means a procedure in which the product from the treatment of [Procedure b] above is dissolved into 1M aqueous solution of sodium hydroxide at a concentration of 0.30 mass %, allowed to stand at 37 °C for 30 minutes, mixed with an equal volume of water and an equal volume of eluent (e.g., 0.05M NaOH/0.2% NaCl), and then subjected to filtration with a 5-$\mu$m filter. 5mL of the filtrate is then subjected to gel filtration chromatography, and a molecular weight distribution in an interval with molecular weight logarithms of 3.5 or more but less than 6.5 is measured.

The technical significance of this [Condition B] is to prevent column blockage during gel filtration chromatography by removing insoluble coarse foreign matter from starch dissolved in water under alkaline conditions by filtration, thereby improving the accuracy and reproducibility of the analysis.

The swollen composition of the present invention may preferably be characterized in that when the composition is subjected to [Procedure b] below and the resulting product is subjected to measurement under [Condition B] below to obtain a molecular weight distribution curve in an interval with molecular weight logarithms of 3.5 or more but less than 6.5 ($MWDC_{3.5-6.5}$), the following features are satisfied.

The swollen composition of the present invention may preferably be characterized in that according to the molecular weight distribution curve $MWDC_{3.5-6.5}$, the ratio of an area under the curve in an interval with molecular weight logarithms of 5.0 or more but less than 6.5 to the area under the entire curve ($AUC_{5.0}$) is within a predetermined range. Specifically, $AUC_{5.0}$ of the swollen composition of the present invention may preferably be, although not limited to, within the range of 1 % or more but 70 % or less. More specifically, its upper limit may preferably be typically 70 % or less, particularly 67 % or less, or 65 % or less, or 63 % or less, or 61 % or less, or 59 % or less, or 57 % or less, or 55 % or less, or 53 % or less, or 51 % or less, or 50 % or less, or 48 % or less. On the other hand, its lower limit is not particularly limited, but may preferably be typically 1 % or more, or 5 % or more, or 10 % or more. Although the reason for this is unknown, it is deemed that the percentage of amylose in the starch (which is presumably contained in a fraction in an interval with molecular weight logarithms of 3.5 or more but less than 6.5) with relatively high molecular weight is smaller than a predetermined value, which facilitates volatilization of aroma components retained in the starch network, and that the percentage of amylose with relatively low molecular weights derived from pulse and/or cereal is smaller than a predetermined value, which leads to an even more desirable quality.

The swollen composition of the present invention may preferably be characterized in that when the composition is subjected to [Procedure b] below and the resulting product is subjected to measurement under [Condition B] below to obtain a molecular weight distribution curve in an interval with molecular weight logarithms of 3.5 or more but less than 8.0 (MWDC$_{3.5-8.0}$), the following features are satisfied.

The swollen composition of the present invention may preferably be characterized in that according to the molecular weight distribution curve MWDC$_{3.5-8.0}$, the ratio of the area under the curve in an interval with molecular weight logarithms of 3.5 or more but less than 5.0 to the area under the entire curve (hereinafter also referred to as "AUC$_{3.5}$") is within a predetermined range. Specifically, AUC3.5 of the swollen composition of the present invention may preferably be within the range of 5 % or more but 100 % or less. More specifically, its lower limit may preferably be typically 5 % or more, more preferably 8 % or more, or 10 % or more, or 15 % or more, or 17 % or more, or 21 % or more, or 25 % or more. On the other hand, its upper limit is not particularly limited, but may preferably be typically 100 % or less. Although the reason for this is unknown, it is deemed that the percentage of amylopectin in the starch with relatively high molecular weights (which is presumably contained in a fraction in an interval with molecular weight logarithms of 6.5 or more but less than 9.5) that is degraded in part or all to dextrin with lower molecular weights (which is presumably contained in a fraction in an interval with molecular weight logarithms of 3.5 or more but less than 5.0) is greater than a predetermined value, which facilitates volatilization of aroma components retained in the starch network, and that dextrin derived from pulse and/or cereal makes the percentage to larger than a predetermined value, which leads to an even more desirable quality.

The swollen composition of the present invention the ratio of AUC$_{5.0}$ to AUC$_{3.5}$ ([AUC$_{5.0}$] / [AUC$_{3.5}$]) is within a predetermined range. Specifically, the ratio of [AUC$_{5.0}$] / [AUC$_{3.5}$] of the swollen composition of the present invention may be within the range of 20 % or more but less than 5000 %. More specifically, its lower limit may preferably be typically 20 % or more, more preferably 30 % or more, or 40 % or more, or 50 % or more, or 60 % or more, or 70 % or more, or 80 % or more, or 90 % or more, or 100 % or more. On the other hand, its upper limit is not particularly limited, but may preferably be typically less than 5000 %, or less than 3000 %, or less than 1000 %.

According to the present invention, the component obtained by treatment the composition according to [Procedure b] is subjected to gel filtration chromatography on the aforementioned filtrate obtained under [Condition b], and the molecular weight distribution in the interval between 3.5 and 6.5 in the molecular weight logarithm is measured. The resulting filtrate is then subjected to gel filtration chromatography to thereby determine a molecular weight distribution in an interval with molecular weight logarithms of 3.5 or more but less than 6.5. The thus-obtained molecular weight distribution curve is then analyzed after correcting the data so that the lowest value is zero, to thereby obtain the mass average molecular weight logarithm and AUC5.0 (the ratio of the area under the curve in an interval with molecular weight logarithms of 5.0 or more but less than 6.5 to the area under the entire molecular weight distribution curve in an interval with molecular weight logarithms of 3.5 or more but less than 6.5 MWDC$_{3.5-6.5}$). Gel filtration chromatography conditions may preferably be set appropriately such that these values can be obtained. Specifically, the signal intensity ratio for each molecular weight logarithm range is calculated using the total signal intensity (RI detector measurement) of the entire molecular weight distribution curve in the interval with interval with molecular weight logarithms of 3.5 or more but less than 6.5 as the denominator, and the mass-averaged molecular weight is calculated by multiplying the molecular weights converted from the molecular weight logarithms over the entire interval by the signal intensity percentage and then summing the multiplied values. AUC3.5 can be determined in a similar manner using the molecular weight distribution curve in an interval with molecular weight logarithms of 3.5 or more but less than 8.0 MWDC$_{3.5-8.0}$, as the ratio of the area under the curve in an interval with molecular weight logarithms of 3.5 or more but less than 5.0 to the area under the entire curve. Gel filtration chromatography conditions may preferably be set appropriately such that these values can be obtained. Specifically, the signal intensity ratio for each molecular weight logarithm range is calculated using the total signal intensity (RI detector measurement) of the entire molecular weight distribution curve in the interval with interval with molecular weight logarithms of 3.5 or more but less than 8.0 as the denominator, and the mass-averaged molecular weight is calculated by multiplying the molecular weights converted from the molecular weight logarithms over the entire interval by the signal intensity percentage and then summing the multiplied values.

For this reason, in the present invention, it is preferable to use the combination of a gel filtration column having a molecular exclusion limit (Da) logarithm on the relatively high molecular weight side (molecular weight logarithm of 6.5 or more but less than 8.0) and a gel filtration column having a molecular exclusion limit (Da) logarithm on the relatively low molecular weight side (molecular weight logarithm of 3.5 or more but less than 6.5) as gel filtration columns for gel filtration chromatography. It is more preferable to adopt a column configuration in which these plural gel filtration columns with different molecular exclusion limits within the aforementioned ranges are connected in series (in tandem) from the one with the highest molecular exclusion limit to the one with the lowest, in order from the upstream of analysis. Such a column configuration allows for the starch with molecular weight logarithms of 6.5 or more but less than 8.0 to be separated from the smaller starch with molecular weight logarithms of 3.5 or more but less than 6.5, and for each parameter to be measured appropriately.

A specific example of such a combination of gel filtration columns is the following combination of four columns connected in tandem.

*TOYOPEARL HW-75S (made by Tosoh Co., exclusion limit molecular weight (logarithm):7.7Da, average pore diameter 100 nm or more, $\Phi$2cm × 30cm): two columns.
*TOYOPEARL HW-65S (made by Tosoh Co., exclusion limit molecular weight (logarithm):6.6Da, average pore diameter 100 nm, $\Phi$2cm × 30cm): one column.
*TOYOPEARL HW-55S (made by Tosoh Co., exclusion limit molecular weight (logarithm):5.8Da, average pore diameter 50 nm, $\Phi$2cm × 30cm): one column.

The eluting agent for gel filtration chromatography may be, although not restricted, 0.05M NaOH/0.2% NaCl.
The conditions for gel filtration chromatography may be, although not restricted, such that the analysis can be carried out at an oven temperature of 40°C, at a flow rate of 1 mL/min, and with a unit time of 0.5 seconds.
The detection equipment for gel filtration chromatography may be, although not restricted, an RI detector (RI-8021 manufactured by Tosoh Co., Ltd.).
Data analysis methods for gel filtration chromatography are not limited, but specific examples include the following. Measurement values obtained from the detection instrument within the molecular weight logarithmic range to be measured (i.e., 3.5 or more but less than 6.5) are corrected so that the lowest value within the measurement range is zero. A calibration curve is prepared from the peal top elution times of two linear standard pullulan markers for size exclusion chromatography with a peak top molecular weight of 1660000 and a peak top molecular weight of 380000 (e.g., P400 (DP2200, MW380000) and P1600 (DP9650, MW1660000), both manufactured by Showa Denko Co.). Using the property that the molecular weight logarithm is proportional to the elution time, each elution time is converted to a mass molecular weight logarithmic value (also referred to as the molecular weight logarithm or the mass molecular weight logarithm). Conversion of the elution time (more specifically, the elution time obtained by analysis at an oven temperature of 40°C, at a flow rate of 1 mL/min, and with a unit time of 0.5 seconds) to the molecular weight logarithm in this manner allows for measurement data in which the molecular weight logarithms are distributed at even intervals. In addition, the sum of the measurement values obtained at all elution times within a given molecular weight logarithmic range (e.g., 3.5 or more but less than 6.5) of the measurement target is set at 100, and the measured value at each elution time (molecular weight log) is expressed as a percentage. This allows for the molecular weight distribution of the measured sample (X-axis: molecular weight logarithm, Y-axis: percentage (%) of the measured value at each molecular weight logarithm to the total of the measurement values from the RI detector over the entire measurement range) to be calculated, and for a molecular weight distribution curve to be created. AUC3.5 in a molecular weight logarithm range (3.5 or more but less than 8.0) as a measurement subject can be determined in a similar manner.

*Features relating to the content ratio of methionol:

The swollen composition of the present invention may preferably contain methionol (Methionol, CAS.No.505-10-2, also referred to as 3-(methylthio)-1-propanol, or aroma ingredient A, or Value $\alpha$) at a predetermined value or more in terms of wet mass basis. When containing methionol a predetermined value or more in terms of wet mass basis, the swollen composition of the present invention tends to exhibit the effects of the present invention more easily. Specifically, the methionol content in terms of wet mass basis may preferably be within the range of 0.01 ppb or more but 50000 ppb or less. More specifically, its lower limit may preferably be, although is not limited to, typically 0.01 ppb or more, or 0.1 ppb or more, or 1 ppb or more, or 5 ppb or more, or 10 ppb or more, or 15 ppb or more, or 20 ppb or more, or 25 ppb or more, or 30 ppb or more, or 35 ppb or more, or 40 ppb or more, or 50 ppb or more, or 60 ppb or more, or 70 ppb or more, or 80 ppb or more, or 90 ppb or more, or 100 ppb or more, or 110 ppb or more, or 130 ppb or more, or 150 ppb or more, or 170 ppb or more, or 190 ppb or more, or 250 ppb or more, or 300 ppb or more. On the other hand, its upper limit is not particularly limited, but may preferably be typically 50000 ppb or less, or 45000 ppb or less, or 40000 ppb or less, or 35000 ppb or less, or 30000 ppb or less, or 25000 ppb or less, or 20000 ppb or less, or 15000 ppb or less, or 10000 ppb or less. If the methionol content is too high, its aroma may be too prominent.
The swollen composition of the present invention may be characterized in that the ratio of the wet mass basis content of methionol (ppb) (also referred to as "Value $\alpha$") to $AUC_{5.0}$ (also referred to as "Value $\beta$") { (Value $\alpha$)/(Value $\beta$)} is within a predetermined range. The smaller the positive Value $\beta$ (close to 0) and the larger the positive Value $\alpha$ (far from 0), the larger the ratio (Value $\alpha$)/(Value $\beta$). Although not limited, the ratio (Value $\alpha$)/(Value $\beta$) may preferably be a predetermined value or more. When this condition is satisfied, the swollen composition of the present invention is likely to exhibit the effects of the present invention more prominently. Although the principle behind this is unknown, it is deemed that the percentage of amylose in the starch with relatively high molecular weights (which is presumably contained in a fraction in an interval with molecular weight logarithms of 3.5 or more but less than 6.5) that is degraded in part or all to amylose with lower molecular weights is greater than a predetermined value, which facilitates volatilization of the aroma components retained in the starch network, making it easier to suppress powdery odors and/or retain good aroma. Specifically, the ratio (Value $\alpha$)/(Value $\beta$) of the swollen composition of the present invention may preferably be within the range of typically 0.3 or more, while the upper limit may preferably be, although is not particularly limited to, 5000

or less. More specifically, its lower limit may preferably be typically 0.3 or more, preferably 0.5 or more, or 1.0 or more, or 1.6 or more, or 1.9 or more, or 2.0 or more, or 2.2 or more, or 2.5 or more, or 2.8 or more, or 3.0 or more, or 3.1 or more, or 3.3 or more, or 4.0 or more, or 6.0 or more, or 10 or more. On the other hand, its upper limit is not particularly limited, but may preferably be typically 5000 or less, or 4000 or less, or 3000 or less, or 2000 or less, or 1000 or less. The specific ranges of Value α and Value β are as explained above.

The swollen composition of the present invention may preferably be characterized in that according to the DHS-GC/MS and PFPD methods, the ratio of the peak area of 2-(methylthio)ethanol (CAS.No.5271-38-5, hereinafter also aroma ingredient B) to the peak area of methionol (hereinafter also referred to as "the peak aroma ratio between (aroma ingredient A)/(aroma ingredient B)") is within a predetermined range. This feature is preferable since it will help exhibit the effects of the present invention more prominently. Specifically, the peak aroma ratio between (aroma ingredient A)/(aroma ingredient B) may preferably be within the range of 0.1 or more but 100 or less. More specifically, its lower limit may preferably be typically 0.1 or more, or 0.3 or more, or 0.5 or more, or 0.8 or more, or 1.0 or more, or 1.2 or more, or 1.5 or more. On the other hand, the upper limit may preferably be typically 100 or less, or 90 or less, or 80 or less, or 70 or less, or 60 or less, or 50 or less, or 40 or less, or 30 or less, or 20 or less, or 10 or less.

In the present invention, various parameters such as contents and peak areas of ingredients such as methionol and 2-(methylthio)ethanol can be measured in accordance with an established metho, by means of dynamic headspace-gas chromatography/mass spectrometry (hereinafter also referred to as "DHS-GC/MS") and pulsed flame photometric detection (PFPD) method. Specifically, a sample of the swollen composition is processed (usually at 1000 rpm for about 15 seconds) using, for example, a small Hiscotron (homogenizer NS-310E3 manufactured by Microtek Nithion) until it reaches a porridge-like consistency treatment, and then subjected to analysis by DHS-GC/MS and PFPD methods.

The DHS-GC/MS method is a method in which a measurement sample is volatilized by the DHS (dynamic headspace) method (a dynamic extraction method in which volatile components in the gas phase are forcibly purged with inert gas and collected on an adsorbent), followed by measurement by gas chromatography mass spectrometry (GS/MS). The same method is also used to analyze other components. As a specific procedure, for example, a small amount (1 g) of sample can be measured into a 10-mL flat-bottomed vial, sealed, and volatilized by nitrogen gas purge, then introduced into a gas chromatography analyzer for analysis by adsorption with an adsorption resin (such as Tenax column) appropriate for the nature of the analyzed component and processed by a heat desorption system. In order to measure the content of a component in a sample, the sample and a standard sample diluted to a desired content are analyzed, the confirmatory ion peak area or PFPD peak area values of both samples are ascertained, and the values are compared to determine the content of the relevant component in the sample.

After the above analysis, a portion of the sample is subjected to a mass spectrometer to obtain a mass spectrum, and the retention time of the component is confirmed with the component-related ions (methionol: m/z = 61, 73, 106; 2-(methylthio)ethanol: m/z = 61, 62, 92). A quadrupole type 5977 Mass Selective Detector (Agilent) is used as the mass spectrometer (MS). Ionization method and ionization voltage are performed under the conditions of ionization method: EI+, ionization voltage: 70 eV. Results are captured in scan mode, and mass spectral analysis can be performed by identifying ions characteristic of the components (methionol: m/z = 61, 73, 106; 2-(methylthio)ethanol: m/z = 61, 62, 92) using them as related ions, and by identifying the retention times when all these related ions are detected in the standard.

The term "m/z" as used herein refers to the value detected in the range of -0.3 to +0.7 at the m/z center value of each component. For example, m/z = 106 represents the cumulative ion peak area detected at 105.7 to 106.7.

The specific conditions for DHS-GC/MS analysis are, for example, as follows. This analysis may be referred to as "one-dimensional GC/MS analysis" in contrast to the two-dimensional GC/MS analysis described below.

[GC/MScondition ]

(Dynamic head space (dynamic headspace: DHS) injection method)

*Instrument: Agilent 7890B (GC), 5977B (MS)
Gester MultiPurpose Sampler (auto-sampler)
*Absorption resin: TENAX
*Incubation temperature: 80 °C
*Nitrogen gas purge amount: 60mL
*Nitrogen gas purge flow rate: 10mL/minute
*TDU: [30 °C] - [210 °C/minute] - [240 °C (3 minutes)]
*CIS: [10 °C] - [12 °C /second] - [240 °C]

(Liner filler: TENAX)

*Column: Gester DB-WAX (length: 30m x inner diameter: 250$\mu$m x membrane thickness: 0.25$\mu$m)
*Column temperature: [40 °C (3 minutes)]-[5 °C/minute]-[240 °C (7 minutes)]
*Carrier gas: He
*Transfer line: 250 °C
*Ion source temperature: 230 °C
*Scan parameter: m/z = 28.7 to 300
* Split: none

A portion of the sample is subjected to the pulsed flame photometric detection (PFPD) method to analyze the sulfur compounds in the sample, which can detect very low content of sulfur-containing compounds (e.g., methionol and 2-(methylthio)ethanol) in the sample. PFPD analysis can be carried out using a pulsed flame photometric detector. Any general pulsed flame photometric detector can be used, an example of which being OI Analytical 5380 Pulsed Flame Photometric Detector (OI Analytical, Inc.). Samples can be analyzed in S-mode (conditions optimized for sulfur).

Under the above conditions, known amounts of methionol (CAS No. 505-10-2, Tokyo Chemical Industry Co., Ltd., product code: M0735) and 2-(methylthio)ethanol (CAS No. 5271-38-5, Tokyo Chemical Industry Co. No. 5271-38-5, manufactured by Tokyo Kasei Kogyo, product code: M0358) are diluted in water to an appropriate concentration and added to the sample for analysis. The pulsed flame photometric detector can selectively detect only sulfur compounds by detecting light with a specific wavelength of 394 nm generated when a substance is burned in a reducing hydrogen flame, and can detect even extremely small amounts of sulfur components. It can be used to detect very small amounts of sulfur compounds based on its high selectivity. Methionol and 2-(methylthio)ethanol can be determined by combining the high sensitivity of the pulse flame photometric detector to detect sulfur components, qualitative analysis based on the mass spectral pattern of the mass spectrometer (the distribution of related ions (methionol: m/z = 61, 73, 106; 2-(methylthio)ethanol: m/z = 61, 62, 92) in the measured sample and in the reference sample are compared, and the retention time at which both related ions are significantly detected is certified as the retention time of each component.), and discrimination by aroma characteristics using odorant scent analysis.

Samples of methionol and 2-(methylthio)ethanol diluted in distilled water to known to appropriate contents and the measurement sample are subjected to analysis under the conditions described above. Although there are some deviations depending on the measurement conditions, analysis based on the mass spectral pattern of the mass spectrometer makes it possible to quantify the components in the sample by comparing the peak area integration results of the amount of confirmatory ions (methionol: m/z = 106; 2-(methylthio)ethanol: m/z = 92) between the diluted sample and the measurement sample near the retention time of the peak that seems to be the target component as well as the PFPD analysis, in comparison with the standard product retention time.

While the peak area value for the confirmatory ions can be calculated from the peak area value of the related ions, it is also possible to directly measure the peak area of the confirming ions. For example, the peak area value of m/z = 106, the confirmatory ions of methionol, can be calculated from the peak area value of m/z=73, the related ions of methionol, based on the mass spectral pattern (ratio of both ions) of the relevant component in a known mass spectral database (e.g., the mass spectral database of the National Institute of Standards and Technology (NIST)).

When adjusting the content of each component in a composition, the method of adjusting the content of the component by mixing two or more compositions with different content of the component can be adopted. All units (e.g., ppm, ppb) as used herein are numerical values calculated using weights as both the numerators and the denominators.

Furthermore, it is particularly desirable to perform one-dimensional GC/MS analysis under the above conditions and then perform two-dimensional gas chromatography using a column with different properties by heart-cutting around the retention time of the peak that is thought to be the target component, as this allows more precise quantification of the content of the component in question. Specifically, two-dimensional gas chromatography analysis can be performed under the following conditions. The retention time in the two-dimensional GC/MS analysis is calculated with the column temperature rise start point as 0 minutes, so the value will be different from that in the one-dimensional GC/MS analysis, but the retention time can be determined by comparing the analysis results with those of the standard product.

[Two-dimensional GC/MS conditions]

*CTS: [-150 °C]-[10 °C / seconds]-[250 °C]
*Column: Gester DB-5 (10 m x 180 $\mu$m x 0.4 $\mu$m)

*Column temperature: [40 °C (0 minute)] - [40 °C/ minute] - [240 °C (15 minutes)]
*Carrier gas: He

*Features relating to starch grain structures

The swollen composition of the present invention may preferably be characterized by having starch grain structures that have been disrupted or are easy to disrupt, since this feature may serve to form pores having specific shapes suitable for retaining good aroma. Specifically, the composition may preferably satisfy at least either, more preferably both, of the requirements below.

The swollen composition of the present invention may preferably be characterized in that the ratio of [Value $\delta$] / [Value $\gamma$] as measured in accordance with <Method c> below is a predetermined value or less.

[Value $\gamma$]: A breakdown viscosity (cP) during temperature increasing step (a1).
[Value $\delta$]: A peak viscosity (cP) during temperature decreasing step (a2).

<Method c>

As a measurement sample, 32 g of 22 mass % aqueous slurry of a crushed product of the composition is subjected to measurement using a rapid visco-analyzer with carrying out steps (a1) and (a2) below.

(a1) Temperature increasing step, in which the temperature of the measurement sample is increased from 50 °C to 95 °C at an increasing rate of 6 °C/min and then maintained for 3 minutes.
(a2) Temperature decreasing step, in which the temperature of the measurement sample is decreased from 95 °C to 50 °C at a decreasing rate of 6 °C/min.

Specifically, in the swollen composition of the present invention, the ratio of [Value $\delta$] / [Value $\gamma$] as measured under the conditions below may preferably be 0.1 or more but 1 or less. More specifically, its upper limit may preferably be typically 1 or less, or 0.95 or less, or 0.90 or less, while the lower limit is not particularly limited, but may preferably be typically 0.1 or more, or 0.2 or more, or 0.3 or more, or 0.4 or more, or 0.5 or more. In compositions having starch grain structures that are prone to decompose or collapse, breakdown is more likely to occur after the viscosity increases due to hydrolytic swelling of the starch grain structures, whereby the ratio of [Value $\delta$] / [Value $\gamma$] tends to increase. This feature is desirable because it makes it easier for the swollen composition of the present invention to form specific shaped pores and to retain good aroma.

The rapid visco-analyzer (RVA) is a device that measures the irreversible viscosity profile of a sample as it is stirred and heated up and down under a given temperature profile. Any device that can raise the temperature of the object to 140 °C can be used as the RVA, a specific example being RVA4800 manufactured by Perten. When RVA measurement is carried out with changing the temperature at an increasing rate of 6 °C/min, the breakdown viscosity (cP) during temperature increasing step (a1) (also referred to as [Value $\gamma$]) and the peak viscosity (cP) during temperature increasing step (a1) (also referred to as [Value $\delta$]) are measured specifically in accordance with the procedure below. A sample of the composition with a dry mass of 7.0g is pulverized (until it has a size of, e.g., 100 mesh pass (sieve opening: 150 $\mu$m) and 120 mesh on (sieve opening: 125 $\mu$m)), then placed in an aluminum cup for RVA measurement, combined with distilled water to prepare 22 mass % aqueous slurry of the sample (also referred to as "aqueous slurry of the crushed composition" or "sample aqueous slurry") with a total mass at 32g, and then subjected to the RVA viscosity measurement according to [Method c] above. The measurement of the 22 mass % aqueous slurry of the crushed composition is started at 50°C, and the revolving speed is set at 960 rpm from the start of measurement to 10 seconds after the start of measurement, and then at 160 rpm from 10 seconds after the start of measurement to the end of measurement. The temperature is retained at 50°C for one minute, then increased from 50 °C to 95 °C at an increasing rate of 6 °C/min as temperature increasing step (a1), and then retained at 95°C for 3 minutes, while the breakdown viscosity (cP) [Value $\gamma$] and the peak viscosity (cP) [Value $\delta$] are measured.

The term "breakdown" as used herein refers to the phenomenon wherein in the measurement of a subject using an RVA in accordance with [Method c], which includes the temperature increasing step (hereinafter also referred to as "step a1" or "a1") of increasing the temperature of the subject from 50 °C to 95 °C at an increasing rate of 6 °C/min and then maintaining it for 3 minutes, the viscosity decreases after reaching the maximum viscosity (cP) ([Value $\gamma$]). The term "breakdown viscosity (cP) ([Value $\delta$])" as used herein refers to the minimum viscosity (cP) after reaching [Value $\gamma$] until the end of measurement according to [Method c]. Therefore, if no viscosity reduction occurs from [Value $\gamma$], [Value $\gamma$] and [Value $\delta$] will be the same value, and if a slight viscosity reduction occurs, the ratio of [Value $\delta$] / [Value $\gamma$] will be close to 1.

The term "peak viscosity (cp)" ("Value $\delta$") as used herein refers to, when the differential value of viscosity transition as measured by RVA first increases and then decreases and then increases again during the temperature increase phase a1, the viscosity (cP) at which the differential value changes from increasing to decreasing, and typically refers to, when the viscosity as measured by RVA first increases and then decreases and then increases again during the temperature increase phase a1, the viscosity (cP) at which the viscosity changes from increasing to decreasing. This viscosity is an indicator that reflects the heat resistance of starch. For example, if the viscosity first shows an increasing trend, then remains constant but not decreases, and then increases again, the peak viscosity is the viscosity at the point when the differential value of viscosity transition changes from increasing to decreasing, that is, when the viscosity changes from increasing to remaining constant. However, even when the differential value of viscosity transition (or viscosity) turns from increasing to decreasing, if it can be evaluated, from the viscosity transition spectrum as a whole, as merely a change in the baseline, such as in the case when the differential value of viscosity transition (or viscosity) turns from decreasing to increasing again immediately after the decrease, such viscosity shall not be considered as peak viscosity.

The swollen composition of the present invention may preferably be characterized in that when its 6% suspension is observed, the number of starch grain structures is a predetermined value or less. Although the principle behind this is unknown, it is deemed that a composition that has starch grain structures that have been disrupted or are easy to disrupt is likely to retain methionol in its starch network to thereby suppress powdery odor.

Specifically, the swollen composition of the present invention may preferably be characterized in that when observed under the following conditions, the number of starch grain structures may be $0/mm^2$ or more but $300/mm^2$ or less. More specifically, its upper limit may preferably be typically $300/mm^2$ or less, or $250/mm^2$ or less, or $200/mm^2$ or less, or $150/mm^2$ or less, or $100/mm^2$ or less, or $50/mm^2$ or less, or $40/mm^2$ or less, or $30/mm^2$ or less, or $20/mm^2$ or less, or $10/mm^2$ or less, or $5/mm^2$ or less, while the lower limit is not particularly limited, but may preferably be typically $0/mm^2$, or $0/mm^2$ or more.

The starch grain structures recited in (a) above are iodine-stained structures with circular shapes of about 1 to 50 $\mu$m in diameter in a planar image, and can be observed, for example, by preparing 6% aqueous suspension of crushed product of the composition and observing its supernatant under magnified view. Specifically, 6% suspension of the composition powder is prepared by suspending 2.4 g of the composition in 40 mL of water (e.g., by treating with a homogenizer at 2000 rpm for 60 seconds). This suspension is then placed on a slide to obtain a prepared slide, which is observed under a phase contrast microscope with polarized light or under an optical microscope with iodine staining. The magnification factor is not restricted, but may be 100 times or 200 times. When the distribution of starch grain structures on the prepared slide is uniform, the percentage of starch grain structures in the entire prepared slide can be estimated by observing a representative field of view. On the other hand, when the distribution of starch grain structures on the prepared slide is found to be biased, a finite number of fields of view (e.g., two or more, e.g., five or ten) can be observed, and the observation results can be added together to obtain a measurement for the entire preparation.

[Storage]

The method for storing the swollen composition of the present invention is not limited, and may be either storage at ordinary temperature or refrigerated storage. It is particularly desirable to provide the composition as a dry grocery product that can be distributed at room temperature and stored for a long period of time (which refers herein to more than one week, more preferably more than one month), as it is less likely to deteriorate in quality. It is particularly desirable to make long-life storage swellings with a shelf life longer than one week (more preferably one month) at ordinary temperature. Although the principle behind this is unknown, it is deemed that adjusting the molecule size of amylose may help control the volatility of aroma ingredients retained in starch network, resulting in a composition with favorable flavor even after long-term storage.

Any container can be used for filling the swollen composition of the present invention. Examples include: containers for long-term storage at ordinary temperature with a shelf life longer than one month from manufacture; containers partially or wholly made of resin; multiple-use containers that can be used multiple times by sealing the container opening once opened; resealable containers with a mechanism such as a cap or stopper that can be resealed to the extent that the contents do not leak out; and even other containers that are susceptible to deterioration of the composition inside.

[Absorbance with iodine staining]

The swollen composition of the present invention may preferably be characterized by the following feature. The composition is subjected to the [Procedure b] above and the resulting product is subjected to separation under the [Condition B] above. A sample is then prepared from a separated fraction with molecular weight logarithms of 5.0 or more but less than 6.5 by adjusting the pH of the fraction to 7.0 and staining one mass part of the fraction with 9 mass parts of iodine solution (0.25mM). The resulting sample is then measured for an absorbance at 660 nm, and the measured value is then calibrated by subtracting it from the absorbance at 660 nm of a blank 0.25 mM iodine solution (which contains no sample), the resulting value (also referred to as "$ABS_{5.0-6.5}$") may preferably be within a predetermined range. Specifically, the $ABS_{5.0-6.5}$ of the swollen composition of the present invention may be within the range of 0.10 or more but 3.50 or less. More specifically, the lower limit may preferably be typically 0.10 or more, particularly 0.15 or more, or 0.20 or more, or 0.25 or more, or 0.30 or more, or 0.35 or more, or 0.40 or more, or 0.45 or more, or 0.50 or more, or 0.55 or more, or 0.60 or more, or 0.65 or more, or 0.70 or more, or 0.75 or more, or 0.80 or more. On the other hand, the upper limit may preferably be, although not particularly limited to, typically 3.50 or less, or 3.00 or less, or 2.50 or less.

The detailed measurement method for the aforementioned $ABS_{5.0-6.5}$ values is as follows. The composition is put into 40 times the volume of water, and then immediately (i.e., without carrying out isothermal treatment at 90°C for 15 minutes) treated according to the [Procedure b] above to obtain a purified and starch-concentrated ingredient. The purified and starch-concentrated ingredient is then separated under the [Condition B] above, and a separated fraction with molecular weight logarithms of 5.0 or more but less than 6.5 is collected. The details of the [Procedure b] and [Condition B] above have been described in detail above. The resulting separated fraction is then adjusted to pH 7.0 to prepare a sample, and one mass of the sample is put into 9 parts of 0.25 mM iodine solution at room temperature (20°C) for 3 minutes, and then subjected to absorbance measurement, which is performed as follows. Both an iodine solution before addition of the sample (control) and an iodine solution after addition of the sample are each measured for an absorbance (660 nm) with a conventional spectrophotometer (e.g., UV-1800 manufactured by Shimadzu Corp.) using a square cell with a 10 mm optical path length. The absorbance difference (i.e., {absorbance of iodine solution after addition of sample} minus {absorbance of iodine solution before addition of the sample}) is calculated and determined as $ABS_{5.0-6.5}$.

The swollen composition of the present invention may preferably be characterized in that the separated fraction with molecular weight logarithms of 5.0 or more but less than 6.5 mentioned above has high iodine stainability compared to a separated fraction with molecular weight logarithms of 6.5 or more but less than 8.0, which has relatively higher molecular weights. Specifically, the composition is put into 40 times the volume of water, and then immediately (i.e., without carrying out isothermal treatment at 90°C for 15 minutes) treated according to the [Procedure b] above to obtain purified starch. The purified starch is then separated under the [Condition B] above, and a separated fraction with molecular weight logarithms of 6.5 or more but less than 8.0 is obtained. The resulting separated fraction is then adjusted to pH 7.0 to prepare a sample, and one mass of the sample is put into 9 parts of 0.25 mM iodine solution for staining. The resulting sample is then measured for an absorbance at 660nm, and the measured value is then calibrated by subtracting it from the absorbance at 660 nm of a blank 0.25 mM iodine solution (which contains no sample) to thereby obtain a calibrated value (also referred to as "$ABS_{6.5-8.0}$"). The ratio of the $ABS_{6.5-8.0}$ to the $ABS_{5.0-6.5}$ ($ABS_{6.5-8.0}/ABS_{5.0-6.5}$) may preferably be a predetermined value or more.

The swollen composition of the present invention may preferably be characterized in that the $ABS_{6.5-8.0}/ABS_{5.0-6.5}$ value obtained in accordance with the procedure mentioned above is within the range of more than 1.0 but 10.0 or less. More specifically, the lower limit may preferably be typically more than 1.0, particularly more than 1.1, or more than 1.2, or more than 1.3, or more than 1.4, or more than 1.5, or more than 1.6, or more than 1.7, or more than 1.8, or more than 1.9, particularly more than 2.0. On the other hand, the upper limit of this parameter may be, although not particularly limited to, typically 10.0 or less, or 8.0 or less. The principle is unknown, but it is estimated that the ratio of the content of starch thermally decomposed becomes relatively large compared to the starch before decomposition, thereby increasing the ratio and finally resulting in a composition of good quality.

The details of the measurement method for $ABS_{6.5-8.0}$ are the same as those for $ABS_{5.0-6.5}$ described above, except that the separation fraction with molecular weight logarithms of 6.5 or more but less than 8.0 is used.

The term "iodine solution" used herein refers to a dilute solution of potassium iodide solution containing 0.05 mol/L of iodine (also simply referred to as "0.05 mol/L iodine solution" or "0.05 mol/L iodine solution). Unless otherwise specified, a mixed potassium iodide solution containing 93.7 mass % water, 0.24 mol/L (4.0% by mass) potassium iodide, and 0.05 mol/L (1.3% by mass) iodine (0.05 mol/L iodine solution (product code 091-00475) manufactured by FUJIFILM Wako Pure Chemicals Co.) is used after dilution. The "0.05 mol/L iodine solution" can be diluted 200 times with water to obtain a "0.25 mM iodine solution."

[II. Production method of swollen compositions]

Another aspect of the present invention relates to a method for producing a swollen composition containing starch, which contains at least steps (i) and (ii) below (hereinafter also referred to "the production method of the present invention"). The production method of the present invention makes it possible to efficiently produce a composition that may satisfy, although is not limited to, the swollen composition of the present invention.

(i) The step of preparing a dough composition containing starch derived from pulse and/or cereal and satisfying the requirements (1) to (4) below.

(1) The starch content in terms of wet mass basis is 3 mass % or more.
(2) The dry mass basis moisture content is more than 60 mass %.
(3) The dietary fiber content in terms of wet mass basis is 3.0 mass % or more.
(4) The methionol content in terms of wet mass basis is 0.1 ppb or more.

(ii) The step of swelling the dough composition from step (i) via heating treatment, wherein during the heating treatment, the [Value $\alpha$] / [Value $\beta$] ratio of the composition increases by 5 mass % or more, and the dry mass basis moisture content decreases by 5 mass % or more.

The production method of the present invention may preferably include, in addition to steps (i) and (ii) above, step (iii) below. (iii) The step of subjecting the swollen composition from step (ii) to treatment under reduced pressure.

Steps (i), (ii), and (iii) of the production method of the present invention are explained in detail below.

*Step (i):

In this step (i), a food ingredient as a raw material for the composition of the present invention, e.g., pulse and/or cereal, may be mixed with other food ingredients optionally used along with water to prepare a dough composition which is a basis for the swollen composition of the present invention. The dough composition (or dough) may be in any form as long as the food ingredients are partly or wholly integrated with water, and it may be in liquid, sol, gel or solid form. For example, it may be in a plasticized form, such as bread dough, or it may be in a non-plasticized form, such as a minced form. The method for preparing the dough composition is not particularly restricted, but may be a method in which a food ingredient as a raw material for the composition of the present invention (preferably at least one or more pulse and/or cereal, optionally in combination with one or more other edible plants) is simply mixed with other food ingredient, seasoning, and other ingredients optionally used to prepare the dough composition.

Raw materials for the dough composition in step (i) are not particularly restricted, as long as they can achieve various ingredients, contents, and properties required for the present invention. However, it is desirable to use one or more edible plants as a raw material, and also preferable to use, as an edible plant, pulse and/or cereal, more preferably at least pulse. Examples of edible plants that can be used in the present invention include plant food materials described in the Japan Standard Tables for Food Composition 2015 (7th revised edition) (e.g., edible plants other than pulse and/or cereal, specifically vegetables, potatoes, mushrooms, fruits, algae, grains, seeds, etc.), as well as wild plants normally used for dietary purpose as vegetables (e.g., psyllium, warabi (common bracken or eagle fern), fuki (butterbur or sweet-coltsfoot), and yomogi (Japanese mugwort or first wormwood)). The dry mass basis moisture content of edible plant in the swollen composition of the present invention may preferably be within the range of 0 mass % or more but less than 15 mass %. More specifically, its upper limit may preferably be typically less than 15 mass %, or less than 13 mass %, or less than 11 mass %, or less than 10 mass %. On the other hand, the lower limit of the dry mass basis moisture content is not particularly limited, but may preferably be typically 0 mass % or more, or 0.01 mass % or more.

The dough composition in step (i) may preferably be prepared to satisfy the following various conditions.

The dough composition in step (i) has a starch content which is a predetermined value or more. Specifically, the starch content of the dough composition in terms of wet mass basis may preferably be within the range of 3 mass % or more but 80 mass % or less. More specifically, the starch content in terms of wet mass basis may preferably be typically 3 mass % or more, more preferably 5 mass % or more, or 10 mass % or more, or 12 mass % or more, or 15 mass % or more, or 18 mass % or more, or 20 mass % or more. The upper limit is not particularly limited, but may preferably be typically 80 mass % or less, or 75 mass % or less, or 70 mass % or less.

The dough composition in step (i) may preferably be characterized in that the dry mass basis moisture content in the dough composition exceeds a predetermined value. Its technical significance is that if the dry mass basis moisture content is a predetermined value or less, it may be difficult for the enzyme reaction to proceed, so that it may be preferable to maintain the period in the heating treatment of step (ii) during which the dry mass basis moisture content exceeds a predetermined value for a certain period of time for more, thereby facilitating the enzyme reaction to change the starch component with relatively high molecular weights as defined by AUC5.0 to the starch component with relatively low molecular weights as defined by AUC3.5 (accordingly, the AUC3.5 and AUC5.0 values of the swollen composition of the present invention are different from the values in the raw materials before the heating treatment (in other words, these values change between step (i) and step (ii) or subsequent steps) or from the values in compositions with different factors that have a significant effect on the degradative enzyme reaction (e.g., dough enzyme activity, dough addition conditions, heat treatment conditions, etc.)). Specifically, the dry mass basis moisture content in the dough composition may preferably be within the range of more than 50 mass % 250 mass % or less. More specifically, the lower limit of the dry mass basis moisture content in the dough composition may preferably be typically more than 50 mass %, or more than 55 mass %, or more than 60 mass %, or more than 63 mass %, or more than 65 mass %, or more than 68 mass %, or more than 70 mass %, or more than 73 mass %, or more than 75 mass %, or more than 77 mass %, or more than 80 mass %, or more than 82 mass %, or more than 85 mass %. On the other hand, the upper limit of the dry mass basis moisture content in the dough composition in the present invention is not restricted, but from the viewpoint of industrial production efficiency, for example typically 250 mass % or less, or 225 mass % or less, or 200 mass % or less, or 175 mass % or less, or 150 mass % or less.

The dry mass basis moisture content in the dough composition of step (i) may preferably be maintained to be higher than a predetermined value for a predetermined time or more. The period of time during which the dry mass basis moisture content is maintained to be higher than a predetermined value may be adjusted as appropriate, taking into consideration the reaction rate, which is determined based on, e.g., enzyme activity, reaction temperature, and dry mass basis moisture content, and also taking into consideration the change ratio of the AUC3.5 and AUC5.0 values, the change ratio of the [Value $\alpha$] / [Value $\beta$] value, and the change ratio of the (weighted average area) / (weighted average perimeter) value. Specifically, the period of time may preferably be within the range of 1 minute or more but 24 hours or less. More specifically, its lower limit may preferably be typically 1 minute or more, or 2 minutes or more, or 3 minutes or more. On the other hand, its upper limit is not particularly limited, but may preferably be typically 24 hours or less, or 16 hours or less. The reaction temperature of the dough composition may also be set based on, e.g., the change ratios of the AUC3.5 and AUC5.0 values, but may preferably be within the range of 0 °C or more but 300 °C or less. More specifically, its lower limit may preferably be typically 0 °C or more, or 5 °C or more, or 10 °C or more, $\not\sim$ 15 °C or more, or 20 °C or more, or 30 °C or more, or 40 °C or more, or 50 °C or more, or 60 °C or more, or 70 °C or more, or 80 °C or more, or 90 °C or more, or 100 °C or more, or 110 °C or more, or 120 °C or more. On the other hand, its upper limit is not particularly limited, but may preferably be typically 300 °C or less, or 260 °C or less, or 230 °C or less. The step of maintaining the dry mass basis moisture content in the dough composition to be higher than the predetermined limit for a predetermined amount of time or more may be carried out after the preparation of the dough composition at step (i) and before the heating at step (ii), or at least a part or all of this step may be achieved during the heating at step (ii).

In addition, while maintaining the dry mass basis moisture content in the dough composition of step (i) to be higher than the predetermined limit for a predetermined amount of time or more, it is possible to produce the swollen composition of the present invention by carrying out the fermentation step described below, or by carrying out an enzyme treatment in the dough composition and then swelling the treated dough composition by heat treatment. Specifically, the swollen composition of the present invention can be produced by yeast fermentation using yeast incorporated in the dough composition, or by carrying out an enzymatic treatment reaction with a starch degradative enzyme incorporated in the dough composition or carrying out an enzymatic treatment reaction of psyllium husk (preferably with cellulase and/or pectinase and/or xylanase, more preferably at least with pectinase and/or xylanase), which is incorporated in the dough composition, and then swelling the treated dough composition by heat treatment. In such cases, the statement "before heat treatment" refers to the state of the dough composition before the fermentation and enzyme treatments (i.e. immediately after preparation), while the statement "after heat treatment" refers to the state of the swollen composition after the dough composition has undergone fermentation and enzyme treatments and have swollen.

The dietary fiber content (the total content of soluble dietary fiber and insoluble dietary fiber) in the dough composition prepared in step (i) may preferably be equal to or more than a predetermined limit. Specifically, the dietary fiber content (especially the insoluble dietary fiber content) in the dough composition in terms of wet mass basis may be within the range of 3.0 mass % or more but less than 40 mass %. More specifically, its lower limit in terms of wet mass basis may preferably be typically 3.0 mass % or more, preferably 3.5 mass % or more, or 4.0 mass % or more, or 4.5 mass % or more, or 5.0 mass % or more, or 6.0 mass % or more, or 7.0 mass % or more, or 8.0 mass % or more, or 9.0 mass % or more, or 10.0 mass % or more. On the other hand, its upper limit in terms of wet mass basis may be, although is not particularly limited to, typically 40 mass % or less, or 35 mass % or less, or 30 mass % or less.

The methionol content in the dough composition of step (i) in terms of wet mass basis may preferably be a predetermined value or more. Specifically, the methionol content in terms of wet mass basis may preferably be within the range of 0.1 ppb or more but 50000 ppb or less. More specifically, its lower limit may preferably be typically 0.1 ppb or more, or 1 ppb or more, or 2 ppb or more, or 5 ppb or more, or 10 ppb or more, or 15 ppb or more, or 20 ppb or more, or 25 ppb or more, or 30 ppb or more, or 35 ppb or more, or 40 ppb or more. On the other hand, its upper limit may preferably be typically 50000 ppb or less, or 45000 ppb or less, or 40000 ppb or less, or 35000 ppb or less, or 30000 ppb or less, or 25000 ppb or less, or 20000 ppb or less, or 15000 ppb or less, or 10000 ppb or less. If the methionol content is too high, its aroma may be felt prominently.

The total oil and fat content in the dough composition in step (i) may preferably be within a predetermined range. Specifically, the total oil and fat content in the swollen composition of the present invention in terms of wet mass basis may preferably be within the range of 2.0 mass % or more but 70 mass % or less. More specifically, its lower limit may preferably be typically 2.0 mass % or more, more preferably 3.0 mass % or more, or 4.0 mass % or more, or 5.0 mass % or more, or 6.0 mass % or more, or 7.0 mass % or more, or 8.0 mass % or more, or 9.0 mass % or more, or 10.0 mass % or more. On the other hand, its upper limit is not particularly limited, but may preferably be typically 70 mass % or less, or 65 mass % or less, or 60 mass % or less, or 55 mass % or less, or 50 mass % or less, or 45 mass % or less, or 40 mass % or less, or 35 mass % or less, or 30 mass % or less.

The dough composition in step (i) may preferably be prepared so as to contain pulse and/or cereal, preferably pulse. Its content is not restricted, but may preferably be within the range of 5 mass % or more but 90 mass % or less in terms of wet mass basis. More specifically, its lower limit may preferably be typically 5 mass % or more, or 10 mass % or more, or 15 mass % or more, or 20 mass % or more, or 25 mass % or more, or 30 mass % or more, or 35 mass % or more. The upper limit is not particularly limited, but may preferably be typically 90 mass % or less, or 80 mass % or less, or 70 mass % or less.

The pulse and/or cereal to be used for the preparation of the dough composition in step (i) may either have or have not undergone the heat treatment explained below, or may be the combination of a heat-treated one and a non-treated one. The pulse and/or cereal to be used may preferably be in the powder form.

The pulse and/or cereal to be used as a raw material at step (i) of the present invention may also have been mildly heated as warming treatment beforehand in such a manner that the [Value $\delta$] / [Value $\gamma$] ratio determined under the above conditions is adjusted to within a predetermined range. Using such a raw material is desirable because it serves to remove unwanted components in the raw material while maintaining starch grains in the material, which act to aid the swelling of the composition and allow the effects of the present invention to be well achieved. On the other hand, if the decrement difference of the peak temperature of gelatinization is too large, then in the swelling treatment process at step (ii), the starch grains may be completely destroyed to the extent that they do not exhibit RVA peaks, or even if they are not destroyed, they may lose their heat resistance, making it difficult for the effects of the present invention to be realized. Specifically, the [Value $\delta$] / [Value $\gamma$] ratio may preferably be within the range of 0.1 or more but 1.0 or less. More specifically, the lower limit may preferably be typically 0.1 or more, or 0.15 or more, or 0.2 or more, or 0.25 or more, or 0.3 or more, or 0.35 or more. On the other hand, the upper limit of the [Value $\delta$] / [Value $\gamma$] ratio is not particularly limited, but may preferably be typically 1.0 or less, or 0.95 or less, or 0.9 or less, or 0.85 or less.

Pulse and/or cereal raw material (especially raw material powder) to be used for the preparation of the dough composition in step (i) may be subjected to warming treatment so as to have a [Value $\delta$] / [Value $\gamma$] ratio as measured by the method mentioned above which is equal to a predetermined value or less (i.e., within the range of 0.1 or more but 1.0 or less, specifically, typically 0.1 or more, or 0.15 or more, or 0.2 or more, or 0.25 or more, or 0.3 or more, or 0.35 or more, while the upper limit is not particularly limited, but may preferably be typically 1.0 or less, or 0.95 or less, or 0.9 or less, or 0.85 or less). Pulse and/or cereal raw material (especially raw material powder) that has undergone such warming treatment is also included in the subject matter of the present invention.

Pulse and/or cereal raw material (especially raw material powder) to be used for the preparation of the dough composition in step (i) may be subjected to warming treatment such that when 6% suspension of its crushed product is observed, the number of starch grain structures may preferably be within a predetermined range. Specifically, the number of starch grain structures in the pulse and/or cereal raw material (especially raw material powder) having undergone such warming treatment may preferably be, although is not limited to, within the range of $10/mm^2$ or more but $100000/mm^2$ or less. Specifically, the lower limit of the number of starch grain structures may preferably be typically $10/mm^2$ or more, or $20/mm^2$ or more, or $30/mm^2$ or more, or $40/mm^2$ or more, or $60/mm^2$ or more, or $80/mm^2$ or more, or $100/mm^2$ or more, or $150/mm^2$ or more, or $200/mm^2$ or more, or $250/mm^2$ or more, or more than $300/mm^2$. On the other hand, the upper limit may preferably be, although is not particularly limited to, $100000/mm^2$ or less, or $50000/mm^2$ or less, or $10000/mm^2$ or less. Pulse and/or cereal raw material (especially raw material powder) that has undergone such warming treatment so as to adjust the number of starch grain structures to within the aforementioned range is also included in the subject matter of the present invention.

Pulse and/or cereal to be used for the present invention may preferably be characterized in that its degree of gelatinization is within a predetermined range. Specifically, the starch the degree of gelatinization in the pulse and/or cereal to be used for the present invention may be within the range of 0.1 mass % or more but less than 50 mass %. More specifically, its upper limit may preferably be typically 50 mass % or less, or 45 mass % or less, or 40 mass % or less, or 35 mass % or less. On the other hand, its lower limit may preferably be, although is not limited to, typically 0.1 mass % or more, or 0.5 mass % or more, or 1 mass % or more. Pulse and/or cereal raw material (especially raw material powder) that has undergone such warming treatment so as to adjust degree of gelatinization as mentioned above is also included in the subject matter of the present invention. In the present invention, the degree of gelatinization of a composition is measured as the ratio of the gelatinized starch content to the total starch content using the glucoamylase second method, which is a partial modification of the Central Analytical Laboratory of Customs (following the method by Japan Food Research Laboratories: https://www.jfrl.or.jp/storage/file/221.pdf).

Pulse and/or cereal to be used for the present invention may preferably be characterized in that its starch content is a predetermined value or more. Specifically, the starch content in the dough composition in terms of wet mass basis may be within the range of 3 mass % or more but 80 mass % or less. More specifically, the starch content in terms of wet mass basis may be typically 3 mass % or more, preferably 5 mass % or more, or 10 mass % or more, or 12 mass % or more, or 15 mass % or more, or 18 mass % or more, or 20 mass % or more. The upper limit is not particularly limited, but may preferably be typically 80 mass % or less, or 75 mass % or less, or 70 mass % or less.

Pulse and/or cereal to be used for the present invention may preferably be characterized in that its dry mass basis moisture content is a predetermined value or less. Specifically, the dry mass basis moisture content may preferably be within the range of 0 mass % or more but less than 25 mass %. More specifically, its upper limit may preferably be typically less than 25 mass %, or 20 mass % or less, or 15 mass % or less, or 10 mass % or less. Its lower limit is not particularly limited, but may preferably be typically 0 mass %, 0 mass % or more.

Pulse and/or cereal to be used for the present invention may preferably be characterized in that its dietary fiber content is within a predetermined range. Specifically, the dietary fiber content in terms of wet mass basis may preferably be typically 3.0 mass % or more. or 3.5 mass % or more, or 4.0 mass % or more, or 4.5 mass % or more, or 5.0 mass % or more, or 6.0 mass % or more, or 7.0 mass % or more, or 8.0 mass % or more, or 9.0 mass % or more, or 10.0 mass % or more, or 11.0 mass % or more, or 12.0 mass % or more. On the other hand, its upper limit in terms of wet mass basis may be, although is not particularly limited to, typically 40 mass % or less, or 35 mass % or less, or 30 mass % or less.

Pulse and/or cereal to be used for the present invention may preferably be characterized in that its specific surface area per unit volume after ultrasonication is a predetermined value or more. Specifically, when 2 mass% ethanol dispersion of the measurement object as described below is measured using the laser diffraction scattering method, the specific surface area per unit volume after ultrasonic treatment may preferably be a predetermined value or more. Specifically, the specific surface area per unit volume after ultrasonication may be within the range of typically $0.10 m^2/mL$ or more, while the upper limit may preferably be, although is not limited to, $2.5 m^2/mL$. More specifically, its lower limit may preferably be typically $0.10 m^2/mL$ or more, more preferably $0.15 m^2/mL$ or more, or $0.20 m^2/mL$ or more, or $0.25 m^2/mL$ or more, especially $0.30 m^2/mL$ or more. The specific surface area per unit volume after ultrasonication can be adjusted to a predetermined value or more by, e.g., edible plant such as pulse and/or cereal may be micronized as appropriate via a pulverizing treatment in advance. Its upper limit is not particularly limited, but may preferably be typically $2.5 m^2/mL$ or less, or $2.2 m^2/mL$ or less, or $2.0 m^2/mL$ or less.

The temperature and the duration of time of the warming treatment may be adjusted as appropriate so as to adjust the [Value $\delta$] / [Value $\gamma$] ratio and/or the number of starch grain structures to within a predetermined range, from the viewpoint of removing undesirable components in raw materials while preventing damage to starch grains. The heating method can also be selected as appropriate, such as heating the powder directly using a solid (e.g., metal parts in equipment) as a medium (e.g. extruder) or using a gas medium (e.g., saturated steam heating, air dry heating, etc.). The composition temperature during the processing may preferably be within the range of 60 °C or more but 300 °C or less. More specifically, the upper limit may preferably be typically 300 °C or less, or 280 °C or less, or 250 °C or less, or 210 °C or less, or 150 °C or less. The lower limit of the temperature is not particularly restricted, but may be 60 °C or more, or 70 °C or more, or 80 °C or more, or 90 °C or more, or 100 °C or more. The duration of processing at the temperature may preferably be typically 30 minutes or less, or 25 minutes or less, while the lower limit is not particularly restricted, but may preferably be 0.1 minutes or more.

The dry mass basis moisture content during the warming treatment may preferably be a predetermined limit or lower. If the dry mass basis moisture content during the warming treatment is too high, the starch grains may be completely destroyed, or even if they are not destroyed, they may lose their heat resistance, making it difficult for the effects of the present invention to be realized. Specifically, the upper limit of the dry mass basis moisture content moisture content may preferably be within the range of 0 mass % or more 80 mass % or less. More specifically, the upper limit may preferably be typically 80 mass % or less, or 70 mass % or less, or 60 mass % or less, or 50 mass % or less, or 40 mass % or less, or 35 mass % or less, or 30 mass % or less, or 25 mass % or less, or 20 mass % or less, or 15 mass % or less, or 12 mass % or less, or 10 mass % or less. The lower limit of the dry mass basis moisture content during the warming treatment is not particularly restricted, but may be 0 mass % or more, or 1 mass % or more, or 2 mass % or more.

As explained above, pulse and/or cereal raw material (especially raw material powder) to be used for the preparation of the dough composition in step (i) may have undergone warming treatment under mild conditions. In this connection, protein contained in the pulse and/or cereal raw material (especially raw material powder) may preferably have undergone any type of processing treatment (e.g., ultrasonication, shear kneading treatment, heating treatment, etc.) (i.e., processed protein). When pulse and/or cereal raw material (especially raw material powder) containing such processed protein is used, the swollen composition of the present invention is likely to have improved elasticity and/or extensibility and exhibit the effects of the present invention. Specifically, pulse and/or cereal raw material (especially raw material powder) may preferably have been processed until some or all of the protein contained therein is denatured. Examples of denaturation treatment include heat treatment and electrical treatment. Specifically, the protein contained in pulse and/or cereal raw material (especially raw material powder) may preferably be heat-treated (at., e.g., 60 °C or more, or 70 °C or more, or 80 °C or more) until denatured. Although the principle behind this is unknown, processed protein may cross-link starch and other components and contribute to the development of an aggregate structures in the swollen composition, which is thought to be composed of starch and protein, to have desirable shapes and sizes. Such processed protein to be added to the composition may be, but is not particularly limited to, either an isolated pure product having undergone processing or, more preferably, a processed product of pulse and/or cereal containing protein. While, as mentioned above, starch may preferably have undergone a low degree of processing such that a certain ratio or more of starch grains remain, protein may preferably have undergone a certain degree or more of processing (e.g., heat denaturation at 60 °C or more, or 70 °C or more, or 80 °C or more).

Specifically, the PDI value of the pulse and/or cereal raw material (especially raw material powder) to be used for the preparation of the dough composition in step (i) may be within the range of less than 55 mass %, while the lower limit may preferably be, although is not particularly limited to, 0 % or more. Specifically, the upper limit of the PDI value of pulse and/or cereal may preferably be typically less than 55 mass %, or less than 50 mass %, or less than 45 mass %, or less than 40 mass %, or less than 35 mass %, or less than 30 mass %, or less than 25 mass %, or less than 20 mass %, or less than 15 mass %, or less than 10 mass %. On the other hand, the lower limit of the PDI value of pulse and/or cereal is not particularly limited, but may preferably be typically 0 mass % or more, or 1 mass % or more, or 2 mass % or more.

While the swollen composition of the present invention after baking may preferably have disrupted starch grain structures as mentioned above, since this helps exhibit smooth food texture, the dough composition in step (i) of the production method of the present invention may preferably retain intact (i.e., undisrupted) starch grain structures. Although the principle behind this is unknown, when a dough composition retaining starch grain structures is swollen via heating treatment, starch grains may preferably protect inner pores and help form pores having specific shapes to retain good aroma. Specifically, the number of starch grain structures in the composition may preferably decrease during the heating treatment of step (ii) by a predetermined ratio or more (i.e., a decremental difference defined by "(the number of starch grain structures in the dough composition before heating treatment) - (the number of starch grain structures in the dough composition after heating treatment)" may preferably be a certain value or more). Specifically, the decrease ratio before and after the heating treatment of step (ii) may preferably be within the range of $10/mm^2$ or more but $100000/mm^2$ or less. More specifically, the lower limit of the decrease ratio may preferably be typically $10/mm^2$ or more, or $20/mm^2$ or more, or $30/mm^2$ or more, or $40/mm^2$ or more, or $50/mm^2$ or more, or $100/mm^2$ or more, or $150/mm^2$, or $200/mm^2$ or more, or $250/mm^2$ or more, or $300/mm^2$ or more. On the other hand, the upper limit of the decrease ratio is not particularly limited, but may preferably be typically $100000/mm^2$ or less, or $50000/mm^2$ or less, or $10000/mm^2$ or less. Pulse and/or cereal raw material (especially raw material powder) that has undergone warming treatment so as to satisfy the above requirement is also included in the subject matter of the present invention.

Specifically, the dough composition in step (i) may preferably be characterized in that when subjected to measurement according to <Method c> below, the ratio of [Value $\delta$] / [Value $\gamma$] is equal to or higher than a predetermined value or more.

[Value $\gamma$]: A breakdown viscosity (cP) during temperature increasing step (a1).
[Value $\delta$]: A peak viscosity (cP) during temperature decreasing step (a2).

<Method c> As a measurement sample, 32 g of 22 mass % aqueous slurry of a crushed product of the composition is subjected to measurement using a rapid visco-analyzer with carrying out steps (a1) and (a2) below.

(a1) Temperature increasing step, in which the temperature of the measurement sample is increased from 50 °C to 95 °C at an increasing rate of 6 °C/min and then maintained for 3 minutes..
(a2) Temperature decreasing step, in which the temperature of the measurement sample is decreased from 95 °C to 50 °C at a decreasing rate of 6 °C/min.

The details of RVA and measurement method using the same are as explained above.
The ratio of [Value $\delta$] / [Value $\gamma$] of the dough composition in step (i) as measured under the above conditions may be within the range of typically 0.1 or more, while the upper limit may preferably be, although is not particularly limited to, 1 or less. More specifically, its lower limit may preferably be typically 0.1 or more, or 0.2 or more, or 0.3 or more, or 0.4 or more, or 0.5 or more, while the upper limit is not particularly limited, but may preferably be typically 1 or less, or 0.95 or less, or 0.90 or less. Compositions in which a large number of starch grain structures remain and starch grains do not collapse easily tend to have a low ratio of [Value $\delta$] / [Value $\gamma$] (close to 1), because breakdown after viscosity increase due to hydrolytic swelling of the starch grain structure is less likely to occur. When this feature is satisfied, the dough composition in step (i) is more likely to form pores having specific shapes and retain good aroma. Although the principle behind this is unknown, while it is known that starch grains of pulse and/or cereal usually have a very strong structure and do not collapse at about 90°C, it is deemed that the dough composition having starch grain structures of pulse and/or cereal that satisfies the above requirement is subjected to measurement according to <Method c>, the starch grains of pulse and/or cereal are kept swollen during the temperature increasing step (a1), and the breakdown viscosity hardly decreases, whereby a [value $\beta$]/[value $\alpha$] ratio close to 1 is obtained. Pulse and/or cereal raw material (especially raw material powder) that has undergone warming treatment so as to satisfy the above requirement is also included in the subject matter of the present invention.

The dough composition in step (i) may preferably be characterized in that when 6% suspension of its crushed product is observed, the number of starch grain structures is typically $10/mm^2$ or more, while the upper limit may preferably be, although is not particularly limited to, $5000/mm^2$ or less. More specifically, its lower limit may preferably be typically $10/mm^2$ or more, or $50/mm^2$ or more, or $100/mm^2$ or more, or $300/mm^2$ or more, or $500/mm^2$ or more, or $700/mm^2$ or more, or $800/mm^2$ or more, or $900/mm^2$ or more, or $1000/mm^2$ or more, while the upper limit is not particularly limited, but may preferably be typically $5000/mm^2$ or less, or $4000/mm^2$ or less. Although the principle behind this is unknown, it is deemed that when the dough composition has undisrupted starch grain structures, the resulting composition tends to facilitate retention of methionol in the starch network, reduce the perception of powdery odor, and provide superior swelling and desirable texture.

The degree of gelatinization in the dough composition in step (i) as measured by the method mentioned above may preferably be within a predetermined range. Specifically, the degree of gelatinization in the dough composition in step (i) may be within the range of 0.1 mass % or more but less than 70 mass %. More specifically, its upper limit may preferably be typically less than 70 mass %, or 60 mass % or less, or 50 mass % or less, or 45 mass % or less, or 40 mass % or less, or 35 mass % or less. On the other hand, its lower limit may preferably be, although is not limited to, typically 0.1 mass % or more or, 0.5 mass % or more, or 1 mass % or more. Although the principle behind this is unknown, it is deemed that when the degree of gelatinization in the dough composition is within a predetermined range, the resulting composition tends to facilitate retention of methionol in the starch network, reduce the perception of powdery odor, and provide superior swelling and desirable texture.

The dough composition in step (i) may preferably be characterized in that it contains a protein with low solubility, since it may provide the composition with pull and viscoelasticity characteristic of swollen food, with maintaining a texture that is easy to chew through. Although the principle behind this is unknown, it is deemed that the insolubilized protein affects the texture of starch. Specifically, the PDI (protein dispersibility index) value of the swollen composition of the present invention may preferably be 0 mass % or more but less than 55 mass %. Specifically, the upper limit for the PDI value may preferably be typically less than 55 mass %, or less than 50 mass %, or less than 45 mass %, or less than 40 mass %, or less than 35 mass %, or less than 30 mass %, or less than 25 mass %, or less than 20 mass %, or less than 15 mass %, or less than 10 mass %. On the other hand, the lower limit for the PDI value is not particularly limited, but may preferably be typically 0 mass % or more, or 1 mass % or more, or 2 mass % or more.

The starch degradative enzyme activity in the dough composition prepared in step (i) may preferably be equal to or more than a predetermined limit. Specifically, the starch degradative enzyme activity in the dough composition in terms of dry mass basis may preferably be within the range of 0.2 U/g or more but 100.0 U/g or less. More specifically, the lower limit may preferably be typically 0.2 U/g or more, particularly 0.4 U/g or more, or 0.6 U/g or more, or 0.8 U/g or more, or 1.0 U/g or more, or 2.0 U/g or more, or 3.0 U/g or more, especially 4.0 U/g or more. On the other hand, the upper limit of the ratio may be, although not particularly limited to, typically 100.0 U/g or less, or 50.0 U/g or less, or 30.0 U/g or less, or 10.0 U/g or less, or 7.0 U/g or less.

As the raw material for the dough composition in step (i), it is preferable to use edible plant (e.g., pulse and/or cereal, especially pulse) with high starch degradative enzyme activity. Specifically, the starch degradative enzyme activity of the raw material in terms of dry mass basis may preferably be within the range of 0.2 U/g or more but 100.0 U/g or less. More specifically, its lower limit may preferably be typically 0.2 U/g or more, or 0.4 U/g or more, or 0.6 U/g or more, or 0.8 U/g or more, or 1.0 U/g or more, or 2.0 U/g or more, or 3.0 U/g or more, or 4.0 U/g or more. On the other hand, the upper limit of the ratio is not particularly limited, but may preferably be typically 100.0 U/g or less, or 50.0 U/g or less, or 30.0 U/g or less, or 10.0 U/g or less, or 7.0 U/g or less.

As the processing method for obtaining edible plants with high starch degrading enzyme activity, in order to prevent the inactivation of starch degradative enzymes, edible plant to be used as a raw material may preferably be pretreated so as to have a high starch degradative enzyme activity, e.g., by carrying out heat treatment under a circumstance with a dry mass basis moisture content at a predetermined ratio or less (e.g., typically 70 mass % or less, or 60 mass % or less, or 50 mass % or less, or 40 mass % or less, or 30 mass % or less, especially 20 mass % or less). The temperature of the heat treatment may preferably be within the range of 60 °C or higher but 300 °C or lower. More specifically, the upper limit may preferably be typically 300 °C or lower, or 260 °C or lower, or 220 °C or lower, or 200 °C or lower. On the other hand, since carrying out heat treatment at a temperature of a predetermined value or higher in advance may serve to remove undesirable scents in the raw material, the treatment temperature may preferably be at a predetermined temperature or more. Specifically, the temperature may preferably be typically 60 °C or higher, particularly 70 °C or higher, or 80 °C or higher, or 90 °C or higher, especially 100 °C or higher. The duration of the heat treatment may be set as appropriate as long as the starch degradative enzyme activity is adjusted to a predetermined limit, but may preferably be within the range of 0.1 minutes or more but 60 minutes or less. More specifically, the lower limit may preferably be typically 0.1 minutes or more, or 1 minute or more. On the other hand, the upper limit is not particularly restricted, but may be typically 60 minutes or less.

The enzyme activity unit (U/g) can be determined as follows. A measurement sample is subjected to the enzyme reaction for 30 minutes, and the absorbance reduction rate C (%) at a wavelength of 660 nm measured with a spectrophotometer before and after the reaction was determined as the absorbance reduction rate of the enzyme reaction zone (absorbance A) relative to the comparison zone (absorbance B), i.e., {(absorbance B) - (absorbance A) / (absorbance B)} x 100 (%). The enzyme activity that reduces absorbance by 10% per 10 minutes is determined as one unit (U), and the enzyme activity per gram of the sample measured is determined from the absorbance reduction rate C (%) when the enzyme reaction is conducted with 0.25 mL of the enzyme solution (sample content: 0.025 g) for 30 minutes, using the following formula.

[Formula 2]

$$\text{Enzyme activity unit (U/g)} = \{C \times (10/30) \times (1/10)\}/0.025$$

Specific examples of starch degradative enzymes to be incorporated in the dough composition include amylase. The enzyme may be either derived from edible plant (e.g., pulse and/or cereal, especially pulse) as the raw material of the dough composition or may be added to the dough composition externally. However, a predetermined ratio or more of the starch degradative enzyme activity in the dough composition may preferably be derived from edible plant as the raw material of the dough composition, preferably from pulse and/or cereal, more preferably from pulse. Specifically, the ratio of the starch degradative enzyme activity derived from edible plant (e.g., pulse and/or cereal, especially pulse) as the raw material to the starch degradative enzyme activity in the dough composition may preferably be within the range of 30 % or more 100 % or less. More specifically, the lower limit may preferably be typically 30 % or more, particularly 40 % or more, or 50 % or more, or 60 % or more, or 70 % or more, or 80 % or more, or 90 % or more. On the other hand, the upper limit is not particularly restricted, but may be typically 100 % or less.

In addition, a predetermined ratio or more of the starch degradative enzyme activity in the dough composition may preferably be derived from endogenous degradative enzyme contained in edible plant as the raw material of the dough composition, preferably from endogenous degradative enzyme contained in pulse and/or cereal, more preferably from endogenous degradative enzyme contained in pulse. In this case, the endogenous starch degradative enzyme may preferably be amylase. In this regard, since starch derived from edible plant is considered to be easily degradable by the endogenous degradative enzyme contained in the same plant, the starch degradative enzyme (especially the endogenous degradative enzyme contained in edible plant) may preferably be derived from the same plant as the plant from which the starch contained in the composition is derived. Specifically, the ratio of the starch degradative enzyme activity resulting from the endogenous degradative enzyme contained in edible plant (especially pulse and/or cereal, preferably pulse) as a raw material to the total starch degradative enzyme activity contained in the dough composition may preferably be within the range of 30 % or more and 100 % or less. More specifically, the lower limit may preferably be typically 30 % or more, particularly 40 % or more, or 50 % or more, or 60 % or more, or 70 % or more, or 80 % or more, or 90 % or more. The upper limit is not particularly restricted, but may be typically 100 % or less.

The sodium chloride content in the dough composition in step (i) in terms of wet mass basis may preferably be equal to or lower than a predetermined ratio. Specifically, the sodium chloride content in terms of wet mass basis may preferably be within the range of 0 mass % or more but 5 mass % or less. More specifically, its upper limit may preferably be typically 5 mass % or less, or 4 mass % or less, or 3 mass % or less, or 2 mass % or less, or 1 mass % or less, or 0.7 mass % or less, or 0.5 mass % or less. The dough composition of the present invention is useful since it exhibits unique pull or viscoelasticity of swollen food even when its sodium chloride content is equal to or lower than the upper limit mentioned above. On the other hand, the lower limit of the content is not particularly limited, but may preferably be typically 0 mass %, or 0 mass % or more.

The alcohol content of the dough composition in step (i) in terms of wet mass basis is equal to or lower than a predetermined ratio. When the content is equal to or lower than a predetermined ratio, the resulting composition ends to exhibit the effects of the present invention sufficiently. Although the principle behind this is unknown, it is deemed that when the composition has a high alcohol content, pores having specific shapes may not sufficiently be formed. Specifically, the alcohol content the swollen composition of the present invention in terms of wet mass basis may preferably be within the range of 0 mass % or more but 10 mass % or less. More specifically, its upper limit may preferably be typically 10 mass % or less, more preferably 9 mass % or less, or 8 mass % or less, or 7 mass % or less, or 6 mass % or less, or 5 mass % or less, or 4 mass % or less, or 3 mass % or less, or 2 mass % or less, or 1 mass % or less. On the other hand, its lower limit is not particularly limited, but from the viewpoint of industrial productivity, it may be typically 0 mass %, or 0 mass % or more.

The liquor content of the dough composition in step (i) in terms of wet mass basis is equal to or lower than a predetermined ratio. When the content is equal to or lower than a predetermined ratio, the resulting composition ends to exhibit the effects of the present invention sufficiently. Although the principle behind this is unknown, it is deemed that when the composition has a high liquor content, pores having specific shapes may not sufficiently be formed. Specifically, the liquor content the swollen composition of the present invention in terms of wet mass basis may preferably be within the range of 0 mass % or more but 10 mass % or less. More specifically, its upper limit may preferably be typically 10 mass % or less, more preferably 9 mass % or less, or 8 mass % or less, or 7 mass % or less, or 6 mass % or less, or 5 mass % or less, or 4 mass % or less, or 3 mass % or less, or 2 mass % or less, or 1 mass % or less. On the other hand, its lower limit is not particularly limited, but from the viewpoint of industrial productivity, it may be typically 0 mass %, or 0 mass % or more.

The wheat content in the dough composition in step (i) may preferably be within a predetermined range. Specifically, the wheat content in the dough composition in terms of wet mass basis may preferably be within the range of 0 mass % or more but 50 mass % or less. More specifically, its upper limit may preferably be typically 50 mass % or less, more preferably 40 mass % or less, or 30 mass % or less, or 20 mass % or less, or 10 mass % or less, particularly substantially absent (which may specifically refer to a content of less than 1 ppm, which is a lower limit for general measurement methods) or absent. The dough composition of the present invention is useful since it exhibits unique pull or viscoelasticity of swollen food even when its wheat content is equal to or lower than the upper limit mentioned above. On the other hand, the lower limit of this ratio is not particularly limited, but may preferably be typically 0 mass %, or 0 mass % or more.

The ratio of the content of protein derived from wheat to the total protein content in the dough composition in step (i) may preferably be within a predetermined range. Specifically, the ratio of the content of protein derived from wheat to the total protein content in the dough composition may preferably be within the range of 0 mass % or more but 50 mass % or less. More specifically, its upper limit may preferably be typically 50 mass % or less, more preferably 40 mass % or less, or 30 mass % or less, or 20 mass % or less, or 10 mass % or less, particularly substantially absent (which may specifically refer to a content of less than 1 ppm, which is a lower limit for general measurement methods) or absent. The dough composition of the present invention is useful since it exhibits unique pull or viscoelasticity of swollen food even when its ratio of the content of protein derived from wheat to the total protein content is equal to or lower than the upper limit mentioned above. On the other hand, the lower limit of this ratio is not particularly limited, but may preferably be typically 0 mass %, or 0 mass % or more.

The dough composition in step (i) may preferably contain a part of edible plant in which dietary fiber (which includes both soluble dietary fiber and insoluble dietary fiber) is localized. Specifically, the ratio of dietary fiber-localized part (e.g., seed skin of psyllium) to the total mass of the dough composition in terms of wet mass basis may preferably be 0.1 mass % or more but 20 mass % or less. More specifically, its lower limit may preferably be typically 0.1 mass % or more, more preferably 0.2 mass % or more, or 0.3 mass % or more, or 0.4 mass % or more, or 0.5 mass % or more, or 1.0 mass % or more, or 1.5 mass % or more. On the other hand, the upper limit may preferably be, although not limited to, typically typically 20 mass % or less, or 15 mass % or less, or 10 mass % or less, or 7.5 mass % or less, or 5.0 mass % or less. The dietary fiber-localized part may be insoluble dietary fiber-localized part satisfying the above requirement. The dietary fiber-localized part may at least include seed skin of psyllium, which may have undergone enzyme treatment (e.g., cellulase treatment and/or xylanase treatment and/or pectinase treatment).

The dough composition in step (i) may also preferably contain pulse seed skin as dietary fiber-localized parts (more specifically insoluble dietary fiber-localized parts) at the ratios explained above, because when the production process does not include the fermentation step, the dough composition will be provided with properties that make it easier to swell. It may also be preferable when the production process does not include the fermentation step, since the resulting dough composition may exhibit improved spreadability upon addition of water and results in a physical property that facilitates swelling in step (ii).

The dough composition in step (i) may also preferably contain the seed skin of edible wild plant psyllium (also referred to as psyllium seed skin or psyllium husk) as a dietary fiber-localized part (more specifically, a localized part in which soluble dietary fiber and insoluble dietary fiber are localized) at the ratio mentioned above, especially when the production process includes the step of fermentation the dough composition, since the swelling of the dough composition at step (ii) is promoted. Specifically, the dough composition may preferably contain psyllium seed skin which has undergone enzyme treatment (preferably with cellulase and/or pectinase and/or xylanase, especially with at least pectinase or xylanase) at the ratio mentioned above. The dough composition may more preferably contain both pulse seed skin and psyllium seed skin (especially enzyme-treated psyllium seed skin). In this case, the total content of pulse seed skin and psyllium seed skin may preferably satisfy the ratio mentioned above.

When the dough composition in step (i) contains seed skin of psyllium (also referred to as psyllium seed skin or psyllium husk), the seed skin of psyllium and other raw materials may be blended together at once, or they may be blended separately and sequentially in any order. Specifically, it is preferable to mix water and psyllium seed skin first and then blend the other raw materials, and it is even more preferable to mix water and part of psyllium seed skin first and then blend the other raw materials and additional psyllium seed skin.

The dough composition in step (i) may contain dietary fiber-localized part either in the form of an isolated pure product or in the form of dietary fiber-containing food material including dietary fiber-localized part, but it may preferably contain dietary fiber-localized part and other part of the same species of food material, more preferably dietary fiber-localized part and other part of the same individual of food material. When the dough composition contains dietary fiber-localized part of the same species or the same individual of food material, the dietary fiber-localized part and the other part of the food material may be incorporated into the dough composition either separately or in the form of the food material containing both parts. The dietary fiber-localized part may be insoluble dietary fiber-localized part that satisfies the above requirement.

The definitions of the terms "dietary fiber-localized part," "insoluble dietary fiber-localized part," "edible part," and "non-edible part" are as explained above.

When a dietary fiber-localized part is incorporated in the dough composition, it may preferably be made into the form of micronized product. Micronization of a dietary fiber-localized part may be carried out on an isolated product of the dietary fiber-localized part or on a dietary fiber-containing food ingredient containing the dietary fiber-localized part, although it is convenient to separate the dietary fiber-localized part from the other parts before micronization, since dietary fiber-localized parts are normally difficult to micronize. Examples of such embodiments include: an embodiment including separating the seed skin of pulse from other edible parts, micronizing the separated pulse seed skin, and mixing the micronized pulse seed skin with the edible part of pulse which has been micronized separately; an embodiment including separating the bran of cereal from other edible parts, micronizing the separated cereal bran, and mixing the micronized cereal bran with the edible part of cereal which has been micronized separately; and an embodiment including separating the seed skin of psyllium (psyllium husk) from other edible parts, micronizing the separated psyllium husk, and mixing the micronized psyllium husk with the edible part of psyllium which has been micronized separately. It is also preferred that the above requirement is satisfied when the dietary fiber-localized part is an insoluble dietary fiber-localized part that contains hard tissue.

On the other hand, if powerful micronization method can be employed, it may be advantageous from the industrial viewpoint to micronize a dietary fiber-localized part (especially insoluble dietary fiber-localized part) in the form of a dietary fiber-containing food ingredient containing the dietary fiber-localized part without separation, because the step of separating the food ingredient into parts can be omitted. Examples of such embodiments include subjecting pulse with seed skin or cereal with bran to micronization without any separation.

The dough composition may preferably contain both a micronized product of a dietary fiber-localized part (especially insoluble dietary fiber-localized part) and a micronized product of a different part of the same kind of food ingredient. In this case, the micronized dietary fiber-localized part may be once separated from the food ingredient before being micronized, or may be micronized in the form of a dietary fiber-containing food ingredient containing the dietary fiber-localized part.

When micronizing a food material containing dietary fiber-localized part or dietary fiber-localized part (or insoluble dietary fiber-localized part), the means of pulverization to be used as conditions for micronization in the present invention is not particularly limited. Specifically, the temperature during pulverization is not particularly limited, and may be high-temperature pulverization, normal-temperature pulverization, or low-temperature pulverization. Examples of devices for the micronization process include, but are not limited to, blenders, mixers, mills, kneaders, crushers, disintegrators, and grinders. Specific examples that can be used include, for example, media stirring mills such as dry bead mills ball mills (rolling, vibrating, etc.), jet mills, high-speed rotating impact mills (pin mills, etc.), roll mills, hammer mills, etc.

Micronization of a dietary fiber-localized part (especially insoluble dietary fiber-localized part) may preferably be carried out such that the particle diameter $d_{50}$ of the microparticle complexes after disturbance (e.g., ultrasonication) is adjusted to within a predetermined range. Specifically, the particle diameter $d_{50}$ after disturbance may preferably be within the range of 1 $\mu$m or more but 450 $\mu$m or less. More specifically, the upper limit may preferably be typically 450 $\mu$m or less, particularly 400 $\mu$m or less, or 350 $\mu$m or less, or 300 $\mu$m or less, or 250 $\mu$m or less, or 200 $\mu$m or less, or 150 $\mu$m or less, or 100 $\mu$m or less. On the other hand, the lower limit is not particularly restricted, but may be 1 $\mu$m or more, particularly 5 $\mu$m or more, or 7 $\mu$m or more.

Micronization of a dietary fiber-localized part (especially insoluble dietary fiber-localized part) may preferably be carried out such that the particle diameter $d_{90}$ of the microparticle complexes after disturbance (e.g., ultrasonication) is adjusted to within a predetermined range. Specifically, the particle diameter $d_{90}$ after disturbance may preferably be within the range of 1 $\mu$m or more but 500 $\mu$m or less. More specifically, the upper limit may preferably be typically 500 $\mu$m or less, or 450 $\mu$m or less, particularly 400 $\mu$m or less, or 350 $\mu$m or less, or 300 $\mu$m or less, or 250 $\mu$m or less, or 200 $\mu$m or less, or 150 $\mu$m or less, or 100 $\mu$m or less. On the other hand, the lower limit is not particularly restricted, but may be 1 $\mu$m or more, particularly 5 $\mu$m or more, or 7 $\mu$m or more.

Micronization of a dietary fiber-localized part (especially an insoluble dietary fiber-localized part) may preferably be carried out such that the specific surface area per unit volume of (microparticles and microparticle complexes) in a crushed product of the dietary fiber-localized part after disturbance (e.g., ultrasonication) may preferably be within the range of 0.01 [$m^2$/mL] or more 1.50 [$m^2$/mL] or less. More specifically, the upper limit may preferably be typically 0.01 [$m^2$/mL] or more, particularly 0.02 [$m^2$/mL] or more, or 0.03 [$m^2$/mL] or more may preferably be. On the other hand, the upper limit is not particularly restricted, but may preferably be typically 1.50 [$m^2$/mL] or less, particularly 1.00[$m^2$/mL] or

less, or 0.90 [m$^2$/mL] or less, or 0.80 [m$^2$/mL] or less.

The specific surface area per unit volume [m$^2$/mL] herein refers to a specific surface area of particles per unit volume (1 mL) measured with a laser diffraction particle size distribution analyzer, assuming that the particles are spherical. The specific surface area of particles per unit volume assuming that the particles are spherical is a value based on a different mechanism from, e.g., those of values reflecting the constitution of particles and surface structures of particles (specific surface area per volume and per mass determined by, e.g., permeation and gas adsorption methods). The specific surface area of particles per unit volume assuming that the particles are spherical can be calculated as 6 × Σ(ai)/Σ(ai*di) particle where ai represents a surface area per particle and di represents a particle diameter.

Specifically, the specific surface area per unit volume of a composition after disturbance (e.g., ultrasonication) may be measured by subjecting a dispersion of the composition to disturbance treatment (e.g., ultrasonication), and then carrying out measurement under the following conditions. When measuring the composition, ethanol, which is unlikely to affect the structure of the sample, is used as the solvent. Specifically, 1g of the sample is immersed in 50g of ethanol, left to stand for about 5 minutes, and agitated vigorously with spatula to disperse the sample. The dispersion is then filtered using an 8-mesh sieve with an opening of 2.36 mm and a wire diameter (Wire Dia.) of 1.0mm (e.g., a sieve which corresponds to "No. 8" defined in "Alternative" of Nominal Dimensions, Permissible Variation for Wire Cloth of Standard Testing Sieves (U.S.A.) according to U.S.A. Standard Testing Sieves ASTM Specifications E 11-04), and the resulting solution (2 mass % ethanol dispersion liquid) is subjected to measurement. More specifically, 100 g of the suspension of the composition (20°C) is spread evenly on the sieve and processed by vibrating it with a load that does not change the composition size until the fractional mass on the sieve becomes constant, and the solution that has passed the sieve is used as a 2 mass% ethanol dispersion liquid for the measurement. The laser diffraction particle size analyzer used for the measurement is not limited to any particular type, an example being Microtrac MT3300 EXII system marketed by Microtrac Bell Inc. The measurement application software used for the measurement is not limited, an example being DMS2 (Data Management System version 2, Microtrac Bell Inc.). When the device and the application software mentioned above are used, the measurement can be carried out by: carrying out cleaning by pressing the Wash button of the software; carrying out calibration by pressing the Set Zero button of the software; and directly loading the sample via the Sample Loading feature until the sample concentration is within the proper range. After the sample is loaded, the measurement sample is subjected to ultrasonic treatment by the measurement device, followed by measurement. Specifically, a sample that has not been subjected to ultrasonic treatment is put into the measurement solvent (ethanol) circulating in the measurement system, the concentration is adjusted to within the appropriate range using the Sample Loading feature, and then the ultrasonic treatment is performed by pressing the Ultrasonic Treatment button of the software. Then, after three times of defoaming, the sample loading can be carried out again to adjust the concentration to within the appropriate range. Thereafter, the sample is promptly laser diffracted at a flow rate of 60% with a measurement time of 10 seconds, and the result is used as the measurement value. The parameters for the measurement may be, e.g., Distribution indication: Volume; Particle refractive index: 1.60; Solvent refractive index: 1.36; Upper limit of measurement: 2,000.00 μm; Lower limit of measurement: 0.021 μm.

When determining the specific surface area per unit volume of a composition after disturbance (e.g., ultrasonication), it is preferable to measure the particle size distribution in terms of channels (CH), and then use the particle diameter for each measurement channel listed in Table B below as a standard. Specifically, according to Table B below, the frequency of particles that are smaller than the particle diameter specified for each channel and larger than the particle diameter specified for the channel with one number larger (for the largest channel in the measurement range, the particle diameter of the lower limit) is measured for each channel in Table B below, and the total frequency for all channels in the measurement range is used as the denominator to obtain the particle frequency % for each channel (also referred to as "particle frequency % for XX channel"). For example, the particle frequency % of channel 1 represents the frequency % of particles of 2000.00 μm or smaller but larger than 1826.00 μm.

[Table B]

| Channel | Particle size (μm) | Channel | Particle size (μm) | Channel | Particle size (μm) | Channel | Particle size (μm) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |

(continued)

| Channel | Particle size ($\mu$m) | Channel | Particle size ($\mu$m) | Channel | Particle size ($\mu$m) | Channel | Particle size ($\mu$m) |
|---|---|---|---|---|---|---|---|
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

The pulse and/or cereal contained in the dough composition prepared in step (i) may preferably be in the form of pulse powder and/or cereal powder which has a particle diameter $d_{90}$ of a predetermined limit or lower after ultrasonication. Specifically, the particle diameter $d_{90}$ of the pulse and/or cereal after ultrasonication may preferably be within the range of 1 $\mu$m or more less than 500 $\mu$m. More specifically, the upper limit may preferably be typically less than 500 $\mu$m, particularly 450 $\mu$m or less, or 400 $\mu$m or less, or 350 $\mu$m or less, or 300 $\mu$m or less, or 250 $\mu$m or less, or 200 $\mu$m or less, or 150 $\mu$m or less, or 100 $\mu$m or less. On the other hand, the lower limit is not particularly restricted, but may be 1 $\mu$m or more, particularly 5 $\mu$m or more, or 7 $\mu$m or more, or 10 $\mu$m or more.

An enzyme-treated product of psyllium seed skin (psyllium husk), which has been treated with an enzyme (preferably cellulase and/or pectinase and/or xylanase, more preferably at least xylanase and/or pectinase) for use in the preparation of the dough composition in step (i), is also included in the subject matter of the present invention.

*Step (ii):

Step (ii) is to swell the dough composition by heating. This heating process usually promotes the enzymatic treatment mentioned above (e.g., cellulase and/or xylanase and/or pectinase treatment) at this step, whereby the starch in the dough composition is broken down by the degradative enzyme while the composition is swollen. In this regard, when the aforementioned enzyme treatment is carried out, a raw material treated with enzyme in advance may be used, enzyme treatment may be performed in step (i), enzyme treatment may be performed in step (ii), or a combination of both methods may be used. Specifically, the enzyme treatment may be carried out in step (i) and/or in step (ii).

The duration of heating at step (ii) may be determined as appropriate, based on the reaction rate determined from enzyme activity, reaction temperature and moisture content on a dry mass basis in the dough composition, as well as the change ratios of AUC3.5 and AUC5.0. For example, the duration of heating at step (ii) may preferably be typically 1 minute or more but 24 hours or less. Specifically, its lower limit may preferably be typically 1 minute or more, or 2 minutes or more, or 3 minutes or more. The upper limit is not particularly limited, but may preferably be typically 24 hours or less, or 16 hours or less.

The heating temperature at step (ii) may also be determined as appropriate, based on, e.g., the change ratios of AUC3.5 and AUC5.0, but may preferably be within the range of 30 °C or higher and 300 °C or lower. More specifically, the upper limit may preferably be typically 30 °C or higher, particularly 40 °C or higher, or 50 °C or higher, or 60 °C or higher, or 70 °C or higher, or 80 °C or higher, or 90 °C or higher, or 95 °C or higher, or 100 °C or higher, or 105 °C or higher, or 110 °C or higher, or 115 °C or higher, especially 120 °C or higher. On the other hand, the upper limit is not particularly restricted, but may be typically 300 °C or lower, particularly 290 °C or lower, or 280 °C or lower, or 270 °C or lower, or 260 °C or lower, or 250 °C or lower, or 240 °C or lower, or 230 °C or lower, or 220 °C or lower.

The pressure during heating at step (ii) is not limited and may be determined unless inhibiting the swelling of the composition, but may be typically normal procedure.

More specifically, when the swollen composition of the present invention is a fermented swollen composition, the production method of the fermented swollen composition explained below can be employed. In this case, with regard to the requirements for step (ii) (specifically, the requirements relating to the state before and after the heat treatment at step (ii)) in the production method of the fermented swollen composition, it is sufficient if the "after treatment" requirement is satisfied at the completion of the heating and kneading step (ii-a) and the baking step (ii-b), which are described below, but the requirement may be satisfied at the completion of the heating and kneading step (ii-a).

In addition, if the composition of the present invention is a non-fermented swollen composition, it is possible to adopt the production method of the non-fermented swollen composition explained below. In this case, with regard to the requirements for step (ii) (specifically, the requirements relating to the state before and after the heat treatment at step (ii)) in the production method of the non-fermented swollen composition 1, it is sufficient if the "after treatment" requirement is satisfied at the completion of the heating and kneading step (ii-2a) and the baking step (ii-2b), which are described below, but the requirement may be satisfied at the completion of the heating and kneading step (ii-2a).

(Production method of the fermented swollen composition)

Step (ii) includes:

(ii-a) yeast-fermenting the dough composition from step (i); and
(ii-b) subjecting the yeast-fermented composition from step (ii-a) to heating treatment.

(Production method of the non-fermented swollen composition)

Step (ii) includes:

(ii-2a) mixing the dough composition from step (i) with air bubbles and/or an expansion agent; and
(ii-2b) subjecting the mixed composition from step (ii-2a) to heating treatment.

The swelling of the dough composition by heating treatment in step (ii) may preferably be carried out so as to satisfy the following conditions.

The dry mass basis moisture content in the composition may preferably be decreased before and after the heat treatment at step (ii) by a predetermined ratio or more (i.e., the decremental ratio calculated as "{(the ratio in the dough composition before the heat treatment) - (the ratio in the dough composition after the heat treatment)}/ (the ratio in the dough composition before the heat treatment)" may preferably be a predetermined value or higher). Specifically, the decremental ratio before and after the heat treatment at step (ii) may preferably be within the range of 5 mass % or more but 100 mass % or less. More specifically, the lower limit of the decremental ratio may preferably be typically 5 mass % or more, particularly 9 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more. The reason for this is not clear, but it is estimated that when this ratio is high, the degradation of starch in the dough composition during the heating process is accelerated and the composition is preferably swollen. On the other hand, the upper limit of the decremental ratio is not particularly restricted, but may be typically 100 mass % or less, or 98 mass % or less, or 96 mass % or less, or 94 mass % or less, or 92 mass % or less, or 90 mass % or less, or 80 mass % or less, or 70 mass % or less.

In the case of fermented swollen compositions prepared via the production process including a fermentation step (e.g., breads or bread-like foods), the dry mass basis moisture content decrease ratio before and after the heat treatment at step (ii) may preferably be relatively low (i.e., the decremental ratio calculated as "{(the ratio in the dough composition before the fermentation and the heat treatment) - (the ratio in the dough composition after the fermentation and the heat treatment)}/ (the ratio in the dough composition before the fermentation and the heat treatment)" may preferably be a predetermined value or higher). Specifically, the decrease ratio before and after the heat treatment at step (ii) may preferably be within the range of 5 mass % or more 80 mass % or less. More specifically, the lower limit of the decrease ratio may be typically 5 mass % or more, or 9 mass % or more, or 15 mass % or more. On the other hand, the upper limit of the decrease ratio is not particularly restricted, but may be typically less than 80 mass %, particularly less than 70 mass %, or less than 60 mass % from the viewpoint of industrial production efficiency.

Unless otherwise specified in the present invention, the statement "before the heat treatment" herein refers to the state of the dough composition immediately after preparation at step (i) and the statement "after the heat treatment" herein refers to the state of the swollen composition after step (ii) has been completed.

During the heating treatment of step (ii), the ratio of the methionol content in terms of wet mass basis (ppb) (Value $\alpha$) to $AUC_{5.0}$ (Value $\beta$) ([Value $\alpha$] / [Value $\beta$]) may preferably increase by a predetermined value or more (i.e., the increase ratio defined by "{(the ratio in the composition after the heating treatment) - (the ratio in the dough composition before the heating treatment)} / (the ratio in the dough composition before the heating treatment)" is equal to or higher than a certain value). Specifically, the increase ratio of [Value $\alpha$] / [Value $\beta$] may be within the range of 5 % or more, while its upper limit may preferably be, although is not particularly limited to, 5000 % or less. More specifically, the lower limit of the increase ratio of [Value $\alpha$] / [Value $\beta$] may preferably be typically 5 % or more, or 8 % or more, or 10 % or more, or 20 % or more, or 30 % or more, or 35 % or more, or 40 % or more, or 50 % or more, or 80 % or more, or 100 % or more, or 140 % or more, or 230 % or more, or 300 % or more, or 350 % or more, or 400 % or more. When this value is below the lower limit mentioned above, it may be difficult for the swollen composition to swell or to exhibit viscoelasticity. On the other hand, the upper limit of the increase ratio of [Value $\alpha$] / [Value $\beta$] may be, although is not particularly limited to, 5000 % or less, or 4500 % or less, or 4000 % or less. The specified ranges of Value $\alpha$ and Value $\beta$ are as described above.

During the heating treatment of step (ii), AUC5.0 of the composition may preferably decrease by a predetermined value or more (i.e., the decrease ratio defined by "{ (the ratio in the composition after the heating treatment) - (the ratio in the dough composition before the heating treatment)} / (the ratio in the dough composition before the heating treatment)" is equal to or higher than a certain value). Specifically, the decrease ratio during the heating treatment of step (ii) may preferably be within the range of 5 % or more but 100 % or less. More specifically, the lower limit of the decrease ratio may preferably be typically 5 % or more, or 10 % or more, or 15 % or more, or 20 % or more, or 25 % or more, or 30 % or more, or 35 % or more, or decreases by 40 % or more. Although the reason for this is unknown, it is deemed that the larger the decrease ratio, the more easily the dough composition swells during the heat treatment, and the more pores with specific shapes are formed, because compositions with high AUC 5.0 are considered to be less likely to swell during heat treatment, making it difficult to form pores with specific shapes. The upper limit of the decrease ratio is not particularly limited, but may preferably be typically 100 % or less, or 90 % or less. Incidentally, because the values in the composition after the heat treatment do not change significantly after subsequent cooling to ambient temperature, the values for the composition measured after cooling to ambient temperature can be adopted as the relevant values for the composition after the heat treatment.

During the heating treatment of step (ii), AUC3.5 of the composition may preferably increase by a predetermined value or more (i.e., the increase ratio defined by "{(the ratio in the composition after the heating treatment) - (the ratio in the dough composition before the heating treatment)} / (the ratio in the dough composition before the heating treatment)" is equal to or higher than a certain value). Specifically, the increase ratio during the heating treatment of step (ii) may preferably be within the range of 5 % or more but 500 % or less. More specifically, the lower limit of the increase ratio may preferably be typically 5 % or more, or 10 % or more, or 15 % or more, or 20 % or more, or 25 % or more, or 30 % or more, or 35 % or more, or increases by 40 % or more. Although the reason for this is unknown, it is deemed that the larger the decrease ratio, the more easily the dough composition swells during the heat treatment, and the more pores with specific shapes are formed, because compositions with high AUC3.5 are thought to promote swelling after heat treatment, soften the hardening of the composition due to cooling, and facilitate the formation and maintenance of the pores characteristic of the present invention. On the other hand, the upper limit of the increase ratio is not particularly limited, but may preferably be typically 500 % or less, or 400 % or less, or 300 % or less, or 250 % or less, or 210 % or less, or 200 % or less, or 150 % or less, or 100 % or less, or 95 % or less, or 90 % or less, or 85 % or less, or 80 % or less, or 75 % or less, or 70 % or less, or 65 % or less. Incidentally, because the values in the composition after the heat treatment do not change significantly after subsequent cooling to ambient temperature, the values for the composition measured after cooling to ambient temperature can be adopted as the relevant values for the composition after the heat treatment.

During the heating treatment of step (ii), the ratio of AUC5.0 to AUC3.5 of the composition ([AUC5.0] / [AUC3.5]) may preferably decrease by a predetermined value or more (i.e., the decrease ratio defined by "{(the ratio in the composition after the heating treatment) - (the ratio in the dough composition before the heating treatment)} / (the ratio in the dough composition before the heating treatment)" is equal to or higher than a certain value). Specifically, the decrease ratio during the heating treatment of step (ii) may preferably be within the range of 10 % or more but 100 % or less. More specifically, the lower limit of the decrease ratio may preferably be typically 10 % or more, or 15 % or more, or 20 % or more, or 25 % or more, or 30 % or more, or 35 % or more, or decreases by 40 % or more. Although the reason for this is unknown, it is deemed that a larger decrease rate results in a composition of desirable quality that balances the ease of swelling in the dough composition during the heat treatment and the resistance to hardening after the heat treatment. On the other hand, the upper limit of the decrease ratio is not particularly limited, but may preferably be typically 100 % or less, or 90 % or less, or 80 % or less. Incidentally, because the values in the composition after the heat treatment do not change significantly after subsequent cooling to ambient temperature, the values for the composition measured after cooling to ambient temperature can be adopted as the relevant values for the composition after the heat treatment.

During the heating treatment of step (ii), the (weighted average area) / (weighted average perimeter) ratio of the swollen composition of the present invention may preferably increase by a predetermined value or more (i.e., the increase ratio defined by "{(the ratio in the composition after the heating treatment) - (the ratio in the dough composition before the heating treatment)} / (the ratio in the dough composition before the heating treatment)" is equal to or higher than a certain value). Specifically, the increase ratio may preferably be within the range of 5 % or more but 50000 % or less. More specifically, the lower limit of the increase ratio may preferably be typically 5 % or more, or 6 % or more, or 7 % or more, or 8 % or more, or 9 % or more, or 10 % or more, or 15 % or more, or 20 % or more, or 30 % or more, or 40 % or more, or 50 % or more, or 100 % or more, or 500 % or more, or 1000 % or more, or 3000 % or more, or 5000 % or more. Although the reason for this is unknown, it is deemed that air bubbles in the dough composition may rapidly expand. On the other hand, the upper limit of the increase ratio is not particularly limited, but may preferably be typically 50000 % or less, or 40000 % or less, or 30000 % or less, or 20000 % or less.

During the heating treatment of step (ii), of the swollen composition of the present invention the total area of pores with an aspect ratio of 3.5 or more and a degree of circularity factor of 0.3 or more may preferably increase by a predetermined value or more (i.e., the increase ratio defined by "{(the ratio in the composition after the heating treatment) - (the ratio in the dough composition before the heating treatment)} / (the ratio in the dough composition before the heating treatment)" is equal to or higher than a certain value). Specifically, the increase ratio may preferably be within the range of 50 % or more but 100000 % or less. More specifically, the lower limit of the increase ratio may preferably be typically 50 % or more, or 100 % or more, or 150 % or more, or 180 % or more, or 200 % or more, or 250 % or more, or 280 % or more, or 300 % or more, or 330 % or more, or 380 % or more, or 400 % or more, or 450 % or more, or 480 % or more, or 500 % or more, or 550 % or more, or 900 % or more, or 1000 % or more, or 2000 % or more, or 9000 % or more. Although the reason for this is unknown, it is deemed that air bubbles in the dough composition may rapidly expand. On the other hand, the upper limit of the increase ratio is not particularly limited, but may preferably be typically 100000 % or less, or 90000 % or less, or 80000 % or less, or 70000 % or less.

During the heating treatment of step (ii), the total area of pores having areas of more than 10000 $\mu m^2$ in the swollen composition of the present invention may preferably increase by a predetermined value or more (i.e., the increase ratio defined by "{(the ratio in the composition after the heating treatment) - (the ratio in the dough composition before the heating treatment)} / (the ratio in the dough composition before the heating treatment)" is equal to or higher than a certain value). Specifically, the increase ratio may preferably be within the range of 1 % or more but 100000 % or less. More specifically, the lower limit of the increase ratio may preferably be typically 1 % or more, or 5 % or more, or 10 % or more, or 30 % or more, or 50 % or more, or 100 % or more, or 150 % or more, or 180 % or more, or 200 % or more, or 250 % or more, or 280 % or more, or 300 % or more, or 330 % or more, or 380 % or more, or 400 % or more, or 450 % or more, or 480 % or more, or 500 % or more. Although the reason for this is unknown, it is deemed that air bubbles in the dough composition may rapidly expand. On the other hand, the upper limit of the increase ratio is not particularly limited, but may preferably be typically 100000 % or less, or 90000 % or less, or 80000 % or less, or 70000 % or less, or 60000 % or less, or 50000 % or less.

The swollen composition of the present invention may preferably be characterized in that during the heating treatment of step (ii), the composition volume increases by 1 % or more (i.e., the increase ratio defined by "{(the volume in the composition after the heating treatment) - (the volume in the dough composition before the heating treatment)} / (the volume in the dough composition before the heating treatment)" is equal to or higher than a certain value). Specifically, the increase ratio may preferably be within the range of 1 % or more but 2000 % or less. More specifically, the lower limit of the increase ratio may preferably be typically 1 % or more, or 2 % or more, or 3 % or more, or 4 % or more, or 5 % or more, or 6 % or more, or 7 % or more, or 8 % or more, or 9 % or more, or 10 % or more, or 15 % or more, or 20 % or more, or 30 % or more, or 40 % or more, or 50 % or more. Although the reason for this is unknown, it is deemed that air bubbles in the composition may expand to increase the composition volume. On the other hand, the upper limit of the increase ratio is not particularly limited, but may preferably be typically 2000 % or less, or 1500%, or 1000%, or 800%, or 600 % or less, or 400 % or less, or 300 % or less, or 200 % or less, or 150 % or less.

The swollen composition of the present invention may preferably retain its swollen state even after the heating treatment of step (ii). Specifically, when the composition after the heating treatment of step (ii) is cooled to ordinary temperature (20°C), the decrease ratio of the total porosity of the composition is equal to or higher than a predetermined value (i.e., the decrease ratio defined by "{(the ratio of the composition after step (ii) (maximum value)) - (the ratio of the composition after cooling at ordinary temperature (maximum value))} / (the ratio of the composition after step (ii) (maximum value))" is equal to or higher than a certain value). Specifically, the decrease ratio may preferably be within the range of 0 % or more but 50 % or less. More specifically, the lower limit of the decrease ratio may preferably be typically 50 % or less, or 45 % or less, or 40 % or less, or 35 % or less, or 30 % or less, or 25 % or less, or 20 % or less. Although the reason for this is unknown, it is deemed that compositions having small values for this ratio cannot retain their swollen states and tend to rapidly shrink after the heating treatment. On the other hand, the lower limit of the decrease ratio is not particularly limited, but may preferably be typically 0 % or more, or 5 % or more.

The swollen composition of the present invention may preferably be characterized in that when the composition after the heating treatment of step (ii) is cooled to ordinary temperature (20°C), the decrease ratio of the volume of the composition is equal to or higher than a predetermined value (i.e., the decrease ratio defined by "{(the ratio of the composition after step (ii) (maximum value)) - (the ratio of the composition after cooling at ordinary temperature (maximum value))} / (the ratio of the composition after step (ii) (maximum value))" is equal to or higher than a certain value). Specifically, the decrease ratio may preferably be within the range of 0 % or more but 50 % or less. More specifically, the upper limit of the decrease ratio may preferably be typically 50 % or less, or 45 % or less, or 40 % or less, or 35 % or less, or 30 % or less, or 25 % or less, or 20 % or less. Although the reason for this is unknown, it is deemed that compositions having large values for this ratio cannot retain their swollen states and tend to rapidly shrink after the heating treatment. On the other hand, the lower limit of the decrease ratio is not particularly limited, but may preferably be typically 0 % or more, or 5 % or more.

*Step (iii):

The production method of the present invention includes at least step (i) and (ii), but may preferably include, in addition to steps (i) and (ii), the step of subjecting the swollen composition from step (ii) to treatment under reduced pressure (step (iii)). Providing this step (iii) of subjecting the swollen composition from step (ii) to treatment under reduced pressure may be preferable because this may help prevent the swollen composition from shrinking and also adjust the pores in the composition to desired sizes. It is also desirable because it may be easier to perceive favorable aromas derived from raw materials (e.g., pulse and/or cereal). Although the principle behind this is unknown, it is deemed that the reduced pressure step may remove unpleasant odors derived from the raw materials of the swollen composition and facilitates the perception of favorable aromas retained in the pores. The reduced pressure treatment step (iii) may be carried out by using, although is not limited to, using a known vacuum cooler. The pressure condition of the reduced pressure treatment may be, although is not limited to, within the range of 0.01 bar or more but 0.9 bar or less. Specifically, the lower limit of the pressure may preferably be typically 0.01 bar or more, or 0.03 bar or more, or 0.05 bar or more, or 0.07 bar or more, or 0.08 bar or more, or 0.09 bar or more, or 0.1 bar or more. On the other hand, the upper limit is not particularly limited, but may preferably be typically 0.9 bar or less, or 0.8 bar Pa or less, or 0.7 bar or less, or 0.6 bar or less. The temperature condition of the reduced pressure treatment in step (iii) may be, although is not limited to, within the range of 0 °C or more but 60 °C or less. Specifically, the lower limit of the temperature may preferably be, although is not limited to, 0 °C or more, or 5 °C or more, or 10 °C or more, or 15 °C or more, or 20 °C or more. On the other hand, the upper limit of the temperature may preferably be, although is not limited to, 60 °C or less, or 55 °C or less, or 50 °C or less. The time duration of the reduced pressure treatment in step (iii) may be, although is not limited to, within the range of 0.1 minute or more but 60 minutes or less. Specifically, the lower limit of the duration may preferably be, although is not limited to, 0.1 minute or more, or 0.5 minute or more, or 1 minute or more, or 1.5 minutes or more, or 2 minutes or more. On the other hand, the upper limit of the duration may preferably be, although is not limited to, 60 minutes or less, or 40 minutes or less, or 20 minutes or less, or 5 minutes or less.

[Intermediate processing and/or Post-processing]

The swollen composition of the invention can be obtained by carrying out at least the steps (i) and (ii) explained above, but additional intermediate treatments and/or post-treatments may be added. Additional intermediate treatments and/or post-treatments include fermentation, molding, drying, and isothermal treatments.

Fermentation treatment may typically be carried out between step (i) and step (ii). The method and form of fermentation are not restricted, and may be carried out under any conditions using methods known in the art. For example, fermentation may typically be carried out by mixing the dough composition with yeast and holding it at a predetermined temperature for a predetermined time. The yeast for fermentation is not particularly restricted. Examples include sake yeast, bakery yeast, beer yeast, and wine yeast. The temperature during fermentation is also not restricted, but may preferably be within the range of 0 °C or higher but 60 °C or lower. More specifically, the lower limit may preferably be typically 0 °C or higher, particularly 4 °C or higher, still particularly 10 °C or higher. The upper limit is also not particularly restricted, but may be typically 60 °C or lower, particularly 50 °C or lower. The duration of fermentation is also not restricted, but may be typically 30 minutes or more, particularly 60 minutes or more, and typically 36 hours or less, particularly 24 hours or less. For example, fermentation may preferably be carried out at a temperature of 0 °C or higher but 40 °C or lower (more preferably 35 °C or lower, or 30 °C or lower, or 25 °C or lower, or 20 °C or lower) for 10 hours or more but 36 hours or less, since this may result in a fragrant composition.

The yeast content in the swollen composition of the present invention in terms of wet mass basis may preferably be within the range of 0 mass % or more but 10 mass % or less. More specifically, the upper limit of the yeast content may preferably be typically 10 mass % or less, or 9 mass % or less, or 8 mass % or less, or 7 mass % or less, or 6 mass % or less, or 5 mass % or less, or 4 mass % or less, or 3 mass % or less. On the other hand, its lower limit may preferably be, although is not limited to, 0 mass % or more, or 0 .1 mass % or more.

Molding treatment may typically be carried out between step (i) and step (ii) and/or after step (ii). The method and form of molding are not restricted, and may be carried out into any shape using methods known in the art. For example, in order to produce compositions in elongated shapes such as pasta, Chinese noodles, or other noodles, the composition can be extruded into elongated forms using an extruder or other devices described above. On the other hand, in order to produce compositions in flat plate shapes, the composition may be molded into flat plate shapes. Furthermore, the composition can be made into any shape such as elongated, granular, or flaky shapes, by, e.g., press-molding the composition or cutting or die-cutting the flat-plate shaped composition.

Isothermal treatment may typically be carried out between step (i) and step (ii). For example, the composition prepared at step (i) may be subjected to isothermal treatment at a predetermined temperature or higher with maintaining a dry mass basis moisture content of a predetermined value or higher, since this may serve to improve swellability. The treatment temperature is not restricted, but may preferably be within the range of 60 °C or higher but 300 °C or lower. More specifically, the lower limit may preferably be typically 60 °C or higher, particularly 70 °C or higher, or 90 °C or higher, or 100 °C or higher. The upper limit is not particularly restricted, but may be typically 300 °C or lower, or 250 °C or lower. The duration of isothermal treatment may be typically 15 minutes or more, particularly 30 minutes or more, and typically 10 hours or less, particularly 5 hours or less. The dry mass basis moisture content in the composition during isothermal treatment is not particularly restricted, but may preferably be within the range of more than 30 mass % but 200 mass % or less. More specifically, the lower limit may preferably be typically more than 30 mass %, particularly more than 40 mass %, or more than 50 mass %, or more than 60 mass %, or more than 70 mass %, or more than 80 mass %, and typically 200 mass % or less, particularly 175 mass % or less, or 150 mass % or less.

[Others]

The above explanation was made to the swollen composition of the present invention and the production method of the present invention as aspects of the present invention. However, the present invention is not limited to these aspects. A person skilled in the art can conceive of various inventive concepts based on this disclosure and technical common knowledge, and such inventive concepts shall also be included in the aspects of the present invention.

For example, as mentioned above, in step (i) of the production method of the present invention, it is preferable to use a specific dough composition containing starch derived from pulse and/or cereal and satisfying the various properties mentioned above. In this regard, a dough composition for use in step (i) of the production method of the present invention that contains starch derived from pulse and/or cereal and satisfies the various properties mentioned above constitutes another aspect of the present invention. The dough composition may typically satisfy at least the requirements (1) to (4) below, and also may preferably satisfy any other various requirements mentioned above. The details of the dough composition, such as its characteristics and properties, are as described above in relation to the production method of the present invention.

(1) The starch content in terms of wet mass basis is 3 mass % or more.

(2) The dry mass basis moisture content is more than 60 mass %.
(3) The dietary fiber content in terms of wet mass basis is 3.0 mass % or more.
(4) The methionol content in terms of wet mass basis is 0.1 ppb or more.

In addition, as mentioned above, when preparing the dough composition in step (i) of the production method of the present invention, it is preferable to use a specific food crushed product containing starch derived from pulse and/or cereal and satisfying the various properties mentioned above. In this regard, a food crushed product for use in the preparation of the dough composition in step (i) of the production method of the present invention that contains starch derived from pulse and/or cereal and satisfies the various properties mentioned above constitutes another aspect of the present invention. The food crushed product may typically satisfy at least the requirements (1) to (7) below, and also may preferably satisfy any other various requirements mentioned above. The details of the food crushed product, such as its characteristics and properties, are as described above in relation to the production method of the present invention.

(1) The starch content in terms of wet mass basis is 3 mass % or more.
(2) The dry mass basis moisture content is less than 25 mass %.
(3) The dietary fiber content in terms of wet mass basis is 3.0 mass % or more.
(4) The degree of gelatinization of starch is less than 50 mass %.
(5) When subjected to ultrasonication, the specific surface area per unit volume is 0.10m$^2$/mL or more.
(6) When the food crushed product is subjected to measurement according to <Method c>, the ratio of [Value $\delta$] / [Value $\gamma$] is 0.1 more.

[Value $\gamma$]: A breakdown viscosity (cP) during temperature increasing step (a1).
[Value $\delta$]: A peak viscosity (cP) during temperature decreasing step (a2).

<Method c> As a measurement sample, 32 g of 22 mass % aqueous slurry of a crushed product of the composition is subjected to measurement using a rapid visco-analyzer with carrying out steps (a1) and (a2) below.

(a1) Temperature increasing step, in which the temperature of the measurement sample is increased from 50 °C to 95 °C at an increasing rate of 6 °C/min and then maintained for 3 minutes.
(a2) Temperature decreasing step, in which the temperature of the measurement sample is decreased from 95 °C to 50 °C at a decreasing rate of 6 °C/min. (7) When 6% suspension of the food crushed product is observed, the number of starch grain structures is 10/mm$^2$ or more.

In addition, as mentioned above, the production method of the present invention can provide a swollen composition that retains good aroma resulting from raw material (e.g., pulse or cereal) powder while suppressing powdery odor derived from raw material (e.g., pulse or cereal) powder, i.e., a swollen composition with improved storage ability at ordinary temperature. In this regard, by carrying out the same steps as those of the production method of the present invention, it is possible to provide a method for improving the volatility of aroma from a swollen composition during storage at ordinary temperature, and a method for improving the storage ability of a swollen composition at ordinary temperature. These methods also constitute other aspects of the present invention. The method for improving the volatility of aroma and the method for improving the storage ability may each include at least steps (i) and (ii) below, and may preferably satisfy any other various conditions and characteristics. The details of these methods, such as their conditions and characteristics, are as described above in relation to the production method of the present invention.

(i) The step of preparing a dough composition containing starch derived from pulse and/or cereal and satisfying the requirements (1) to (4) below.

(1) The starch content in terms of wet mass basis is 3 mass % or more.
(2) The dry mass basis moisture content is more than 60 mass %.
(3) The dietary fiber content in terms of wet mass basis is 3.0 mass % or more.
(4) The methionol content in terms of wet mass basis is 0.1 ppb or more.

(ii) The step of swelling the dough composition from step (i) via heating treatment step, wherein during the heating treatment, the [Value $\alpha$] / [Value $\beta$] ratio of the composition increases by 5 mass % or more, and the dry mass basis moisture content decreases by 5 mass % or more step.

In addition, the swollen composition obtained by the methods above, which retains good aroma resulting from raw material (e.g., pulse or cereal) powder while suppressing powdery odor derived from raw material (e.g., pulse or cereal) powder, i.e., which has improved storage ability at ordinary temperature, also constitutes another aspect of the present invention. According to an embodiment, when the swollen composition of the present invention is stored at ordinary temperature (e.g., 20°C), it may preferably retain good aroma resulting from raw material (e.g., pulse or cereal) powder while suppressing powdery odor derived from raw material (e.g., pulse or cereal) powder for 3 days or more, or 1 week or more, or 2 weeks or more. Based on this feature, according to one embodiment, the swollen composition of the present invention may preferably be able to be stored at ordinary temperature (e.g., 20°C) for 3 days or more, or 1 week or more, or 2 weeks or more.

The details of each of these aspects of the present invention have been described in detail previously for the swollen composition of the present invention and the production method of the present invention.

## EXAMPLES

The present invention will now be described in further detail by way of Examples. These examples are shown merely for convenience of the description, and should not be construed as limitations to the present invention in any sense. The figures in each table are rounded to the nearest tenth of a digit.

[Preparation and parameter measurement of dough compositions]

The dough composition of each of the Test Examples and Comparative Examples was prepared by using a dried pulse powder (prepared using a matured pulse with a dry mass basis moisture content of less than 15 mass % as a raw material) or a dried cereal powder (prepared using a matured cereal with a dry mass basis moisture content of less than 15 mass % as a raw material) indicated in Table 1 below, mixing the raw material and water at ratios indicated in Table 2 below, so as to satisfy the values indicated in Tables 3 and 4 below. The peas used as a pulse contained a dietary fiber-localized part, i.e., "seed skin," and the oats used as a cereal contained a dietary fiber-localized part, i.e., "bran." Each dried pulse powder or cereal powder in Table 1 is obtained by powdering the raw pulses and/or cereals shown in Table 1 in an extruder at a dry mass basis moisture content of 10 mass% on a dry weight basis, a heating temperature of 260°C, and a processing time of 30 seconds, and then naturally drying the resulting powders. For the samples indicated as "Baked at 200°C for 15 minutes" in the baking conditions, the dough composition was baked using Panasonic's NE-MS264. For the samples indicated as "Processing method" in the vegetable raw material origin, the processing was carried out in combination with the treatment in step (ii) (fermentation (but in Test Example 37, expansion by swelling agent) and baking) using HDC-7S1TA, manufactured by HOSHIZAKI Co. For the samples indicated as "Reduced pressure treatment" in step (iii), a CMJ-20QE manufactured by Miura Kogyo was used.

[Table 1-1]

| Table 1 | | Step (i) Dough Composition | | | | | |
|---|---|---|---|---|---|---|---|
| | | Raw Material | | | | | |
| | | Pulse Raw Material | | Cereal Raw Material | | Edible Plant Raw Material (other than pulse and cereal) | |
| | | Species | Content (wet mass basis) | Species | Content (wet mass basis) | Species | Content (wet mass basis) |
| | | | mass % | | mass % | | mass % |
| Comparative Example | 1 | Yellow Pea (with seed skin) | 46.5 | - | - | - | - |
| Test Example | 2 | Yellow Pea (with seed skin) | 46.5 | - | - | - | - |
| Test Example | 3 | Yellow Pea (with seed skin) | 46.5 | - | - | - | - |
| Test Example | 4 | Yellow Pea (with seed skin) | 46.5 | - | - | - | - |
| Test Example | 5 | Yellow Pea (with seed skin) | 46.5 | - | - | - | - |

(continued)

| Table 1 | | Step (i) Dough Composition | | | | | |
|---|---|---|---|---|---|---|---|
| | | Raw Material | | | | | |
| | | Pulse Raw Material | | Cereal Raw Material | | Edible Plant Raw Material (other than pulse and cereal) | |
| | | Species | Content (wet mass basis) | Species | Content (wet mass basis) | Species | Content (wet mass basis) |
| | | | mass % | | mass % | | mass % |
| Test Example | 6 | Yellow Pea (with seed skin) | 46.5 | - | - | - | - |
| Test Example | 7 | Yellow Pea (with seed skin) | 46.5 | - | - | - | - |
| Test Example | 8 | Yellow Pea (with seed skin) | 46.5 | - | - | - | - |
| Test Example | 9 | Yellow Pea (with seed skin) | 46.5 | - | - | - | - |
| Test Example | 10 | Yellow Pea (with seed skin) | 46.5 | - | - | - | - |
| Test Example | 11 | Yellow Pea (with seed skin) | 36.5 | Oat | 10.0 | - | - |
| Test Example | 12 | Yellow Pea (with seed skin) | 6.0 | Oat | 3.0 | Rice | 25.5 |
| Test Example | 13 | Yellow Pea (with seed skin) | 41.5 | - | - | - | - |
| Test Example | 14 | Yellow Pea (with seed skin) | 41.5 | - | - | - | - |
| Comparative Example | 15 | Yellow Pea (with seed skin) | 41.5 | - | - | - | - |
| Test Example | 16 | Yellow Pea (with seed skin) | 41.5 | - | - | - | - |
| Test Example | 17 | Yellow Pea (with seed skin) | 36.5 | - | - | - | - |
| Test Example | 18 | Yellow Pea (with seed skin) | 39.5 | - | - | - | - |
| Test Example | 19 | Yellow Pea (with seed skin) | 39.0 | - | - | - | - |
| Test Example | 20 | Yellow Pea (with seed skin) | 46.5 | - | - | - | - |

[Table 1-2]

| Table 1 | | Step (i) Dough Composition | | | | | |
|---|---|---|---|---|---|---|---|
| | | Raw Material | | | | | |
| | | Pulse Raw Material | | Cereal Raw Material | | Edible Plant Raw Material (other than pulse and cereal) | |
| | | Species | Content (wet mass basis) | Species | Content (wet mass basis) | Species | Content (wet mass basis) |
| | | | mass % | | mass % | | mass % |
| Test Example | 21 | Yellow Pea (with seed skin) | 46.5 | - | - | - | - |
| Test Example | 22 | Yellow Pea (with seed skin) | 33.5 | - | - | - | - |
| Test Example | 23 | Yellow Pea (with seed skin) | 43.5 | - | - | - | - |
| Test Example | 24 | Yellow Pea (with seed skin) | 52.1 | - | - | - | - |
| Test Example | 25 | Yellow Pea (with seed skin) | 52,1 | - | - | - | - |
| Test Example | 26 | Yellow Pea (with seed skin) | 52.1 | - | - | - | - |
| Test Example | 27 | Yellow Pea (with seed skin) | 52.1 | - | - | - | - |
| Comparative Example | 28 | Yellow Pea (with seed skin) | 52.1 | - | - | - | - |
| Test Example | 29 | Yellow Pea (with seed skin) | 59.0 | - | - | - | - |
| Test Example | 30 | Yellow Pea (with seed skin) | 55.1 | - | - | - | - |
| Test Example | 31 | Yellow Pea (with seed skin) | 34.5 | - | - | - | - |
| Test Example | 32 | Yellow Pea (with seed skin) | 11.8 | Oat | 16.0 | - | - |
| Test Example | 33 | Yellow Pea (with seed skin) | 19.8 | - | - | - | - |
| Test Example | 34 | Yellow Pea (with seed skin) | 16.0 | - | - | Rice | 30.5 |
| Test Example | 35 | - | - | Oat | 42.0 | - | - |
| Test Example | 36 | - | - | Oat | 17.0 | Rice | 25.0 |
| Test Example | 37 | Yellow Pea (with seed skin) | 47.00 | - | - | - | - |
| Test Example | 38 | Yellow Pea (with seed skin) | 46.5 | - | - | - | - |
| Test Example | 39 | Mung Bean (with seed skin) | 46.5 | - | - | - | - |

(continued)

| Table 1 | | Step (i) Dough Composition | | | | | |
|---|---|---|---|---|---|---|---|
| | | Raw Material | | | | | |
| | | Pulse Raw Material | | Cereal Raw Material | | Edible Plant Raw Material (other than pulse and cereal) | |
| | | Species | Content (wet mass basis) | Species | Content (wet mass basis) | Species | Content (wet mass basis) |
| | | | mass % | | mass % | | mass % |
| Test Example | 40 | Yellow Pea (with seed skin): 75% Mung Bean (with seed skin) : 25% | 46.5 | - | - | - | - |

[Table 2-1]

| Table 2 | | Step (i) Dough Composition | | | | | |
|---|---|---|---|---|---|---|---|
| | | Starch | | | | | |
| | | Starch Content (wet mass basis) | Ratio of Starch Contained in Pulse to Total Starch Content | Ratio of Starch Contained in Cereal to Total Starch Content | Starch Grains | Degree of Gelatinization | [Value $\delta$] / [Value $\gamma$] |
| | | mass % | % | % | /mm$^2$ | mass % | - |
| Comparative Example | 1 | 23.3 | 100% | 0% | 1734 | 15 | 0.6 |
| Test Example | 2 | 23.3 | 100% | 0% | 1734 | 15 | 0.6 |
| Test Example | 3 | 23.3 | 100% | 0% | 1734 | 15 | 0.6 |
| Test Example | 4 | 23.3 | 100% | 0% | 1734 | 15 | 0.6 |
| Test Example | 5 | 23.3 | 100% | 0% | 1734 | 15 | 0.6 |
| Test Example | 6 | 23.3 | 100% | 0% | 1734 | 15 | 0.6 |
| Test Example | 7 | 23.3 | 100% | 0% | 1734 | 15 | 0.6 |
| Test Example | 8 | 23.3 | 100% | 0% | 1734 | 15 | 0.6 |
| Test Example | 9 | 23.3 | 100% | 0% | 1734 | 15 | 0.6 |
| Test Example | 10 | 23.3 | 100% | 0% | 1734 | 15 | 0.6 |
| Test Example | 11 | 23.9 | 78% | 22% | 1530 | 15 | 0.4 |
| Test Example | 12 | 23.9 | 17% | 9% | 1402 | 17 | 0.4 |
| Test Example | 13 | 20.8 | 100% | 0% | 1628 | 18 | 0.7 |
| Test Example | 14 | 20.8 | 100% | 0% | 1628 | 18 | 0.7 |
| Comparative Example | 15 | 20.8 | 100% | 0% | 1628 | 18 | 0.7 |
| Test Example | 16 | 20.8 | 100% | 0% | 1628 | 18 | 0.7 |
| Test Example | 17 | 18.3 | 100% | 0% | 1734 | 15 | 0.6 |
| Test Example | 18 | 19.8 | 100% | 0% | 1734 | 15 | 0.6 |

(continued)

| Table 2 | | Step (i) Dough Composition | | | | | |
|---|---|---|---|---|---|---|---|
| | | Starch | | | | | |
| | | Starch Content (wet mass basis) | Ratio of Starch Contained in Pulse to Total Starch Content | Ratio of Starch Contained in Cereal to Total Starch Content | Starch Grains | Degree of Gelatinization | [Value δ] / [Value γ] |
| | | mass % | % | % | /mm² | mass % | - |
| Test Example | 19 | 19.5 | 100% | 0% | 1734 | 15 | 0.6 |
| Test Example | 20 | 23.3 | 100% | 0% | 1734 | 15 | 0.6 |

[Table 2-2]

| Table 2 | | Step (i) Dough Composition | | | | | |
|---|---|---|---|---|---|---|---|
| | | Starch | | | | | |
| | | Starch Content (wet mass basis) | Ratio of Starch Contained in Pulse to Total Starch Content | Ratio of Starch Contained in Cereal to Total Starch Content | Starch Grains | Degree of Gelatinization | [Value δ] / [Value γ] |
| | | mass % | % | % | /mm² | mass % | - |
| Test Example | 21 | 23.3 | 100% | 0% | 1734 | 15 | 0.6 |
| Test Example | 22 | 16.8 | 100% | 0% | 1734 | 15 | 0.6 |
| Test Example | 23 | 21.8 | 100% | 0% | 1540 | 13 | 0.5 |
| Test Example | 24 | 26.0 | 100% | 0% | 1232 | 30 | 0.5 |
| Test Example | 25 | 26.0 | 100% | 0% | 770 | 57 | 0.4 |
| Test Example | 26 | 26.0 | 100% | 0% | 154 | 91 | 0.2 |
| Test Example | 27 | 26.0 | 100% | 0% | 62 | 97 | 0.2 |
| Comparative Example | 28 | 26.0 | 100% | 0% | 0 | 100 | 02 |
| Test Example | 29 | 29.5 | 100% | 0% | 1549 | 15 | 0.5 |
| Test Example | 30 | 27.6 | 100% | 0% | 1549 | 15 | 0.5 |
| Test Example | 31 | 17.3 | 100% | 0% | 1549 | 15 | 0.5 |
| Test Example | 32 | 14.9 | 42% | 58% | 1238 | 15 | 0.4 |
| Test Example | 33 | 9.9 | 100% | 0% | 1549 | 15 | 0.5 |
| Test Example | 34 | 31.0 | 34% | 0% | 1255 | 15 | 0.4 |
| Test Example | 35 | 23.6 | 0% | 100% | 1197 | 15 | 0.4 |
| Test Example | 36 | 28.4 | 0% | 41% | 1382 | 15 | 0.4 |
| Test Example | 37 | 23.5 | 100% | 0% | 1622 | 15 | 0.5 |
| Test Example | 38 | 23.3 | 100% | 0% | 1734 | 15 | 0.6 |
| Test Example | 39 | 23.3 | 100% | 0% | 1855 | 18 | 0.5 |
| Test Example | 40 | 23.3 | 100% | 0% | 1530 | 20 | 0.4 |

The dough compositions of the Test Examples and Comparative Examples obtained by the above procedure were subjected to measurement of various parameters using the methods described in the [DESCRIPTION OF EMBODIMENTS] section above. The results of the dough compositions of the Test Examples and Comparative Examples are shown in Tables 3 and 4 below. The "Starch degrading enzyme activity" was 0.2 U/g or higher in all Test Examples. The pectinase used was Pectinase G "Amano" manufactured by Amano Enzyme Inc., and the xylanase used was Hemicellulase "Amano" 90 (Xylanase) manufactured by Amano Enzyme Inc.

[Table 3-1]

| Table 3 | | Step (i) Dough Composition | | | | | | | | | | |
|---|---|---|---|---|---|---|---|---|---|---|---|---|
| | | Dietary Fiber | | | | | | | | | Dietary Fiber Content in Composition (wet mass basis) | Soluble Dietary Fiber Content in Composition (wet mass basis) |
| | | Pulse Raw Material | | Cereal Raw Material | | Edible Plant Raw Material (other than pulse and cereal) | | | | | | |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | | |
| | | | mass % | | mass % | | mass % | mass % | | U/ Dough 100g (wet mass) | mass % | mass % |
| Comparative Example | 1 | Yellow Pea (with seed skin) | 7.0 | - | - | Psyllium seed skin | 3 | 2.7 | Pectinase | 001 | 9.7 | 1.1 |
| Test Example | 2 | Yellow Pea (with seed skin) | 7.0 | - | - | Psyllium Seed Skin | 3 | 2.7 | Pectinase | 0.01 | 9.7 | 1.1 |
| Test Example | 3 | Yellow Pea (with seed skin) | 7.0 | - | - | Psyllium Seed Skin | 3 | 2.7 | Pectinase | 0.01 | 9.7 | 1.1 |
| Test Example | 4 | Yellow Pea (with seed skin) | 7.0 | - | - | Psyllium Seed Skin | 3 | 2.7 | Pectinase | 0.01 | 9.7 | 1.1 |

| Table 3 | | Step (i) Dough Composition | | | | | | | | | | |
|---|---|---|---|---|---|---|---|---|---|---|---|---|
| | | Dietary Fiber | | | | | | | | | Dietary Fiber Content in Composition (wet mass basis) | Soluble Dietary Fiber Content in Composition (wet mass basis) |
| | | Pulse Raw Material | | Cereal Raw Material | | Edible Plant Raw Material (other than pulse and cereal) | | | | | | |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | | |
| | | | mass % | | mass % | | mass % | mass % | | U/ Dough 100g (wet mass) | mass % | mass % |
| Test Example | 5 | Yellow Pea (with seed skin) | 7.0 | - | - | Psyllium Seed Skin | 3 | 2.7 | Pectinase | 0.01 | 9.7 | 1.1 |
| Test Example | 6 | Yellow Pea (with seed skin) | 7.0 | - | - | Psyllium Seed Skin | 3 | 2.7 | Pectinase | 0.01 | 9.7 | 1.1 |
| Test Example | 7 | Yellow Pea (with seed skin) | 7.0 | - | - | Psyllium Seed Skin | 3 | 2.7 | Pectinase | 0001 | 9.7 | 1.1 |
| Test Example | a | Yellow Pea (with seed skin) | 7.0 | - | - | Psyllium Seed Skin | 3 | 2.7 | Pectinase | 0.001 | 9.7 | 1.1 |

(continued)

| Table 3 | | Step (i) Dough Composition | | | | | | | | | | |
|---|---|---|---|---|---|---|---|---|---|---|---|---|
| | | Dietary Fiber | | | | | | | | | Dietary Fiber Content in Composition (wet mass basis) | Soluble Dietary Fiber Content in Composition (wet mass basis) |
| | | Pulse Raw Material | | Cereal Raw Material | | Edible Plant Raw Material (other than pulse and cereal) | | | | | | |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | | |
| | | | mass % | | mass % | | mass % | mass % | | U/ Dough 100g (wet mass) | mass % | mass % |
| Test Example | 9 | Yellow Pea (with seed skin) | 70 | - | - | Psyllium Seed Skin | a | 2.7 | Pectinase | 0.001 | 9.7 | 1.1 |
| Test Example | 10 | Yellow Pea (with seed skin) | 7.0 | - | - | Psyllium Seed Skin | 3 | 2.7 | Pectinase | 0001 | 9.7 | 1.1 |
| Test Example | 11 | Yellow Pea (with seed skin) | 5.5 | Oat | 0.9 | Psyllium Seed Skin | 3 | 27 | Pectinase | 0.001 | 9.2 | 1.3 |
| Test Example | 12 | Yellow Pea (with seed skin) | 0.9 | Oat | 0.3 | Psyllium Seed Skin | 3 | 2.7 | Pectinase | 0.001 | 4.0 | 0.7 |

(continued)

| Table 3 | | Step (i) Dough Composition | | | | | | | | | | |
| --- | --- | --- | --- | --- | --- | --- | --- | --- | --- | --- | --- | --- |
| | | Dietary Fiber | | | | | | | | | Dietary Fiber Content in Composition (wet mass basis) | Soluble Dietary Fiber Content in Composition (wet mass basis) |
| | | Pulse Raw Material | | Cereal Raw Material | | Edible Plant Raw Material (other than pulse and cereal) | | | | | | |
| | | Species | Dietary Fiber Content (wetmass basis) | Species | Dietary Fiber Content (wetmass basis) | Species | Content (wet mass basis) | Dietary Fiber Content (wetmass basis) | Treatment Method | Enzyme Content (wet mass basis) | | |
| | | | mass % | | mass % | | mass % | mass % | | U/ Dough 100g (wet mass) | mass % | mass % |
| Test Example | 13 | Yellow Pea (with seed skin) | 6.3 | - | - | Psyllium Seed Skin | 3 | 2.7 | Pectinase | 0.001 | 9.0 | 1.1 |
| Test Example | 14 | Yellow Pea (with seed skin) | 6.3 | - | - | Psyllium Seed Skin | 3 | 2.7 | Pectinase | 0.001 | 9.0 | 1.1 |

[Table 3-2]

| Table 3 | | Step (i) Dough Composition | | | | | | | | | | |
|---|---|---|---|---|---|---|---|---|---|---|---|---|
| | | Dietary Fiber | | | | | | | | | Dietary Fiber Content in Composition (wet mass basis) | Soluble Dietary Fiber Content in Composition (wet mass basis) |
| | | Pulse Raw Material | | Cereal Raw Material | | Edible Plant Raw Material (other than pulse and cereal) | | | | | | |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | | |
| | | | mass % | | mass % | | mass % | mass % | | U/ Dough 100g (wet mass) | mass % | mass % |
| Comparative Example | 15 | Yellow Pea (with seed skin) | 6.3 | - | - | Psyllium seed skin | 3 | 2.7 | Pectinase | 0.001 | 90 | 1.1 |
| Test Example | 18 | Yellow Pea (with seed skin) | 6.3 | - | - | Psyllium Seed Skin | 3 | 2.7 | Pectinase | 0.001 | 9.0 | 1.1 |
| Test Example | 17 | Yellow Pea (with seed skin) | 5.5 | - | - | Psyllium Seed Skin | 3 | 2.7 | - | - | 82 | 1.0 |
| Test Example | 18 | Yellow Pea (with seed skin) | 6.0 | - | - | - | 0 | 0 | - | - | 6.0 | 0.5 |

EP 4 381 950 A1

(continued)

| Table 3 | | Step (i) Dough Composition | | | | | | | | | | |
|---|---|---|---|---|---|---|---|---|---|---|---|---|
| | | Dietary Fiber | | | | | | | | | Dietary Fiber Content in Composition (wet mass basis) | Soluble Dietary Fiber Content in Composition (wet mass basis) |
| | | Pulse Raw Material | | Cereal Raw Material | | Edible Plant Raw Material (other than pulse and cereal) | | | | | | |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | | |
| | | | mass % | | mass % | | mass % | mass % | | U/ Dough 100g (wet mass) | mass % | mass % |
| Test Example | 19 | Yellow Pea (with seed skin) | 5.9 | - | - | Psyllium Seed Skin | 0.5 | 0.45 | Pectinase | 0.001 | 6.3 | 0.6 |
| Test Example | 20 | Yellow Pea (with seed skin) | 70 | - | - | Psyllium Seed Skin | 3 | 2.7 | Xylanase | 0001 | 9.7 | 1.1 |
| Test Example | 21 | Yellow Pea (with seed skin) | 7.0 | - | - | Psyllium Seed Skin | 3 | 2.7 | (1) Pectinase (2) Xylanase | (1) 0.01 (2) 0 001 | 9.7 | 1.1 |
| Test Example | 22 | Yellow Pea (with seed skin) | 5.1 | - | - | Psyllium Seed Skin | 6 | 54 | Pectinase | 0.001 | 10.5 | 1.5 |

63

| Table 3 | | Step (i) Dough Composition | | | | | | | | | | |
|---|---|---|---|---|---|---|---|---|---|---|---|---|
| | | Dietary Fiber | | | | | | | | | Dietary Fiber Content in Composition (wet mass basis) | Soluble Dietary Fiber Content in Composition (wet mass basis) |
| | | Pulse Raw Material | | Cereal Raw Material | | Edible Plant Raw Material (other than pulse and cereal) | | | | | | |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | | |
| | | | mass % | | mass % | | mass % | mass % | | U/ Dough 100g (wet mass) | mass % | mass % |
| Test Example | 23 | Yellow Pea (with seed skin) | 66 | - | - | Psyllium Seed Skin | 6.0 | 5.4 | Pectinase | 0001 | 120 | 1.6 |
| Test Example | 24 | Yellow Pea (with seed skin) | 7.9 | - | - | Psyllium Seed Skin | 3 | 2.7 | Pectinase | 0.001 | 10.6 | 12 |
| Test Example | 25 | Yellow Pea (with seed skin) | 7.9 | - | - | Psyllium Seed Skin | 3 | 2.7 | Pectinase | 0.001 | 106 | 1.2 |
| Test Example | 26 | Yellow Pea (with seed skin) | 7.9 | - | - | Psyllium Seed Skin | 3 | 2.7 | Pectinase | 0.001 | 10.6 | 1.2 |

EP 4 381 950 A1

| Table 3 | | Step (i) Dough Composition | | | | | | | | | | |
|---|---|---|---|---|---|---|---|---|---|---|---|---|
| | | Dietary Fiber | | | | | | | | | Dietary Fiber Content in Composition (wet mass basis) | Soluble Dietary Fiber Content in Composition (wet mass basis) |
| | | Pulse Raw Material | | Cereal Raw Material | | Edible Plant Raw Material (other than pulse and cereal) | | | | | | |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | | |
| | | | mass % | | mass % | | mass % | mass % | | U/ Dough 100g (wet mass) | mass % | mass % |
| Test Example | 27 | Yellow Pea (with seed skin) | 7.9 | - | - | Psyllium Seed Skin | 3 | 27 | Pectinase | 0001 | 10.6 | 1.2 |
| Comparative Example | 28 | Yellow Pea (with seed skin) | 7.9 | - | - | Psyllium seed skin | 3 | 2.7 | Pectinase | 0.001 | 106 | 1.2 |

[Table 3-3]

| Table 3 | | Step (i) Dough Composition | | | | | | | | | | |
| | | Dietary Fiber | | | | | | | | | Dietary Fiber Content in Composition (wet mass basis) | Soluble Dietary Fiber Content in Composition (wet mass basis) |
| | | Pulse Raw Material | | Cereal Raw Material | | Edible Plant Raw Material (other than pulse and cereal) | | | | | | |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | | |
| | | | mass % | | mass % | | mass % | mass % | | U/ Dough 100g (wet mass) | mass % | mass % |
| Test Example | 29 | Yellow Pea (with seed skin) | 8.9 | - | - | Psyllium Seed Skin | 3 | 2.7 | Pectinase | 0.001 | 11.6 | 1.3 |
| Test Example | 30 | Yellow Pea (with seed skin) | 8.3 | - | - | Psyllium Seed Skin | 3 | 2.7 | Pectinase | 0.001 | 11.0 | 1.3 |
| Test Example | 31 | Yellow Pea (with seed skin) | 5.2 | - | - | Psyllium Seed Skin | 3 | 2.7 | Pectinase | 0.01 | 7.9 | 1.0 |
| Test Example | 32 | Yellow Pea (with seed skin) | 1.8 | Oat | 1.5 | Psyllium Seed Skin | 3 | 2.7 | Pectinase | 0.01 | 6.0 | 1.2 |
| Test Example | 33 | Yellow Pea (with seed skin) | 3.0 | - | - | Psyllium Seed Skin | 3 | 2.7 | Pectinase | 0.1 | 5.7 | 0.6 |
| Test Example | 34 | Yellow Pea (with seed skin) | 2.4 | - | - | Psyllium Seed Skin | 3 | 2.7 | Pectinase | 0.001 | 5.3 | 07 |

EP 4 381 950 A1

(continued)

| Table 3 | | Step (i) Dough Composition | | | | | | | | | | |
| --- | --- | --- | --- | --- | --- | --- | --- | --- | --- | --- | --- | --- |
| | | Dietary Fiber | | | | | | | | | Dietary Fiber Content in Composition (wet mass basis) | Soluble Dietary Fiber Content in Composition (wet mass basis) |
| | | Pulse Raw Material | | Cereal Raw Material | | Edible Plant Raw Material (other than pulse and cereal) | | | | | | |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | Dietary Fiber Content in Composition (wet mass basis) | Soluble Dietary Fiber Content in Composition (wet mass basis) |
| | | | mass % | | mass % | | mass % | mass % | | U/ Dough 100g (wet mass) | mass % | mass % |
| Test Example | 35 | - | - | Oat | 3.9 | Psyllium Seed Skin | 3 | 2.7 | Pectinase | 0.001 | 6.6 | 1.9 |
| Test Example | as | - | - | Oat | 1.6 | Psyllium Seed Skin | 3 | 2.7 | Pectinase | 0.001 | 4.4 | 1.1 |
| Test Example | 37 | Yellow Pea (with seed skin) | 7.1 | - | - | Psyllium Seed Skin | 3 | 2.7 | Pectinase | 0.001 | 9.8 | 1.2 |
| Test Example | 38 | Yellow Pea (with seed skin) | 70 | - | - | Psyllium Seed Skin | 3 | 2.7 | Pectinase | 0001 | 9.7 | 11 |
| Test Example | 39 | Mung Bean (with seed skin) | 7.0 | - | - | Psyllium Seed Skin | 3 | 2.7 | Pectinase | 0.001 | 9.7 | 1.1 |

EP 4 381 950 A1

67

(continued)

| Table 3 | | Step (i) Dough Composition | | | | | | | | | | |
| | | Dietary Fiber | | | | | | | | | Dietary Fiber Content in Composition (wet mass basis) | Soluble Dietary Fiber Content in Composition (wet mass basis) |
| | | Pulse Raw Material | | Cereal Raw Material | | Edible Plant Raw Material (other than pulse and cereal) | | | | | | |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | | |
| | | | mass % | | mass % | | mass % | mass % | | U/ Dough 100g (wet mass) | mass % | mass % |
| Test Example | 40 | Yellow Pea (with seed skin) : 75% Mung Bean (with seed skin) : 25% | 7.0 | - | - | Psyllium Seed Skin | 3 | 2.7 | Pectinase | 0.001 | 9.7 | 1.1 |

[Table 4-1]

| Table 4 | | Step (i) Dough Composition | | | | | | |
|---|---|---|---|---|---|---|---|---|
| | | Rice Oil Content | Methionol Content (wet mass basis) | $AUC_{5.0}$ | $AUC_{3.5}$ | Methionol /$AUC_{5.0}$ | Yeast Content (wet mass basis) | Dry Mass Basis Moisture Content |
| | | mass % | mass ppb | % | % | - | mass % | mass % |
| Comparative Example | 1 | - | 2 | 81.0 | 21.0 | 0.02 | 0.5 | 100 |
| Test Example | 2 | - | 10 | 81.0 | 19.0 | 0.12 | 0.5 | 100 |
| Test Example | 3 | - | 80 | 81.0 | 19.0 | 1 | 0.5 | 100 |
| Test Example | 4 | - | 150 | 81.0 | 11.0 | 2 | 0.5 | 100 |
| Test Example | 5 | - | 500 | 81.0 | 21.0 | 6 | 0.5 | 100 |
| Test Example | 6 | - | 1000 | 81.0 | 21.0 | 12 | 0.5 | 100 |
| Test Example | 7 | - | 3000 | 81.0 | 21.0 | 37 | 0.5 | 100 |
| Test Example | 8 | - | 6000 | 81.0 | 21.0 | 74 | 0.5 | 100 |
| Test Example | 9 | - | 15000 | 81.0 | 21.0 | 185 | 0.5 | 100 |
| Test Example | 10 | - | 20 | 81.0 | 21.0 | 0.25 | 0.5 | 100 |
| Test Example | 11 | - | 20 | 71.0 | 19.0 | 0.28 | 0.5 | 100 |
| Test Example | 12 | 12.0 | 20 | 75.0 | 23.0 | 0.27 | 0.5 | 100 |
| Test Example | 13 | 5.0 | 20 | 79.0 | 21.0 | 0.25 | 0.5 | 100 |
| Test Example | 14 | 5.0 | 20 | 79.0 | 21.0 | 0.25 | 0.5 | 100 |
| Comparative Example | 15 | 5.0 | 20 | 79.0 | 21.0 | $\Omega$.25 | 0.5 | 100 |
| Test Example | 16 | 5.0 | 20 | 19.0 | 21.0 | 0.25 | 0.5 | 100 |
| Test Example | 17 | - | 20 | 81.0 | 21.0 | 0.25 | 0.5 | 150 |
| Test Example | 18 | - | 20 | 81.0 | 21.0 | 0.25 | 0.5 | 150 |
| Test Example | 19 | - | 20 | 81.0 | 21.0 | 0.25 | 0.5 | 150 |
| Test Example | 20 | - | 20 | 81.0 | 20.0 | 0.25 | 0.5 | 100 |

[Table 4-2]

| Table 4 | | Step (i) Dough Composition | | | | | | |
|---|---|---|---|---|---|---|---|---|
| | | Rice Oil Content | Methionol Content (wet mass basis) | $AUC_{5.0}$ | $AUC_{3.5}$ | Methionol /$AUC_{5.0}$ | Yeast Content (wet mass basis) | Dry Mass Basis Moisture Content |
| | | mass % | mass ppb | % | % | - | mass % | mass % |
| Test Example | 21 | - | 20 | 810 | 21.0 | 0.25 | 0.5 | 100 |
| Test Example | 22 | - | 20 | 81.0 | 21.0 | 0.25 | 0.5 | 150 |
| Test Example | 23 | - | 20 | 79.0 | 18.0 | 0.25 | 0.5 | 100 |
| Test Example | 24 | - | 20 | 82.6 | 14.6 | 0.24 | 0.5 | 80 |

(continued)

| Table 4 | | Step (i) Dough Composition | | | | | | |
|---|---|---|---|---|---|---|---|---|
| | | Rice Oil Content | Methionol Content (wet mass basis) | AUC$_{5.0}$ | AUC$_{3.5}$ | Methionol /AUC$_{5.0}$ | Yeast Content (wet mass basis) | Dry Mass Basis Moisture Content |
| | | mass % | mass ppb | % | % | - | mass % | mass % |
| Test Example | 25 | - | 20 | 88.0 | 9.5 | 023 | 0.5 | 80 |
| Test Example | 26 | - | 20 | 95.2 | 2.7 | 0.21 | 0.5 | 80 |
| Test Example | 27 | - | 20 | 96.3 | 1.7 | 0.21 | 05 | 80 |
| Comparative Example | 28 | - | 20 | 97.0 | 1.0 | 0.21 | 0.5 | 80 |
| Test Example | 29 | 2.0 | 20 | 74.0 | 19.0 | 0.27 | 0.5 | 55 |
| Test Example | 30 | 2.0 | 20 | 74.0 | 19.0 | 0.27 | 0.5 | 65 |
| Test Example | 31 | 2,0 | 20 | 74.0 | 19.0 | 0.27 | 0.5 | 150 |
| Test Example | 32 | 2.0 | 20 | 78.0 | 20.0 | 026 | 0.5 | 200 |
| Test Example | 33 | 100 | 20 | 74.0 | 19.0 | 0.27 | 0,5 | 200 |
| Test Example | 34 | - | 20 | 71.0 | 21.0 | 0.28 | 0.5 | 100 |
| Test Example | 35 | - | 20 | 75.0 | 14.0 | 0.27 | 0.5 | 120 |
| Test Example | 36 | - | 20 | 73.0 | 18.0 | 0.27 | 0.5 | 120 |
| Test Example | 37 | - | 20 | 81.0 | 21.0 | 0.25 | - | 100 |
| Test Example | 38 | - | 20 | 81.0 | 21.0 | 0.25 | 0.5 | 100 |
| Test Example | 39 | - | 20 | 74.0 | 19.0 | 0.27 | 0.5 | 100 |
| Test Example | 40 | - | 20 | 71.0 | 21.0 | 0.26 | 0.5 | 100 |

[Preparation and parameter measurement of swollen compositions]

The dough composition of each of the Test Examples and Comparative Examples obtained by the above procedure was molded so each one side of a hypothetical rectangle of the minimum volume inscribed by the composition was 15 cm, and then subjected to treatment in step (ii) (fermentation (except for Test Example 37, which was swollen with an expansion agent) and baking) under the conditions shown in Table 5 below (Oriental fresh yeast from Oriental Yeast Co., Ltd. was used as the yeast). After heat treatment, the composition was cooled at ordinary temperature to thereby obtain the swollen composition of each of the Test Examples (except Test Example 38) and Comparative Examples. The shape of the swollen composition in each Test Example after cooling, reduced pressure treatment, and room temperature (20°C) storage for one hour was unchanged from that after baking. Since the bottom area of each composition did not change before and after heat treatment and during cooling at ordinary temperature, the composition volume can be calculated from the composition thickness or height.

EP 4 381 950 A1

| Table 5 | | | | | | Step (ii) Heating Treatment | | | | | Step (iii) Reduced Pressure Treatment |
|---|---|---|---|---|---|---|---|---|---|---|---|
| | | Treatment | Temperature | Time | Baking Conditions | Increase Ratio of [Value $\alpha$]/ [Value $\beta$] during Baking | Increase Ratio of (Weighted Average Area)/ (Weighted Average Perimeter) during Baking | Increase Ratio of Total Area of Pores with Aspect Ratios of a 3.5 and Degree of Circularity Factor of $\geq$ 0.3 during Baking | Decrease Ratio of Dry Mass Basis Moisture Content during Baking | Pressure |
| | | | °C | Hours | | % | % | % | % | bar |
| Comparative Example | 1 | None (left at room temperature) | 20°C | 0.5 | 200°C, 15 min | 11% | 1465% | 133% | 68% | - |
| Test Example | 2 | Yeast Fermentation | 38°C | 2 | 200°C, 15 min | 297% | 5955% | 9900% | 65% | - |
| Test Example | 3 | Yeast Fermentation | 38°C | 2 | 200°C, 15 min | 595% | 7125% | 1567% | 62% | - |
| Test Example | 4 | Yeast Fermentation | 38°C | 2 | 200°C, 15 min | 562% | 9250% | 9900% | 65% | - |
| Test Example | 5 | Yeast Fermentation | 38°C | 2 | 200°C, 15 min | 369% | 9975% | 1567% | 58% | - |
| Test Example | 6 | Yeast Fermentation | 15°C | 15 | 200°C, 15 min | 257% | 6600% | 1567% | 67% | - |
| Test Example | 7 | Yeast Fermentation | 15°C | 15 | 200°C, 15 min | 174% | 13445% | 9900% | 64% | - |
| Test Example | 8 | Yeast Fermentation | 15°C | 15 | 200°C, 15 min | 112% | 6355% | 13233% | 55% | - |
| Test Example | 9 | Yeast Fermentation | 15°C | 15 | 200°C, 15 min | 144% | 7565% | 9900% | 62% | - |
| Test Example | 10 | Yeast Fermentation | 15°C | 15 | 200°C, 15 min | 1037% | 13855% | 9900% | 60% | - |

71

(continued)

| Table 5 | | Step (ii) Heating Treatment | | | | | | | | Step (iii) Reduced Pressure Treatment |
|---|---|---|---|---|---|---|---|---|---|---|
| | | Treatment | Temperature | Time | Baking Conditions | Increase Ratio of [Value $\alpha$]/ [Value $\beta$] during Baking | Increase Ratio of (Weighted Average Area)/ (Weighted Average Perimeter) during Baking | Increase Ratio of Total Area of Pores with Aspect Ratios of a 3.5 and Degree of Circularity Factor of $\geq$ 0.3 during Baking | Decrease Ratio of Dry Mass Basis Moisture Content during Baking | Pressure |
| | | | °C | Hours | | % | % | % | % | bar |
| Test Example | 11 | Yeast Fermentation | 15°C | 15 | 200 °C, 15 min | 610% | 9975% | 16567% | 68% | - |
| Test Example | 12 | Yeast Fermentation | 15°C | 15 | 200 °C, 15 min | 1173% | 6625% | 3233% | 53% | - |
| Test Example | 13 | Yeast Fermentation | 15°C | 10 | 200 °C, 15 min | 857% | 6935% | 16567% | 49% | - |
| Test Example | 14 | Yeast Fermentation | 10°C | 8 | 200 °C, 15 min | 548% | 3405% | 900% | 67% | - |

[Table 5-2]

| Table 5 | | Step (ii) Heating Treatment | | | | | | | | Step (iii) Reduced Pressure Treatment |
|---|---|---|---|---|---|---|---|---|---|---|
| | | Treatment | Temperature | Time | Baking Conditions | Increase Ratio of (Value α]/ [Value β] during Baking | Increase Ratio of (Weighted Average Area)/ (Weighted Average Perimeter) during Baking | Increase Ratio of Total Area of Pores with Aspect Ratios of ≥ 3.5 and Degree of Circularity Factor of ≥ 0.3 during Baking | Decrease Ratio of Dry Mass Basis Moisture Content during Baking | Pressure |
| | | | °C | Hours | | % | % | % | % | bar |
| Comparative Example | 15 | Yeast Fermentation | 2°C | 2 | 200 °C, 15 min | 1% | 2095% | 0% | 69% | - |
| Test Example | 16 | Yeast Fermentation | 38°C | 6 | 200°C. 15 min | 1747% | 16255% | 33233% | 55% | - |
| Test Example | 17 | Yeast Fermentation | 15°C | 15 | 200°C, 15 min | 953% | 2950% | 567% | 74% | - |
| Test Example | 18 | Yeast Fermentation | 15°C | 15 | 200°C, 15 min | 1123% | 2775% | 567% | 77% | - |
| Test Example | 19 | Yeast Fermentation | 15°C | 15 | 240°C, 15 mi n | 802% | 4465% | 2900% | 75% | - |
| Test Example | 20 | Yeast Fermentation | 15°C | 15 | 200°C, 15 min | 1236% | 8570% | 1233% | 60% | - |
| Test Example | 21 | Yeast Fermentation | 15°C | 15 | 200°C, 15 min | 956% | 9995% | 9900% | 59% | - |
| Test Example | 22 | Yeast Fermentation | 15°C | 15 | 200°C, 15 min | 1140% | 11305% | 19900% | 76% | - |
| Test Example | 23 | Yeast Fermentation | 15°C | 15 | 200°C, 15 min | 1002% | 9295% | 9900% | 62% | - |
| Test Example | 24 | Yeast Fermentation | 15°C | 15 | 200°C, 15 min | 936% | 5845% | 7907% | 61% | - |

| Table 5 | | Step (ii) Heating Treatment | | | | | | | | Step (iii) Reduced Pressure Treatment |
|---|---|---|---|---|---|---|---|---|---|---|
| | | Treatment | Temperature | Time | Baking Conditions | Increase Ratio of (Value $\alpha$]/ [Value $\beta$] during Baking | Increase Ratio of (Weighted Average Area)/ (Weighted Average Perimeter) during Baking | Increase Ratio of Total Area of Pores with Aspect Ratios of $\geq$ 3.5 and Degree of Circularity Factor of $\geq$ 0.3 during Baking | Decrease Ratio of Dry Mass Basis Moisture Content during Baking | Pressure |
| | | | °C | Hours | | % | % | % | % | bar |
| Test Example | 25 | Yeast Fermentation | 15°C | 15 | 200°C, 15 min | 857% | 3965% | 4917% | 59% | - |
| Test Example | 26 | Yeast Fermentation | 15°C | 15 | 200 °C, 15 min | 788% | 1399% | 930% | 56% | - |
| Test Example | 27 | Yeast Fermentation | 15°C | 15 | 200 °C, 15 min | 780% | 569% | 332% | 60% | - |
| Comparative Example | 28 | Yeast Fermentation | 15°C | 15 | 200 °C, 15 min | 775% | 15% | 0% | 56% | - |

EP 4 381 950 A1

EP 4 381 950 A1

| Table 5 | | Step (ii) Heating Treatment | | | | | | | | Step (iii) Reduced Pressure Treatment |
|---|---|---|---|---|---|---|---|---|---|---|
| | | Treatment | Temperature | Time | Baking Conditions | Increase Ratio of [Value $\alpha$]/ [Value $\beta$] during Baking | Increase Ratio of (Weighted Average Area)/ (Weighted Average Perimeter) during Baking | Increase Ratio of Total Area of Pores with Aspect Ratios of $\geq$ 3.5 and Degree of Circularity Factor of $\geq$ 0.3 during Baking | Decrease Ratio of Dry Mass Basis Moisture Content during Baking | Pressure |
| | | | °C | Hours | | % | % | % | % | bar |
| Test Example | 29 | Yeast Fermentation | 15°C | 15 | 200°C, 15 min | 553% | 2350% | 1233% | 44% | - |
| Test Example | 30 | Yeast Fermentation | 15°C | 15 | 200°C, 15 min | 707% | 3445% | 1667% | 46% | - |
| Test Example | 31 | Yeast Fermentation | 15°C | 15 | 200°C, 15 min | 1041% | 6855% | 3233% | 67% | - |
| Test Example | 32 | Yeast Fermentation | 15°C | 15 | 200°C, 15 min | 903% | 14955% | 6567% | 79% | - |
| Test Example | 33 | Yeast Fermentation | 15°C | 15 | 200°C, 15 min | 1039% | 8560% | 2233% | 77% | - |
| Test Example | 34 | Yeast Fermentation | 15°C | 15 | 200°C, 15 min | 642% | 4965% | 3233% | 62% | - |
| Test Example | 35 | Yeast Fermentation | 15°C | 15 | 200°C, 15 min | 488% | 12395% | 13233% | 68% | - |
| Test Example | 36 | Yeast Fermentation | 15°C | 15 | 200°C, 15 min | 689% | 8935% | 2233% | 67% | - |
| Test Example | 37 | Left with Expansion Agent | 60°C | 10 | 200°C, 15 min | 735% | 20520% | 9900% | 66% | - |
| Test Example | 38 | Yeast Fermentation | 38°C | 2 | 200°C, 15 min | 587% | 7550% | 2233% | 68% | 0.1 |

(continued)

| Table 5 | | | Step (ii) Heating Treatment | | | | | | Step (iii) Reduced Pressure Treatment |
|---|---|---|---|---|---|---|---|---|---|
| | | Treatment | Temperature | Time | Baking Conditions | Increase Ratio of [Value α]/ [Value β] during Baking | Increase Ratio of (Weighted Average Area)/ (Weighted Average Perimeter) during Baking | Increase Ratio of Total Area of Pores with Aspect Ratios of ≥ 3.5 and Degree of Circularity Factor of ≥ 0.3 during Baking | Decrease Ratio of Dry Mass Basis Moisture Content during Baking | Pressure |
| | | | °C | Hours | | % | % | % | % | bar |
| Test Example | 39 | Yeast Fermentation | 38°C | 2 | 200°C, 15 min | 825% | 8800% | 3233% | 65% | - |
| Test Example | 40 | Yeast Fermentation | 38°C | 2 | 200°C, 15 min | 937% | 8405% | 9900% | 65% | - |

The swollen compositions of the Test Examples and Comparative Examples obtained by the above procedure were subjected to measurement of various parameters using the methods described in the [DESCRIPTION OF EMBODIMENTS] section above. The results of the swollen compositions of the Test Examples and Comparative Examples are shown in Tables 6 and 7 below. For all of the compositions with an "Aroma retention" score of three or more, the total porosity increased by 1% or more before and after the heat treatment at step (ii), and both the total porosity and the total percentage of closed pores measured for frozen section A were above 1%.

[Table 6-1]

| Table 6 | | Swollen Composition | | | | | | |
|---|---|---|---|---|---|---|---|---|
| | | Raw Material | | | Starch | | Dietary Fiber Content (wet mass basis) | Dry Mass Basis Moisture Content |
| | | Pulse Content (wet mass basis) | Cereal Content (wet mass basis) | Edible Plant Raw Material (other than pulse and cereal) | Starch Content (wet mass basis) | Starch Grains | | |
| | | mass % | mass % | mass % | mass % | /mm$^2$ | mass % | mass % |
| Comparative Example | 1 | 705 | - | - | 35.2 | 0 | 14.7 | 32 |
| Test Example | 2 | 68.9 | - | - | 34.4 | 0 | 14.4 | 35 |
| Test Example | 3 | 67.4 | - | - | 33.7 | 0 | 14.1 | 38 |
| Test Example | 4 | 68.9 | - | - | 34.4 | 0 | 14.4 | 35 |
| Test Example | 5 | 65.5 | - | - | 32.7 | 0 | 13.7 | 42 |
| Test Example | 6 | 69.9 | - | - | 35.0 | 0 | 14.6 | 33 |
| Test Example | 7 | 68.4 | - | - | 34.2 | 0 | 14.3 | 36 |
| Test Example | 8 | 64. t | - | - | 32.1 | 0 | 13.4 | 45 |
| Test Example | 9 | 67.4 | - | - | 33.7 | 0 | 14.1 | 38 |
| Test Example | 10 | 66.4 | - | - | 33.2 | 0 | 13.9 | 40 |
| Test Example | 11 | 55.3 | 15.2 | - | 36.2 | 0 | 139 | 32 |
| Test Example | 12 | 8.2 | 4.1 | 34.7 | 32.5 | 0 | 5.5 | 47 |
| Test Example | 13 | 55.0 | - | - | 27.5 | 0 | 11.9 | 51 |
| Test Example | 14 | 62.4 | - | - | 31.2 | 0 | 13.5 | 33 |
| Comparative Example | 15 | 63.4 | - | - | 31.7 | 0 | 137 | 31 |
| Test Example | 16 | 57.2 | - | - | 28.6 | 0 | 12.4 | 45 |
| Test Example | 17 | 65.6 | - | - | 32.8 | 0 | 14.8 | 39 |
| Test Example | 18 | 73.1 | - | - | 36.6 | 0 | 11.0 | 35 |
| Test Example | 19 | 71.2 | - | - | 35.6 | 0 | 11.6 | 37 |
| Test Example | 20 | 66.4 | - | - | 33.2 | 0 | 13.9 | 40 |

[Table 6-2]

| Table 6 | | Swollen Composition | | | | | | |
|---|---|---|---|---|---|---|---|---|
| | | Raw Material | | | Starch | | Dietary Fiber Content (wet mass basis) | Dry Mass Basis Moisture Content |
| | | Pulse Content (wet mass basis) | Cereal Content (wet mass basis) | Edible Plant Raw Material (other than pulse and cereal) | Starch Content (wet mass basis) | Starch Grains | | |
| | | mass % | mass % | mass % | mass % | /mm$^2$ | mass % | mass % |
| Test Example | 21 | 66.0 | - | - | 33.0 | 0 | 13.8 | 41 |
| Test Example | 22 | 61.6 | - | - | 30.8 | 0 | 19.2 | 36 |
| Test Example | 23 | 63.0 | - | - | 31.5 | 0 | 17.3 | 38 |
| Test Example | 24 | 71.5 | - | - | 35.8 | 0 | 14.5 | 31 |
| Test Example | 25 | 70.5 | - | - | 35.2 | 0 | 14.3 | 33 |
| Test Example | 26 | 69.4 | - | - | 34.7 | 0 | 14.1 | 35 |
| Test Example | 27 | 71.0 | - | - | 35.5 | 0 | 14.4 | 32 |
| Comparative Example | 28 | 69.4 | - | - | 34.7 | 0 | 14.1 | 35 |
| Test Example | 29 | 69.8 | - | - | 34.9 | 0 | 137 | 31 |
| Test Example | 30 | 67.4 | - | - | 33.7 | 0 | 13.5 | 35 |
| Test Example | 31 | 57.9 | - | - | 28.9 | 0 | 13.3 | 48 |
| Test Example | 32 | 24.8 | 33.6 | - | 31.3 | 0 | 12.6 | 43 |
| Test Example | 33 | 40.5 | - | - | 20.2 | 0 | 11.6 | 47 |
| Test Example | 34 | 23.2 | - | 44.2 | 44.9 | 0 | 7.6 | 38 |
| Test Example | 35 | - | 66.9 | - | 37.7 | 0 | 10.6 | 38 |
| Test Example | 36 | - | 26.7 | 39.2 | 44.6 | 0 | 7.0 | 40 |
| Test Example | 37 | 70.1 | - | - | 35.1 | 0 | 14.6 | 34 |
| Test Example | 38 | 70.5 | - | - | 35.2 | 0 | 14.7 | 32 |
| Test Example | 39 | 68.9 | - | - | 34.4 | 0 | 14.4 | 35 |
| Test Example | 40 | 68.9 | - | - | 34.4 | 0 | 14.4 | 35 |

[Table 7-1]

| Table 7 | | Swollen Composition | | | | | | | | |
|---|---|---|---|---|---|---|---|---|---|---|
| | | Parameters Relating to Gel Filtration Chromatography | | | | Methionol Content [Value a} (wet mass basis) | [Value $\alpha$]/ [Value $\beta$] | Parameters Relating to Pores | | |
| | | AUC$_{5.0}$ [Value $\beta$] | | AUC$_{3.5}$ | | | | (Weighted Average Area) [$\mu$ m$^2$] / (Weighted Average Perimeter) (pml | Total Area of Pores Having Areas of > 10000 $\mu$m$^2$ | Total Area of Pores with Aspect Ratios of $\geq$ 3.5 and Degree of Circularity Factor of $\geq$ 0.3 during Baking |
| | | Value | Decrease Ratio during Step (iii) | Value | Decrease Ratio during Step (iii) | | | | | |
| | | % | % | % | % | mass ppb | - | - | % | % |
| Comparative Example | 1 | 73 | 10% | 24 | 13% | 2 | 0.03 | 313 | 0.32 | 0.0007 |
| Test Example | 2 | 49 | 40% | 40 | 53% | 24 | 0.5 | 1211 | 10.3 | 0.03 |
| Test Example | 3 | 57 | 30% | 33 | 42% | 391 | 6.9 | 1445 | 12.8 | 0.005 |
| Test Example | 4 | 50 | 38% | 40 | 73% | 613 | 12 | 1870 | 14.3 | 0.03 |
| Test Example | 5 | 57 | 30% | 45 | 53% | 1650 | 29 | 2015 | 18.1 | 0.005 |
| Test Example | 6 | 48 | 41% | 39 | 46% | 2115 | 44 | 1340 | 12.1 | 0.005 |
| Test Example | 7 | 42 | 48% | 32 | 34% | 4264 | 102 | 2709 | 17.8 | 0.03 |
| Test Example | 8 | 51 | 37% | 37 | 43% | 8012 | 157 | 1291 | 11.4 | 0.04 |
| Test Example | 9 | 45 | 44% | 35 | 40% | 20318 | 452 | 1533 | 14.2 | 0.03 |
| Test Example | 10 | 57 | 30% | 33 | 36% | 160 | 2.8 | 2791 | 16.2 | 0.03 |
| Test Example | 11 | 61 | 14% | 25 | 24% | 122 | 2.0 | 2015 | 12 | 0.05 |
| Test Example | 12 | 48 | 36% | 39 | 41% | 163 | 3.4 | 1345 | 10.9 | 0.01 |
| Test Example | 13 | 59 | 25% | 36 | 42% | 143 | 2.4 | 1407 | 109 | 0.05 |
| Test Example | 14 | 61 | 23% | 31 | 32% | 100 | 1.6 | 701 | 7.1 | 0.003 |

79

[Table 7-2]

| Table 7 | | Swollen Composition | | | | | | | | |
|---|---|---|---|---|---|---|---|---|---|---|
| | | Parameters Relating to Gel Filtration Chromatography | | | | Methionol Content [Value α] (wet mass basis) | [Value α]/ [Value β] | Parameters Relating to Pores | | |
| | | AUC$_{5.0}$ [Value β] | | AUC$_{3.5}$ | | | | (Weighted Average Area) [μm$^2$] / (Weighted Average Perimeter) [μm] | Total Area of Pores Having Areas of > 10000 μm$^2$ | Total Area of Pores with Aspect Ratios of ≥ 3.5 and Degree of Circularity Factor of ≥ 0.3 during Baking |
| | | Value | Decrease Ratio during Step (iii) | Value | Decrease Ratio during Step (iii) | | | | | |
| | | % | % | % | % | mass ppb | - | - | % | % |
| Comparative Example | 15 | 78 | 1% | 22 | 5% | 20 | 0.26 | 439 | 065 | 0.0002 |
| Test Example | 16 | 40 | 49% | 47 | 55% | 187 | 4.7 | 3271 | 18.5 | 0.1 |
| Test Example | 17 | 55 | 32% | 32 | 34% | 143 | 26 | 610 | 2.5 | 0.002 |
| Test Example | 18 | 54 | 33% | 38 | 42% | 163 | 3.0 | 575 | 1.8 | 0.002 |
| Test Example | 19 | 57 | 30% | 40 | 48% | 127 | 2.2 | 913 | 4.3 | 0.009 |
| Test Example | 20 | 57 | 30% | 34 | 38% | 188 | 3.3 | 1734 | 11.1 | 0.004 |
| Test Example | 21 | 61 | 25% | 31 | 32% | 159 | 2.6 | 2019 | 11.5 | 003 |
| Test Example | 22 | 49 | 40% | 37 | 43% | 150 | 3.1 | 2281 | 15 | 0.06 |
| Test Example | 23 | 57 | 28% | 33 | 45% | 159 | 2.8 | 1879 | 14.3 | 0.03 |
| Test Example | 24 | 65 | 21% | 27 | 45% | 163 | 2.5 | 1189 | 13 | 0.0240 |
| Test Example | 25 | 77 | 13% | 17 | 44% | 168 | 22 | 813 | 8.2 | 0.0151 |
| Test Example | 26 | 93 | 2% | 4 | 36% | 174 | 1.9 | 300 | 1.7 | 0 0031 |
| Test Example | 27 | 95 | 1% | 2 | 26% | 174 | 1.8 | 134 | 0.7 | 0.0013 |
| Comparative Example | 28 | 97 | 0% | 1 | 0% | 175 | 1.8 | 23 | 0.1 | 0.0001 |

EP 4 381 950 A1

[Table 7-3]

| Table 7 | | Swollen Composition | | | | | | | | |
|---|---|---|---|---|---|---|---|---|---|---|
| | | Parameters Relating to Gel Filtration Chromatography | | | | Methionol Content [Value $\alpha$] (wet mass basis) | [Value $\alpha$]/ [Value $\beta$] | Parameters Relating to Pores | | |
| | | AUC$_{5.0}$ [Value $\beta$] | | AUC$_{3.5}$ | | | | (Weighted Average Area) [$\mu$ m$^2$] / (Weighted Average Perimeter) [$\mu$m] | Total Area of Pores Having Areas of > 10000 $\mu$m$^2$ | Total Area of Pores with Aspect Ratios of $\geq$ 3.5 and Degree of Circularity Factor of $\geq$ 0.3 during Baking |
| | | Value | Decrease Ratio during Step (iii) | Value | Decrease Ratio during Step (iii) | | | | | |
| | | % | % | % | % | mass ppb | - | - | % | % |
| Test Example | 29 | 51 | 31% | 31 | 39% | 90 | 1.8 | 490 | 6.3 | 0.004 |
| Test Example | 30 | 55 | 26% | 32 | 41% | 120 | 2.2 | 709 | 8.2 | 0.0053 |
| Test Example | 31 | 48 | 35% | 35 | 46% | 148 | 3.1 | 1391 | 9.8 | 0.01 |
| Test Example | 32 | 63 | 19% | 31 | 35% | 162 | 2.6 | 3011 | 17 | 0.02 |
| Test Example | 33 | 51 | 31% | 37 | 49% | 157 | 3.1 | 1732 | 142 | 0.007 |
| Test Example | 34 | 56 | 21% | 37 | 43% | 117 | 2.1 | 1013 | 8.5 | 001 |
| Test Example | 35 | 67 | 11% | 22 | 36% | 105 | 1.6 | 2499 | 13.8 | 0.04 |
| Test Example | 36 | 56 | 23% | 34 | 47% | 121 | 22 | 1807 | 11.1 | 0.007 |
| Test Example | 37 | 49 | 40% | 37 | 43% | 101 | 21 | 1031 | 7.1 | 0.03 |
| Test Example | 38 | 56 | 31% | 31 | 32% | 95 | 1.7 | 1530 | 11 | 0.007 |
| Test Example | 39 | 48 | 35% | 28 | 32% | 120 | 2.5 | 1780 | 9 | 0.01 |

| Table 7 | | Swollen Composition | | | | | | | | |
|---|---|---|---|---|---|---|---|---|---|---|
| | | Parameters Relating to Gel Filtration Chromatography | | | | Methionol Content [Value α] (wet mass basis) | [Value α]/ [Value β] | Parameters Relating to Pores | | |
| | | AUC$_{5.0}$ [Value β] | | AUC$_{3.5}$ | | | | (Weighted Average Area) [μm$^2$] / (Weighted Average Perimeter) [μm] | Total Area of Pores Having Areas of > 10000 μm$^2$ | Total Area of Pores with Aspect Ratios of ≥ 3.5 and Degree of Circularity Factor of ≥ 0.3 during Baking |
| | | Value | Decrease Ratio during Step (iii) | Value | Decrease Ratio during Step (iii) | | | | | |
| | | % | % | % | % | mass ppb | - | - | % | % |
| Test Example | 40 | 51 | 28% | 37 | 43% | 149 | 2.9 | 1701 | 13.5 | 0.03 |

[Sensory evaluation of swollen compositions]

The swollen compositions of the Test Examples and Comparative Examples were subjected to sensory evaluation by the following procedure. The sensory inspectors were selected from those who achieved excellent performance in the identification training described in A to C below, had experience in product development, had a lot of knowledge about food qualities such as taste and texture, and were capable of performing absolute evaluation for each sensory evaluation item.

A) Taste discrimination test: a total of seven samples were prepared, including five aqueous solutions prepared for five tastes (sweetness: taste of sugar; sourness: taste of tartaric acid; umami: taste of monosodium glutamate; saltiness; taste of sodium chloride; and bitterness: taste of caffeine), each with a concentration close to the threshold value of each component, and two sample solutions with distilled water, and the trainees were instructed to accurately identify the sample of each taste.

B) Concentration difference discrimination test: a series of five solutions with slightly different concentrations was prepared for each of salt and acetic acid, and the trainees were instructed to accurately distinguish the solutions of different concentrations for each component.

C) Three-point identification test to accurately identify from three soy sauce samples, two from Manufacturer A and one from Manufacturer B, the soy sauce sample from Manufacturer B.

In each of the evaluation items, an objective sensory examination was carried out by 10 inspectors, after standard samples were evaluated in advance by all the inspectors, and each score of the evaluation criteria was standardized. Specifically, ten trained sensory inspectors observed each composition during the production process and ingested each swollen composition, and evaluated it in terms of "Powdery odor control," "Aroma retention," and "Overall evaluation," on the criteria explained below. The arithmetic mean of the 10 sensory inspectors' scores was calculated and rounded off to one decimal place to give the final score. In addition, the obtained samples were stored at 40°C for 10 days to reproduce the degree of deterioration equivalent to 40 days at 20°C based on a known report (Trends in the industry: The concept of "shelf-life extension" technology, JAS Information, 503, 2-5 (2011)), and the volatility of aroma during storage at ordinary temperature was evaluated by sensory testing.

*Evaluation criteria for "Powdery odor control":

Control of the powdery odor of the pulse- and/or cereal-derived powder for each composition after heating treatment was evaluated on the following one-to-five scale.

5: Very favorable, with the powdery odor of the pulse- and/or cereal-derived powder completely suppressed.
4: Favorable, with the powdery odor of the pulse- and/or cereal-derived powder generally suppressed.
3: Rather favorable, although the powdery odor of the pulse- and/or cereal-derived powder is lightly felt.
2: Rather unfavorable, with the powdery odor of the pulse- and/or cereal-derived powder not well suppressed.
1: Unfavorable, with the powdery odor of the pulse- and/or cereal-derived powder hardly suppressed.

*Evaluation criteria for "Aroma retention":

Retention of favorable aroma of the pulse- and/or cereal-derived powder for each composition after heating treatment was evaluated on the following one-to-five scale.

5: Very favorable, with the favorable aroma of the pulse- and/or cereal-derived powder strongly retained.
4: Favorable, with the favorable aroma of the pulse- and/or cereal-derived powder well retained.
3: Rather favorable, with the favorable aroma of the pulse- and/or cereal-derived powder moderately retained.
2: Rather unfavorable, with the favorable aroma of the pulse- and/or cereal-derived powder not well retained.
1: Unfavorable, with the favorable aroma of the pulse- and/or cereal-derived powder hardly retained.

*Evaluation criteria for "Overall evaluation":

The balance of the aroma of the pulse- and/or cereal-derived powder of each composition was evaluated on the following one-to-five scale. The comments on "Methionol odor" and "Swelling" were also added.

5: Excellent quality, with very good balance between suppression of powdery odor and retention of favorable aroma of the pulse- and/or cereal-derived powder.

4: Good quality, with good balance between suppression of powdery odor and retention of favorable aroma of the pulse- and/or cereal-derived powder.

3: Slightly good quality, with slightly good balance between suppression of powdery odor and retention of favorable aroma of the pulse- and/or cereal-derived powder.

2: Slightly inferior quality, with slightly bad balance between suppression of powdery odor and retention of favorable aroma of the pulse- and/or cereal-derived powder.

1: Inferior quality, with bad balance between suppression of powdery odor and retention of favorable aroma of the pulse- and/or cereal-derived powder.

The results of the sensory evaluation of the swollen compositions of the Test Examples and Comparative Examples are shown in Table 8 below. Test Example 18 exhibited slightly poor swelling, and Test Example 19 also exhibited slightly poor, but acceptable, swelling.

[Table 8]

| Table 8 | | Sensory Evaluation | | | |
|---|---|---|---|---|---|
| | | Powdery Odor | Retention of Aroma | Overall Evaluation (balance) | Comments |
| Comparative Example | 1 | 1 | 1 | 1 | |
| Test Example | 2 | 3 | 5 | 3 | |
| Test Example | 3 | 5 | 5 | 5 | |
| Test Example | 4 | 5 | 5 | 5 | |
| Test Example | 5 | 5 | 5 | 5 | |
| Test Example | 6 | 5 | 5 | 5 | |
| Test Example | 7 | 5 | 5 | 5 | |
| Test Example | 8 | 5 | 5 | 5 | |
| Test Example | 9 | 5 | 5 | 5 | Methionol odor was prominent, but acceptable. |
| Test Example | 10 | 5 | 5 | 5 | |
| Test Example | 11 | 5 | 5 | 5 | |
| Test Example | 12 | 5 | 5 | 5 | |
| Test Example | 13 | 5 | 5 | 5 | |
| Test Example | 14 | 5 | 4 | 4 | |
| Comparative Example | 15 | 1 | 1 | 1 | |
| Test Example | 16 | 5 | 5 | 5 | |
| Test Example | 17 | 5 | 4 | 4 | |
| Test Example | 18 | 5 | 4 | 4 | |
| Test Example | 19 | 5 | 4 | 4 | |
| Test Example | 20 | 5 | 5 | 5 | |
| Test Example | 21 | 5 | 5 | 5 | |
| Test Example | 22 | 5 | 5 | 5 | |
| Test Example | 23 | 5 | 5 | 5 | |
| Test Example | 24 | 5 | 5 | 5 | |
| Test Example | 25 | 5 | 4 | 4 | Slightly poor swelling, but acceptable, |

(continued)

| Table 8 | | Sensory Evaluation | | | |
|---|---|---|---|---|---|
| | | Powdery Odor | Retention of Aroma | Overall Evaluation (balance) | Comments |
| Test Example | 26 | 5 | 3 | 3 | Slightly poor swelling. |
| Test Example | 27 | 4 | 3 | 4 | Poor swelling. |
| Comparative Example | 28 | 3 | 1 | 1 | Poor swelling. |
| Test Example | 29 | 5 | 3 | 3 | |
| Test Example | 30 | 5 | 5 | 5 | |
| Test Example | 31 | 5 | 5 | 5 | |
| Test Example | 32 | 5 | 5 | 5 | |
| Test Example | 33 | 5 | 5 | 5 | |
| Test Example | 34 | 5 | 5 | 5 | |
| Test Example | 35 | 5 | 5 | 5 | |
| Test Example | 36 | 5 | 5 | 5 | |
| Test Example | 37 | 5 | 5 | 5 | |
| Test Example | 38 | 5 | 5 | 5 | |
| Test Example | 39 | 5 | 5 | 5 | |
| Test Example | 40 | 5 | 5 | 5 | |

The reasons for the good results in each Test Example can be deemed as follows: the formation of starch network creates pores with specific shapes, which facilitates the retention of methionol. In addition, it is thought that of the amylose contained in starch (which is presumably contained in a fraction in an interval with molecular weight logarithms of 3.5 or more but less than 6.5), the percentage of amylose with relatively high molecular weights ($AUC_{5.0}$) is below a predetermined value, facilitating volatilization of specific aroma ingredients retained in starch network.

**INDUSTRIAL APPLICABILITY**

The present invention provides an excellent swollen composition containing starch derived from pulse and/or cereal with suppressed powdery odor originating from pulse or cereal powder while retaining the good aroma of such powder, and is of great use value in the field of food products.

**Claims**

1.  A swollen composition comprising a starch derived from pulse and/or cereal and satisfying requirements (1) to (5) below.

    (1) The composition has a starch content of 3 mass % or more in terms of wet mass basis.
    (2) The composition has a dry mass basis moisture content of less than 150 mass %.
    (3) The composition has a dietary fiber content of 3.0 mass % or more in terms of wet mass basis.
    (4) When at least one frozen section of the composition A obtained under [Condition A] below is observed, requirement (a) below is satisfied.

    (a) When pores with an area of 10000 $\mu m^2$ or more in a cross-section image of the composition is observed, the ratio of a weighted average area of the pores to a weighted average perimeter of the pores {(weighted average area)/(weighted average perimeter)} is 100 or more.
    [Condition A] The composition is frozen at -25°C and cut along a cut plane A to prepare a frozen section of the composition A.

(5) The ratio of Value $\alpha$ to Value $\beta$ {(Value $\alpha$)/(Value $\beta$)} as defined below is 0.3 or more.

> Value $\alpha$: The wet mass basis content of methionol in the composition (ppb).
> Value $\beta$: When the composition is subjected to [Procedure b] below and the resulting product is subjected to measurement under [Condition B] below to obtain a molecular weight distribution curve in an interval with molecular weight logarithms of 3.5 or more but less than 6.5 (hereinafter referred to as "$MWDC_{3.5-6.5}$"), the ratio of an area under the curve in an interval with molecular weight logarithms of 5.0 or more but less than 6.5 to the area under the entire curve (hereinafter referred to as "$AUC_{5.0}$").
> [Procedure b] The composition is crushed, and an ethanol-insoluble and dimethyl sulfoxide-soluble component is obtained.
> [Condition B] The treated product from the [Procedure b] above is dissolved into 1M aqueous solution of sodium hydroxide at a concentration of 0.30 mass % and allowed to stand at 37 °C for 30 minutes, then combined with an equal volume of water and an equal volume of eluent and subjected to filtration with a 5-$\mu$m filter, and 5mL of the filtrate is then subjected to gel filtration chromatography to thereby obtain a molecular weight distribution.

2. The swollen composition according to claim 1, wherein when the frozen section of the composition A is observed, the ratio of the total area of pores with an area more than 10000 $\mu m^2$ to the area of a cross-section image of the composition is more than 1.0 %.

3. The swollen composition according to claim 1 or 2, wherein when the frozen section of the composition A is observed, the ratio of the total area of pores with an aspect ratio of 3.5 or more and a degree of circularity factor of 0.3 or more to the area of a cross-section image of the composition is more than 0.002 %.

4. The swollen composition according to any one of claims 1 to 3, wherein the frozen section of the composition A includes frozen section of the composition A1, which is obtained along cut plane A1, wherein cup plane A1 is orthogonal to a longitudinal axis of the composition.

5. The swollen composition according to any one of claims 1 to 4, wherein the frozen section of the composition A includes frozen section of the composition A1, which is obtained along cut plane A1, and frozen section of the composition A2, which is obtained along cut plane A2, wherein cup plane A1 is orthogonal to a longitudinal axis of the composition and cup plane A2 is parallel to the longitudinal axis of the composition.

6. The swollen composition according to any one of claims 1 to 5, wherein in the molecular weight distribution curve ($MWDC_{3.5-6.5}$), the ratio of an area under the curve in an interval with molecular weight logarithms of 5.0 or more but less than 6.5 to the area under the entire curve ($AUC_{5.0}$) is 1 % or more but 70 % or less.

7. The swollen composition according to any one of claims 1 to 6, wherein methionol content is 0.01 ppb or more but 50000 ppb or less in terms of wet mass basis.

8. The swollen composition according to any one of claims 1 to 7, wherein when 6% suspension of the swollen composition is observed, the number of starch grain structures is 300/mm$^2$ or less.

9. The swollen composition according to any one of claims 1 to 8, wherein the pulse is one or more species of pulse selected from Pisum, Phaseolus, Cajanus, Vigna, Vicia, Cicer, Glycine and Lens species.

10. The swollen composition according to any one of claims 1 to 9, wherein the pulse is matured pulse.

11. The swollen composition according to any one of claims 1 to 10, wherein the cereal is one or more species of cereal selected from awa (foxtail millet), hie (Japanese millet), kibi (common millet), sorghum, rye, oat, hatomugi (job's tear), corn, buckwheat, amaranthus, and quinoa.

12. The swollen composition according to any one of claims 1 to 11, wherein the ratio of the starch content contained in pulse and/or cereal to the total starch content of the swollen composition is 10 mass % or more.

13. The swollen composition according to any one of claims 1 to 12, which is substantially free of gluten.

14. The swollen composition according to any one of claims 1 to 13, comprising dietary fiber-localized part of pulse and/or cereal.

15. The swollen composition according to claim 14, comprising both edible part of pulse and/or cereal and dietary fiber-localized part of pulse and/or cereal.

16. The swollen composition according to any one of claims 1 to 15, wherein the total content of edible part of pulse and/or cereal and dietary fiber-localized part of pulse and/or cereal is 10 mass % or more in terms of wet mass basis.

17. The swollen composition according to any one of claims 14 to 16, wherein the dietary fiber-localized part of pulse and/or cereal contains seed skin of pulse and/or cereal.

18. The swollen composition according to any one of claims 14 to 17, wherein the dietary fiber-localized part of pulse and/or cereal contains dietary fiber-localized part of psyllium.

19. The swollen composition according to any one of claims 1 to 18, comprising seed skin of psyllium as dietary fiber-localized part of edible plant.

20. The swollen composition according to any one of claims 14 to 19, wherein the dietary fiber-localized part of pulse and/or cereal is dietary fiber-localized part having undergone enzyme treatment.

21. The swollen composition according to claim 20, wherein the enzyme treatment is cellulase, xylanase, or pectinase treatment.

22. A method for producing a swollen composition, comprising the steps of:

(i) preparing a dough composition containing starch derived from pulse and/or cereal and having

(1) a starch content of 3 mass % or more in terms of wet mass basis,
(2) a dry mass basis moisture content of more than 50 mass %,
(3) a dietary fiber content of 3.0 mass % or more in terms of wet mass basis, and
(4) a methionol content of 0.1 ppb or more in terms of wet mass basis; and

(ii) swelling the dough composition from step (i) via heating treatment, wherein during the heating treatment, the [Value $\alpha$] / [Value $\beta$] ratio of the composition increases by 5 mass % or more, and the dry mass basis moisture content of the composition decreases by 5 mass % or more.

23. The method according to claim 22, wherein step (ii) includes:

(ii-a) yeast-fermenting the dough composition from step (i); and
(ii-b) subjecting the yeast-fermented composition from step (ii-a) to heating treatment.

24. The method according to claim 22, wherein step (ii) includes:

(ii-2a) mixing the dough composition from step (i) with air bubbles and/or an expansion agent; and
(ii-2b) subjecting the mixed composition from step (ii-2a) to heating treatment.

25. The method according to any one of claims 22 to 24, wherein step (i) and/or step (ii) includes carrying out enzyme treatment.

26. The method according to any one of claims 22 to 25, wherein during the heating treatment of step (ii), the AUC5.0 decreases by 5 % or more.

27. The method according to any one of claims 22 to 26, wherein during the heating treatment of step (ii), the AUC3.5 increases by 5 % or more.

28. The method according to any one of claims 22 to 27, wherein during the heating treatment of step (ii), when pores with an area of 10000 $\mu m^2$ or more in the frozen section of the composition A are observed, the ratio of the area weighted average area to the weighted average perimeter {(weighted average area)/(weighted average perimeter)} increases by 5 % or more.

29. The method according to any one of claims 22 to 28, wherein when the frozen section of the composition A is observed, the ratio of the total area of pores with an aspect ratio of 3.5 or more and a degree of circularity factor of 0.3 or more to the area of a cross-section image of the composition increases by 50 % or more during the heating treatment of step (ii).

30. The method according to any one of claims 22 to 29, wherein when the dough composition from step (i) is measured according to <Method c>, the ratio of [Value δ] / [Value γ] is 0.1 or more.

    [Value γ]: A breakdown viscosity (cP) during temperature increasing step (a1).
    [Value δ]: A peak viscosity (cP) during temperature decreasing step (a2).

    <Method c> As a measurement sample, 32 g of 22 mass % aqueous slurry of a crushed product of the composition is subjected to measurement using a rapid viscoanalyzer with carrying out steps (a1) and (a2) below.

    (a1) Temperature increasing step, in which the temperature of the measurement sample is increased from 50 °C to 95 °C at an increasing rate of 6 °C/min and then maintained for 3 minutes.
    (a2) Temperature decreasing step, in which the temperature of the measurement sample is decreased from 95 °C to 50 °C at a decreasing rate of 6 °C/min.

31. The method according to any one of claims 22 to 30, wherein when 6% suspension of the dough composition from step (i) is observed, the number of starch grain structures is 10/mm$^2$ or more.

32. The method according to any one of claims 22 to 31, wherein the degree of gelatinization of the dough composition from step (i) is less than 70 mass %.

33. The method according to any one of claims 22 to 32, wherein the sodium chloride content of the dough composition from step (i) is 5 mass % or less in terms of wet mass basis.

34. The method according to any one of claims 22 to 33, wherein the alcohol content of the dough composition from step (i) is 10 mass % or less in terms of wet mass basis.

35. The method according to any one of claims 22 to 34, wherein the dough composition from step (i) is substantially free of gluten.

36. The method according to any one of claims 22 to 35, wherein the dough composition from step (i) comprises dietary fiber-localized part of pulse and/or cereal.

37. The method according to claim 36, wherein the dough composition from step (i) comprises both edible part of pulse and/or cereal and dietary fiber-localized part of pulse and/or cereal.

38. The method according to any one of claims 22 to 37, wherein the total content of edible part of pulse and/or cereal and dietary fiber-localized part of pulse and/or cereal in the dough composition from step (i) is 10 mass % or more in terms of wet mass basis.

39. The method according to any one of claims 22 to 38, wherein the dietary fiber-localized part of pulse and/or cereal contains seed skin of pulse and/or cereal.

40. The method according to any one of claims 22 to 39, wherein the dietary fiber-localized part of pulse and/or cereal contains dietary fiber-localized part of psyllium.

41. The method according to any one of claims 36 to 40, wherein the dietary fiber-localized part of edible plant contains seed skin of psyllium.

42. The method according to any one of claims 36 to 41, wherein the dietary fiber-localized part of pulse and/or cereal is dietary fiber-localized part having undergone enzyme treatment.

**43.** The method according to claim 42, wherein enzyme treatment is cellulase, xylanase, or pectinase treatment.

**44.** The method according to any one of claims 22 to 43, wherein step (i) and/or step (ii) include(s) adding to the composition pulse and/or cereal with a PDI (protein dispersibility index) value of less than 55 mass %.

**45.** The method according to any one of claims 22 to 44, further comprising:
(iii) subjecting the dough composition from step (ii) to treatment under reduced pressure.

**46.** A swollen composition produced by a method according to any one of claims 22 to 45.

**47.** A dough composition for use in step (i) of the method according to any one of claims 22 to 45, containing starch derived from pulse and/or cereal and satisfying requirements (1) to (4) below.

(1) The dough composition has a starch content of 3 mass % or more in terms of wet mass basis.
(2) The dough composition has a dry mass basis moisture content of more than 60 mass %.
(3) The dough composition has a dietary fiber content of 3.0 mass % or more in terms of wet mass basis.
(4) The dough composition has a methionol content of 0.1 ppb or more in terms of wet mass basis.

**48.** A food crushed product for use in the preparation of the dough composition in step (i) of the method according to any one of claims 22 to 45, containing starch derived from pulse and/or cereal and satisfying requirements (1) to (7) below.

(1) The food crushed product has a starch content of 3 mass % or more in terms of wet mass basis.
(2) The food crushed product has a dry mass basis moisture content of less than 25 mass %.
(3) The food crushed product has a dietary fiber content of 3.0 mass % or more in terms of wet mass basis.
(4) The food crushed product has a degree of gelatinization of starch of less than 50 mass %.
(5) When the food crushed product is subjected to ultrasonication, the specific surface area per unit volume is $0.10 m^2/mL$ or more.
(6) When the food crushed product is measured according to <Method c>, the ratio of [Value $\delta$] / [Value $\gamma$] of 0.1 more.

[Value $\gamma$]: A breakdown viscosity (cP) during temperature increasing step (a1).
[Value $\delta$]: A peak viscosity (cP) during temperature decreasing step (a2).

<Method c> As a measurement sample, 32 g of 22 mass % aqueous slurry of a crushed product of the composition is subjected to measurement using a rapid viscoanalyzer with carrying out steps (a1) and (a2) below.

(a1) Temperature increasing step, in which the temperature of the measurement sample is increased from 50 °C to 95 °C at an increasing rate of 6 °C/min and then maintained for 3 minutes.
(a2) Temperature decreasing step, in which the temperature of the measurement sample is decreased from 95 °C to 50 °C at a decreasing rate of 6 °C/min.

(7) When 6% suspension of the food crushed product is observed, the number of starch grain structures is $10/mm^2$ or more.

**49.** A method for improving aroma volatility of a swollen compositions during storage at ordinary temperature, comprising:

(i) preparing a dough composition containing starch derived from pulse and/or cereal and having

(1) a starch content of 3 mass % or more in terms of wet mass basis,
(2) a dry mass basis moisture content of more than 50 mass %,
(3) a dietary fiber content of 3.0 mass % or more in terms of wet mass basis, and
(4) a methionol content of 0.1 ppb or more in terms of wet mass basis; and

(ii) swelling the dough composition from step (i) via heating treatment, wherein during the heating treatment, the [Value $\alpha$] / [Value $\beta$] ratio of the composition increases by 5 mass % or more, and the dry mass basis moisture content of the composition decreases by 5 mass % or more.

**50.** A swollen composition that satisfies requirements (4) and (5) below and can be stored at ordinary temperature for a week or more.

(4) When at least one frozen section of the composition A obtained under [Condition A] below is observed, requirement (a) below is satisfied.

(a) When pores with an area of 10000 $\mu$m2 or more in a cross-section image of the composition is observed, the ratio of a weighted average area of the pores to a weighted average perimeter of the pores {(weighted average area)/(weighted average perimeter)} is 100 or more.
[Condition A] The composition is frozen at -25°C and cut along a cut plane A to prepare a frozen section of the composition A.

(5) The ratio of Value $\alpha$ to Value $\beta$ {(Value $\alpha$)/(Value $\beta$)} as defined below is 0.3 or more.

Value $\alpha$: The wet mass basis content of methionol in the composition (ppb)
Value $\beta$: When the composition is subjected to [Procedure b] below and the resulting product is subjected to measurement under [Condition B] below to obtain a molecular weight distribution curve in an interval with molecular weight logarithms of 3.5 or more but less than 6.5 (hereinafter referred to as "MWDC$_{3.5\text{-}6.5}$"), the ratio of an area under the curve in an interval with molecular weight logarithms of 5.0 or more but less than 6.5 to the area under the entire curve (hereinafter referred to as "AUC$_{5.0}$").
[Procedure b] The composition is crushed, and an ethanol-insoluble and dimethyl sulfoxide-soluble component is obtained.
[Condition B] The treated product from the [Procedure b] above is dissolved into 1M aqueous solution of sodium hydroxide at a concentration of 0.30 mass % and allowed to stand at 37 °C for 30 minutes, then combined with an equal volume of water and an equal volume of eluent and subjected to filtration with a 5-$\mu$m filter, and 5mL of the filtrate is then subjected to gel filtration chromatography to thereby obtain a molecular weight distribution.

## INTERNATIONAL SEARCH REPORT

| International application No. |
|---|
| **PCT/JP2023/024026** |

| A. | CLASSIFICATION OF SUBJECT MATTER |
|---|---|

*A21D 2/36*(2006.01)i; *A21D 13/00*(2017.01)i; *A23G 3/00*(2006.01)i; *A23L 7/161*(2016.01)i
FI: A21D2/36; A21D13/00; A23L7/161; A23G3/00

According to International Patent Classification (IPC) or to both national classification and IPC

| B. | FIELDS SEARCHED |
|---|---|

Minimum documentation searched (classification system followed by classification symbols)

A21D2/36; A21D13/00; A23G3/00; A23L7/161

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 62-179359 A (MORINAGA & CO., LTD.) 06 August 1987 (1987-08-06) claims, examples | 1-50 |
| A | JP 2021-10381 A (MIZKAN HOLDINGS CO., LTD.) 04 February 2021 (2021-02-04) claims, examples | 1-50 |
| A | JP 2021-83319 A (MTEX YUGEN KAISHA) 03 June 2021 (2021-06-03) claims, examples | 1-50 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 August 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/024026**

| Patent document cited in search report | | | Publication date (day/month/year) | Patent family member(s) | | | Publication date (day/month/year) |
|---|---|---|---|---|---|---|---|
| JP | 62-179359 | A | 06 August 1987 | (Family: none) | | | |
| JP | 2021-10381 | A | 04 February 2021 | US | 2021/0169108 | A1 | |
| | | | | claims, examples | | | |
| | | | | EP | 3821719 | A1 | |
| | | | | KR | 10-2021-0003935 | A | |
| | | | | CN | 112351691 | A | |
| | | | | TW | 202045032 | A | |
| JP | 2021-83319 | A | 03 June 2021 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06030687 A
- WO 2014208536 A
- US 20070248726 A
- CN 1937926 A
- CN 1681392 A
- CN 102796717 A

**Non-patent literature cited in the description**

- Japan Standard Tables for Food Composition. 2015
- Pocket Book of Food Additives Labeling. 2011
- *CHEMICAL ABSTRACTS,* 110-54-3
- *CHEMICAL ABSTRACTS,* 67-68-5
- *CHEMICAL ABSTRACTS,* 505-10-2
- *CHEMICAL ABSTRACTS,* 5271-38-5
- Trends in the industry: The concept of ''shelf-life extension'' technology. *JAS Information,* 2011, vol. 503, 2-5